(19) 

Europäisches Patentamt
European Patent Office
Office européen des brevets

(11) **EP 4 331 388 A1**

(12) **EUROPEAN PATENT APPLICATION**
published in accordance with Art. 153(4) EPC

(43) Date of publication:
**06.03.2024 Bulletin 2024/10**

(21) Application number: **22795779.2**

(22) Date of filing: **26.04.2022**

(51) International Patent Classification (IPC):
*A24B 15/14* (2006.01)          *A24B 15/16* (2020.01)
*A24D 1/20* (2020.01)          *A24F 40/20* (2020.01)
*A24F 40/40* (2020.01)          *A24B 3/14* (2006.01)

(52) Cooperative Patent Classification (CPC):
**A24B 3/14; A24B 15/14; A24B 15/16; A24D 1/20;
A24F 40/20; A24F 40/40**

(86) International application number:
**PCT/JP2022/018858**

(87) International publication number:
**WO 2022/230866 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.04.2021   JP 2021075206
13.05.2021   PCT/JP2021/018192
03.09.2021   JP 2021143801
18.10.2021   JP 2021170059

(71) Applicant: **Japan Tobacco, Inc.
Tokyo, 105-6927 (JP)**

(72) Inventors:
• **KOIDE, Akihiro**
  **Tokyo 130-8603 (JP)**
• **UCHII, Kimitaka**
  **Tokyo 130-8603 (JP)**
• **YAMADA, Manabu**
  **Tokyo 130-8603 (JP)**
• **SHIBUICHI, Hiroshi**
  **Tokyo 130-8603 (JP)**
• **MOTODAMARI Tetsuya**
  **Tokyo 130-8603 (JP)**
• **SAKURAI, Toru**
  **Tokyo 130-8603 (JP)**

(74) Representative: **Hoffmann Eitle
Patent- und Rechtsanwälte PartmbB
Arabellastraße 30
81925 München (DE)**

(54) **TOBACCO SHEET FOR NON-COMBUSTION HEATING TYPE FLAVOR INHALERS AND
METHOD FOR PRODUCING SAME, NON-COMBUSTION HEATING TYPE FLAVOR INHALER,
AND NON-COMBUSTION HEATING TYPE FLAVOR INHALATION SYSTEM**

(57)    Provided is a tobacco sheet for non-combustion heating type flavor inhalers, which has high bulkiness. The tobacco sheet for non-combustion heating type flavor inhalers contains a tobacco raw material, in which the cross-sectional surface of the tobacco sheet when observed in the direction of thickness of the tobacco sheet has a corrugated shape.

Fig. 1

EP 4 331 388 A1

**Description**

TECHNICAL FIELD

The present invention relates to a tobacco sheet for a heat-not-burn flavor inhaler, a manufacturing method therefor, a heat-not-burn flavor inhaler, and a heat-not-burn flavor inhaling system.

BACKGROUND ART

A heat-burn flavor inhaler (cigarette) obtains a flavor by burning a tobacco filler including a leaf tobacco or a tobacco sheet. For example, PTL 1 describes a tobacco sheet used for a heat-burn flavor inhaler. Instead of the heat-burn flavor inhaler, a heat-not-burn flavor inhaler that obtains a flavor by heating a flavor source, such as a tobacco sheet, in place of burning the flavor source is suggested. The heating temperature of the heat-not-burn flavor inhaler is lower than the burning temperature of the heat-burn flavor inhaler and is, for example, lower than or equal to about 400°C. In this way, since the heating temperature of the heat-not-burn flavor inhaler is low, an aerosol generator can be added to the flavor source in the heat-not-burn flavor inhaler from the viewpoint of increasing the amount of smoke. The aerosol generator vaporizes to generate an aerosol. The aerosol is supplied to a user with a flavor component, such as a tobacco component, so the user is able to obtain a sufficient flavor.

The heat-not-burn flavor inhaler can include, for example, a tobacco-containing segment filled with a tobacco sheet or the like, a cooling segment, and a filter segment. The axial length of the tobacco-containing segment of the heat-not-burn flavor inhaler is commonly shorter than the axial length of a tobacco-containing segment of the heat-burn flavor inhaler in relation to a heater. Therefore, in the heat-not-burn flavor inhaler, a large amount of tobacco sheet fills a short section of the tobacco-containing segment in order to ensure the amount of aerosol generated during heating. To fill the short section with a large amount of tobacco sheet, commonly, a tobacco sheet having a low bulkiness, that is, a high density, is used in the heat-not-burn flavor inhaler. A bulkiness is a value that indicates a volume obtained when a predetermined mass of shreds of tobacco sheet is compressed at a certain pressure for a certain period of time.

CITATION LIST

PATENT LITERATURE

PTL 1: Japanese Examined Patent Application Publication No. 60-045914

SUMMARY OF INVENTION

TECHNICAL PROBLEM

However, the inventors found that, when a heating system, a heating capacity of a heater, and generation of an aerosol were considered, a total heat capacity of the tobacco-containing segment increased if a low-bulkiness (high-density) tobacco sheet was used and, therefore, the tobacco sheet filling the tobacco-containing segment did not sufficiently contribute to generation of an aerosol depending on a heating method and the capacity of the heater. To solve the above problem, it is conceivable to reduce the total heat capacity of the tobacco-containing segment.

The inventors studied (1) reducing the specific heat of tobacco raw material contained in a tobacco sheet and (2) using a high-bulkiness (low-density) tobacco sheet, to reduce the total heat capacity of the tobacco-containing segment. However, it is difficult to reduce the specific heat of tobacco raw material itself for (1), so it was presumably effective to reduce the total heat capacity of the tobacco-containing segment by (2). Therefore, it is desired to develop a high-bulkiness (low-density) tobacco sheet suitably used for a heat-not-burn flavor inhaler.

It is an object of the present invention to provide a high-bulkiness tobacco sheet for a heat-not-burn flavor inhaler, a heat-not-burn flavor inhaler including the tobacco sheet, and a heat-not-burn flavor inhaling system.

SOLUTION TO PROBLEM

The present invention includes the following embodiments.

[1] A tobacco sheet for a heat-not-burn flavor inhaler is a tobacco sheet for a heat-not-burn flavor inhaler, the tobacco sheet containing a tobacco raw material, the tobacco sheet having a corrugated shape in a cross section taken in a thickness direction of the tobacco sheet.

[2] In the tobacco sheet for a heat-not-burn flavor inhaler according to [1], the tobacco sheet further contains an aerosol generator.

[3] In the tobacco sheet for a heat-not-burn flavor inhaler according to [2], the aerosol generator is at least one selected from the group consisting of glycerin, propylene glycol, and 1,3-butanediol.

[4] In the tobacco sheet for a heat-not-burn flavor inhaler according to [2] or [3], a percentage of the aerosol generator contained in 100mass% of the tobacco sheet ranges from 4mass% to 50mass%.

[5] In the tobacco sheet for a heat-not-burn flavor inhaler according to any one of [1] to [4], the tobacco sheet further contains a first forming agent and a second forming agent.

[6] In the tobacco sheet for a heat-not-burn flavor inhaler according to [5], the first forming agent is at least one selected from the group consisting of polysaccharide, protein, and synthetic polymer.

[7] In the tobacco sheet for a heat-not-burn flavor inhaler according to [5] or [6], the second forming agent is at least one selected from the group consisting of polysaccharide, protein, and synthetic polymer, different from the first forming agent.

[8] In the tobacco sheet for a heat-not-burn flavor inhaler according to any one of [5] to [7], a percentage of the first forming agent contained in 100mass% of the tobacco sheet ranges from 0.1mass% to 15mass%.

[9] In the tobacco sheet for a heat-not-burn flavor inhaler according to any one of [5] to [8], a percentage of the second forming agent contained in 100mass% of the tobacco sheet ranges from 0.1mass% to 15mass%.

[10] A heat-not-burn flavor inhaler includes a tobacco-containing segment including the tobacco sheet for a heat-not-burn flavor inhaler according to any one of [1] to [9].

[11] In the heat-not-burn flavor inhaler according to [10], the heat-not-burn flavor inhaler further includes a mouthpiece segment,

> the tobacco-containing segment includes a first segment including an aerosol generator and a second segment including the tobacco sheet for a heat-not-burn flavor inhaler, and
> the mouthpiece segment includes a cooling segment and a filter segment.

[12] In the heat-not-burn flavor inhaler according to [11], the first segment includes a cylindrical wrapper and a nonwoven fabric made up of plant fibers filling the wrapper, and the nonwoven fabric contains the aerosol generator.

[13] In the heat-not-burn flavor inhaler according to [10], the heat-not-burn flavor inhaler has a rod shape and further includes a mouthpiece segment,

> the mouthpiece segment includes a filter segment having a filter element, and
> the filter element is made of fibers of which a circumferential cross section has a Y-shape and a single fiber denier is greater than or equal to eight and less than or equal to 12.

[14] In the heat-not-burn flavor inhaler according to [13], a density of the filter element is greater than or equal to 0.09 g/cm$^3$ and less than or equal to 0.14 g/cm$^3$.

[15] In the heat-not-burn flavor inhaler according to [10], the heat-not-burn flavor inhaler further includes

> an adjacent member adjacent to the tobacco-containing segment; and
> a roll wrapping material that rolls to wrap the tobacco-containing segment or a roll wrapping material that rolls to wrap the tobacco-containing segment and the adjacent member,
> the roll wrapping material has a high heat transfer portion having a higher heat conductivity than a wrapped member with which the roll wrapping material contacts, and
> the high heat transfer portion rolls to wrap an area near a downstream end of the tobacco-containing segment.

[16] In the heat-not-burn flavor inhaler according to [15], the high heat transfer portion rolls to wrap from an area near the downstream end of the tobacco-containing segment to an area near an upstream end of the adjacent member.

[17] A heat-not-burn flavor inhaling system includes

> the heat-not-burn flavor inhaler according to any one of [10] to [16], and
> a heating device that heats the tobacco-containing segment.

[18] A manufacturing method for the tobacco sheet for a heat-not-burn flavor inhaler according to any one of [1] to [9] includes

> a step of preparing a mixture including a tobacco raw material, an aerosol generator, a first forming agent, and a second forming agent;

a step of forming a rolled molding product by rolling the mixture; and
a step of cutting the rolled molding product into strips by pressing a rotary roll blade against the rolled molding product and imparting the rolled molding product with a corrugated shape.

ADVANTAGEOUS EFFECTS OF INVENTION

According to the present invention, it is possible to provide a high-bulkiness tobacco sheet for a heat-not-burn flavor inhaler, a heat-not-burn flavor inhaler including the tobacco sheet, and a heat-not-burn flavor inhaling system.

BRIEF DESCRIPTION OF DRAWINGS

[Fig. 1] Fig. 1 is a sectional view in a thickness direction, illustrating an example of a tobacco sheet according to a present embodiment.
[Fig. 2] Fig. 2 is a sectional view illustrating an example of a heat-not-burn flavor inhaler according to the present embodiment.
[Fig. 3] Fig. 3 is an example of a heat-not-burn flavor inhaling system according to the present embodiment and is a sectional view illustrating (a) a state before the heat-not-burn flavor inhaler is inserted in a heating device, and (b) a state where the heat-not-burn flavor inhaler is inserted in the heating device and heated.
[Fig. 4] Fig. 4 is a schematic diagram illustrating examples of the heat-not-burn flavor inhaler according to the present embodiment.
[Fig. 5] Fig. 5 is a schematic diagram illustrating an example of a method of forming a first segment according to the present embodiment.
[Fig. 6] Fig. 6 is a schematic diagram illustrating an example of a method of bonding a wrapper of the first segment according to the present embodiment.
[Fig. 7] Fig. 7 is a schematic diagram illustrating other embodiments of a tobacco-containing segment according to the present embodiment.
[Fig. 8] Fig. 8 is a schematic diagram illustrating an example of the heat-not-burn flavor inhaling system according to the present embodiment.
[Fig. 9] Fig. 9 is a schematic diagram illustrating other examples of the configuration of a heater in the heat-not-burn flavor inhaling system according to the present embodiment.
[Fig. 10] Fig. 10 is a schematic diagram of the heat-not-burn flavor inhaler according to the present embodiment.
[Fig. 11] Fig. 11 is a schematic diagram of the heat-not-burn flavor inhaling system according to the present embodiment.
[Fig. 12] Fig. 12 is a schematic diagram of the heat-not-burn flavor inhaling system according to the present embodiment.
[Fig. 13] Fig. 13 is a diagram for illustrating an inhalation port end-side end of a region where a cooling segment and the heating device contact.
[Fig. 14] Fig. 14 is a diagram for illustrating an inhalation port end-side end of a region where the cooling segment and the heating device contact.
[Fig. 15] Fig. 15 shows graphs representing the delivery amounts of nicotine and glycerin according to Reference Examples.
[Fig. 16] Fig. 16 shows graphs representing the delivery amounts of nicotine and glycerin according to Reference Examples.
[Fig. 17] Fig. 17 shows graphs representing the delivery amounts of nicotine and glycerin according to Reference Examples.
[Fig. 18] Fig. 18 shows graphs representing the delivery amounts of nicotine and glycerin according to Reference Examples.
[Fig. 19] Fig. 19 is a diagram illustrating some modes of the heat-not-burn flavor inhaler.
[Fig. 20] Fig. 20 is a diagram illustrating one mode of the heat-not-burn flavor inhaling system.
[Fig. 21A] Fig. 21A is a diagram illustrating other modes of the heat-not-burn flavor inhaler.
[Fig. 21B] Fig. 21B is a diagram illustrating other modes of the heat-not-burn flavor inhaler.
[Fig. 21C] Fig. 21C is a diagram illustrating other modes of the heat-not-burn flavor inhaler.
[Fig. 22] Fig. 22 is a diagram illustrating a model for calculating heat transfer characteristics.
[Fig. 23] Fig. 23 is a diagram illustrating the outline of a bending test.
[Fig. 24] Fig. 24 is a graph representing the amounts of smoke of heat-not-burn flavor inhalers.
[Fig. 25] Fig. 25 is a graph representing a correlation between the amount of smoke and a sensory evaluation in an automatic smoking system.

DESCRIPTION OF EMBODIMENTS

[Tobacco Sheet for Heat-Not-Burn Flavor Inhaler]

A tobacco sheet for a heat-not-burn flavor inhaler (hereinafter, also referred to as "tobacco sheet") according to an embodiment contains a tobacco raw material and has a corrugated shape in a cross section taken in a thickness direction of the tobacco sheet. Since the tobacco sheet according to the present embodiment has a corrugated sectional shape in the thickness direction, the tobacco sheet is bulky and has a high bulkiness. Therefore, when the tobacco sheet according to the present embodiment is used, it is possible to reduce the total heat capacity of a tobacco-containing segment, so the tobacco sheet filling the tobacco-containing segment can sufficiently contribute to generate an aerosol. The tobacco sheet according to the present embodiment preferably further contains an aerosol generator and one or two or more types of forming agents. When a blending ratio of these agents is made to fall within a predetermined range, the bulkiness of the tobacco sheet further improves.

(Shape of Tobacco Sheet)

The tobacco sheet according to the present embodiment has a corrugated shape in the cross section taken in the thickness direction. In other words, when the tobacco sheet according to the present embodiment is cut in the thickness direction in one direction of a planar direction, the shape of the cross section has a corrugated shape. The one direction of the planar direction may be, for example, a longitudinal direction of the tobacco sheet or may be a widthwise direction. Here, the "corrugated shape" is not limited as long as the corrugated shape is an up-down wavy shape. Peaks of corrugations may have a linear shape or may have a curved shape. The corrugations may be regular or may be irregular.

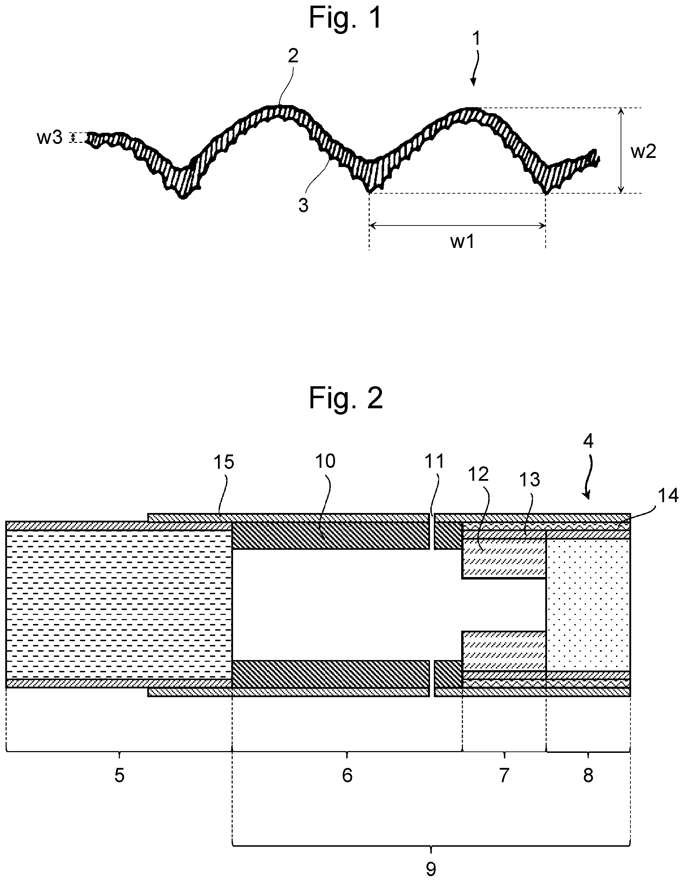

Fig. 1 is an example of the sectional shape in the thickness direction of the tobacco sheet according to the present embodiment. The tobacco sheet 1 illustrated in Fig. 1 has corrugations 2 in the cross section taken in the thickness direction. The width w1 of each corrugation 2 is not limited and preferably falls within the range of 0.1 mm to 10.0 mm. The height w2 of each corrugation 2 is not limited and preferably falls within the range of 0.1 mm to 5.0 mm. The thickness w3 of the tobacco sheet 1 preferably falls within the range of 100 $\mu$m to 1000 $\mu$m. As illustrated in Fig. 1, the corrugations 2 may have a sawtooth shape 3. When the corrugations 2 have the sawtooth shape 3, further more air gaps can be formed when the distal ends of the sawtooth shape contact with each other in a mixed element of the tobacco sheet, with the result that it is possible to further improve the bulkiness. The size in the planar direction of the tobacco sheet according to the present embodiment is not limited and may have, for example, a length of 5.0 mm to 40.0 mm and a width of 0.5 mm to 2.0 mm.

(Tobacco Raw Material)

The tobacco raw material contained in the tobacco sheet according to the present embodiment is not limited as long as the tobacco raw material contains a tobacco component. Examples of the tobacco raw material include tobacco powder and tobacco extract. Examples of the tobacco powder include a leaf tobacco, a leaf midrib, and a stalk. One of them may be used or two or more of them may be used in combination. When these materials are shredded into a predetermined size, these materials can be used as tobacco powder. As for the size of the tobacco powder, a cumulative 90% particle size (D90) in a particle size distribution on a volume basis, measured by dry laser diffractometry, is preferably greater than or equal to 200 $\mu$m from the viewpoint of further improvement in bulkiness. When the tobacco raw material is tobacco powder, the percentage of the tobacco powder contained in 100mass% of the tobacco sheet preferably ranges from 45mass% to 95mass%, more preferably ranges from 50mass% to 93mass%, and further preferably ranges from 60mass% to 85mass%. The tobacco extract may be, for example, a tobacco extract obtained by granulating leaf tobacco, extracting a water-soluble component from the leaf tobacco by mixing the granulated leaf tobacco with a solvent, such as water, and stirring the mixture, drying the obtained water extract under a reduced pressure and condensing the extract.

(Aerosol Generator)

The tobacco sheet according to the present embodiment preferably further contains an aerosol generator from the viewpoint of increasing the amount of smoke during heating. Examples of the aerosol generator include glycerin, propylene glycol, and 1,3-butanediol. One of them may be used or two or more of them may be used in combination.

When the tobacco sheet contains an aerosol generator, the percentage of the aerosol generator contained in 100mass% of the tobacco sheet preferably ranges from 4mass% to 50mass%. When the percentage of the aerosol generator is higher than or equal to 4mass%, it is possible to sufficiently generate an aerosol during heating from the viewpoint of amount. When the percentage of the aerosol generator is lower than or equal to 50mass%, it is possible to sufficiently generate an aerosol during heating from the viewpoint of heat capacity. The percentage of the aerosol generator more preferably ranges from 6mass% to 40mass%, further preferably ranges from 8mass% to 30mass%, and particularly preferably ranges from 10mass% to 20mass%.

(Forming Agent)

The tobacco sheet according to the present embodiment preferably further contains a forming agent from the viewpoint of ensuring the shape. The tobacco sheet according to the present embodiment preferably further contains a first forming agent and a second forming agent from the viewpoint of particularly making it possible to sufficiently achieve a capability to hold the aerosol generator of the tobacco sheet and a capability to maintain the corrugated shape. Here, the first forming agent and the second forming agent may be of different types or may be of the same type and have different forms. Examples of the first forming agent include polysaccharides, proteins, and synthetic polymers. Examples of the polysaccharides include cellulose derivatives and naturally-derived polysaccharides.

Examples of the cellulose derivatives include cellulose ethers, such as methyl cellulose, ethyl cellulose, hydroxyethyl cellulose, hydroxymethylethyl cellulose, hydroxypropyl cellulose, hydroxypropylmethyl cellulose, benzyl cellulose, trityl cellulose, cyanoethyl cellulose, carboxymethyl cellulose, carboxyethyl cellulose, and aminoethyl cellulose; organic esters, such as cellulose acetate, cellulose formate, cellulose propionate, cellulose butyrate, cellulose benzoate, cellulose phthalate, and tosyl cellulose; and inorganic esters, such as cellulose nitrate, cellulose sulfate, cellulose phosphate, and cellulose xanthate.

Examples of the naturally-derived polysaccharides include plant-derived polysaccharides, such as guar gum, tara gum, lost beam gum, tamarind seed gum, pectin, gum arabic, tragacanth gum, karaya gum, ghatti gum, arabinogalactan, linseed gum, cassia gum, thyrium seed gum, and artemisia sphaerocephala seed gum; algae-derived polysaccharides, such as carageenan, agar, alginic acid, propylene glycol alginate, furcelleran, and colpomenia sinuosa extract; microbially-derived polysaccharides, such as xanthan gum, gellan gum, curdlan, pullulan, agrobacterium succinoglycan, welan gum, macrophomopsis gum, and rhamsan gum; shellfish-derived polysaccharides, such as chitin, chitosan, and glucosamine; and starches, such as starch, sodium carboxymethyl starch, pregelatinized starch, and dextrin.

Examples of the proteins include wheat proteins, such as wheat gluten and rye gluten. Examples of the synthetic polymers include polyphosphoric acid, sodium polyacrylate, and polyvinyl pyrrolidone. The second forming agent is different from the first forming agent but polysaccharides, proteins, synthetic polymers, and the like similar to those of the first forming agent may be used.

When the tobacco sheet contains the first forming agent, the percentage of the first forming agent contained in 100mass% of the tobacco sheet preferably ranges from 0.1mass% to 15mass%. When the percentage of the first forming agent is higher than or equal to 0.1mass%, it is possible to easily form the mixed element of raw materials into a sheet shape. When the percentage of the first forming agent is lower than or equal to 15mass%, it is possible to sufficiently use other raw materials for ensuring functions sought for the tobacco-containing segment of the heat-not-burn flavor inhaler. The percentage of the first forming agent more preferably ranges from 0.1mass% to 12mass%, further preferably ranges from 0.1mass% to 10mass%, and particularly preferably ranges from 0.1mass% to 7mass%.

When the tobacco sheet contains the second forming agent, the percentage of the second forming agent contained in 100mass% of the tobacco sheet preferably ranges from 0.1mass% to 15mass%. When the percentage of the second forming agent is higher than or equal to 0.1mass%, it is possible to easily form the mixed element of raw materials into a sheet shape. When the percentage of the second forming agent is lower than or equal to 15mass%, it is possible to sufficiently use other raw materials for ensuring functions sought for the tobacco-containing segment of the heat-not-burn flavor inhaler. The percentage of the second forming agent more preferably ranges from 0.1mass% to 12mass%, further preferably ranges from 0.1mass% to 10mass%, and particularly preferably ranges from 0.1mass% to 7mass%.

When the first forming agent and the second forming agent are of the same type and have different forms, for example, the first forming agent may be powder and the second forming agent may be solution, slurry, or the like. For example, in a manufacturing method for a tobacco sheet (described later), a forming agent may be directly mixed in form of powder as the first forming agent, and a forming agent may be dispersed or swollen to be mixed in a solvent, such as water, as the second forming agent. With such a method as well, similar advantageous effects to those when two forming agents of different types are used are obtained.

(Reinforcing Agent)

The tobacco sheet according to the present embodiment may further contain a reinforcing agent from the viewpoint of further improvement in physical properties. Examples of the reinforcing agent include fiber materials, such as fiber pulp and fiber synthetic cellulose, and liquid materials having a surface coating function to form a film when dried, such as pectin suspension. One of them may be used or two or more of them may be used in combination.

When the tobacco sheet contains the reinforcing agent, the percentage of the reinforcing agent contained in 100mass% of the tobacco sheet preferably ranges from 4mass% to 40mass%. When the percentage falls within this range, it is possible to sufficiently use other raw materials for ensuring functions sought for the tobacco-containing segment of the heat-not-burn flavor inhaler. The percentage of the reinforcing agent more preferably ranges from 4.5mass% to 35mass% and further preferably ranges from 5mass% to 30mass%.

(Humectant)

The tobacco sheet according to the present embodiment may further contain a humectant from the viewpoint of quality retention. Examples of the humectant include sugar alcohols, such as sorbitol, erythritol, xylitol, maltitol, lactitol, mannitol, and hydrogenated maltose syrup. One of them may be used or two or more of them may be used in combination.

When the tobacco sheet contains the humectant, the percentage of the humectant contained in 100mass% of the tobacco sheet preferably ranges from 1mass% to 15mass%. When the percentage falls within this range, it is possible to sufficiently use other raw materials for ensuring functions sought for the tobacco-containing segment of the heat-not-burn flavor inhaler. The percentage of the humectant more preferably ranges from 2mass% to 12mass% and further preferably ranges from 3mass% to 10mass%.

(Other Components)

The tobacco sheet according to the present embodiment can include a flavor agent, such as a flavoring agent and a flavor material, a colorant, a wetting agent, a preservative, and a diluent, such as an inorganic substance, as needed in addition to the tobacco raw material, the aerosol generator, the forming agents (the first and second forming agents), the reinforcing agent, and the humectant.

(Bulkiness)

The bulkiness of the tobacco sheet according to the present embodiment is preferably higher than or equal to 190 cc/100 g. When the bulkiness is higher than or equal to 190 cc/100 g, it is possible to sufficiently reduce the total heat capacity of the tobacco-containing segment of the heat-not-burn flavor inhaler, with the result that the tobacco sheet filling the tobacco-containing segment can further contribute to generating an aerosol. The bulkiness is more preferably higher than or equal to 210 cc/100 g and further preferably higher than or equal to 230 cc/100 g. An upper limit of the range of the bulkiness is not limited and may be, for example, lower than or equal to 800 cc/100 g. The bulkiness is a value obtained by shredding a tobacco sheet into a size of 0.8 mm x 20 mm, leaving the shredded tobacco sheet standing for 48 hours in a conditioned room at 22°C and 60%, and then measuring the bulkiness with DD-60A (product name, made by Borgward company). Measurement is performed by putting 15 g of the shredded tobacco sheet in a cylindrical casing with an inside diameter of 60 mm, and obtaining a volume when compressed for 30 seconds with a load of 3 kg.

[Manufacturing Method for Tobacco Sheet]

The tobacco sheet according to the present embodiment can include, for example, a step of preparing a mixture containing a tobacco raw material, an aerosol generator, a first forming agent, and a second forming agent, a step of forming a rolled molding product by rolling the mixture; and a step of cutting the rolled molding product into strips by pressing a rotary roll blade against the rolled molding product and imparting the rolled molding product with a corrugated shape. A process of imparting the rolled molding product with a corrugated shape is also referred to as rippling process. For example, the tobacco sheet according to the present embodiment can be manufactured by the following method.

(1) a step of obtaining a mixture by mixing water, a tobacco raw material, an aerosol generator, first and second forming agents, and a reinforcing agent.
(2) a step of obtaining a rolled molding product by putting the mixture into a plurality of rolling rolls to be rolled.
(3) a step of cutting the rolled molding product into strips by pressing a rotary roll blade against the rolled molding product and imparting the rolled molding product with a corrugated shape.

The sheet cut into strips by the rotary roll blade is applied with resistance force when peeled off from the rolls, to be imparted with a corrugated shape and a sawtooth shape as illustrated in Fig. 1. When the rolled molding product is not cut with the rotary roll blade, the rolled molding product on the rolling rolls can be applied with resistance force when, for example, peeled off from the rolls with a doctor knife to be similarly imparted with a corrugated shape and a sawtooth shape. When the tobacco sheet is manufactured with the method, the surfaces of the rolling rolls may be heated or cooled or the rotation speed of the rolling rolls may be adjusted, according to a purpose. Furthermore, it is possible to obtain a tobacco sheet with a desired basis weight by adjusting the space between the rolling rolls.

[Heat-Not-Burn Flavor Inhaler]

A heat-not-burn flavor inhaler according to the present embodiment includes a tobacco-containing segment including the tobacco sheet according to the present embodiment, and the like. Since the heat-not-burn flavor inhaler according to the present embodiment includes the tobacco-containing segment filled with the high-bulkiness tobacco sheet according to the present embodiment, and the like, it is possible to sufficiently reduce the total heat capacity of the tobacco-containing segment of the heat-not-burn flavor inhaler, with the result that the tobacco sheet filling the tobacco-containing segment can further contribute to generating an aerosol.

Fig. 2 is an example of the heat-not-burn flavor inhaler according to the present embodiment. The heat-not-burn flavor inhaler 4 illustrated in Fig. 2 includes a tobacco-containing segment 5 filled with the tobacco sheet according to the present embodiment, and the like, a cylindrical cooling segment 6 having perforations 11 along a circumference, a center hole segment 7, and a filter segment 8. The heat-not-burn flavor inhaler according to the present embodiment may include another segment in addition to the tobacco-containing segment, the cooling segment, the center hole segment, and the filter segment.

The axial length of the heat-not-burn flavor inhaler according to the present embodiment is not limited and is preferably greater than or equal to 40 mm and less than or equal to 90 mm, more preferably greater than or equal to 50 mm and less than or equal to 75 mm, and further preferably greater than or equal to 50 mm and less than or equal to 60 mm. The circumferential length of the heat-not-burn flavor inhaler is preferably greater than or equal to 16 mm and less than or equal to 25 mm, more preferably greater than or equal to 20 mm and less than or equal to 24 mm, further preferably greater than or equal to 21 mm and less than or equal to 23 mm. For example, there may be a mode in which the length of the tobacco-containing segment is 20 mm, the length of the cooling segment is 20 mm, the length of the center hole segment is 8 mm, and the length of the filter segment is 7 mm. The length of the filter segment can be selected within the range greater than or equal to 4 mm and less than or equal to 10 mm. A selection is made such that the air-flow resistance of the filter segment at that time is greater than or equal to 15 mmH$_2$O/seg and less than or equal to 60 mmH$_2$O/seg. The lengths of these individual segments may be changed as needed according to manufacturing suitability, quality requirements, and the like. Furthermore, even when only the filter segment is disposed downstream of the cooling segment without using the center hole segment, it can also function as a heat-not-burn flavor inhaler.

(Tobacco-Containing Segment)

In the tobacco-containing segment 5, wrapping paper (hereinafter, also referred to as wrapper) is filled with the tobacco sheet according to the present embodiment. A method of filling wrapping paper with a tobacco sheet is not limited and may be, for example, wrapping a tobacco sheet with a wrapper or filling a cylindrical wrapper with a tobacco sheet. When the shape of each of pieces of tobacco sheet has a longitudinal direction like a rectangular shape, the pieces of tobacco sheet may fill the wrapper such that the longitudinal directions of the pieces of tobacco sheet are respectively indefinite directions in the wrapper or may fill the wrapper such that the longitudinal directions of the pieces of tobacco sheet are aligned in an axial direction of the tobacco-containing segment 5 or a direction perpendicular to the axial direction.

(Cooling Segment)

As illustrated in Fig. 2, a mode in which the cooling segment 6 is made up of a cylindrical member 10 can be provided. The cylindrical member 10 may be, for example, a paper core formed by working thick paper into a cylindrical shape.

The cylindrical member 10 and a mouthpiece lining paper 15 (described later) have perforations 11 extending through both members. With the presence of the perforations 11, outside air is introduced into the cooling segment 6 during inhalation. Thus, an aerosol vaporized component generated by heating the tobacco-containing segment 5 contacts with outside air, and the temperature of the aerosol vaporized component decreases, so the aerosol vaporized component liquefies to form an aerosol. The diameter (span length) of each perforation 11 is not limited and may be, for example, greater than or equal to 0.5 mm and less than or equal to 1.5 mm. The number of the perforations 11 is not limited and may be one or two or more. For example, a plurality of the perforations 11 may be provided along the circumference of the cooling segment 6.

The amount of outside air introduced through the perforations 11 is preferably lower than or equal to 85vol% with respect to the volume of the entire gas inhaled by a user and more preferably lower than or equal to 80vol%. When the percentage of the amount of outside air is lower than or equal to 85vol%, it is possible to sufficiently suppress a reduction in flavor resulting from dilution with outside air. This also called ventilation in other words. A lower limit of the range of ventilation percentage is preferably higher than or equal to 55vol% and more preferably higher than or equal to 60vol% from the viewpoint of cooling capability.

The cooling segment may be a segment including a sheet of a creased, pleated, gathered, or folded appropriate constituent material. A sectional profile of such an element may show randomly oriented channels. The cooling segment may include a bundle of longitudinally extended tubes. Such a cooling segment can be formed by, for example, rolling pleated, gathered, or folded sheet material to be wrapped with wrapping paper.

The axial length of the cooling segment may be, for example, greater than or equal to 7 mm and less than or equal to 28 mm and may be, for example, 18 mm. The cooling segment may have substantially a circular shape as a sectional shape in the axial direction. The diameter of the cooling segment may be, for example, greater than or equal to 5 mm and less than or equal to 10 mm and may be, for example, about 7 mm.

(Center Hole Segment)

The center hole segment is made up of a filling layer having one or multiple hollow portions and an inner plug wrapper (inner wrapping paper) covering the filling layer. For example, as illustrated in Fig. 2, the center hole segment 7 is made up of a second filling layer 12 having a hollow portion, and a second inner plug wrapper 13 covering the second filling layer 12. The center hole segment 7 has a function to enhance the strength of the mouthpiece segment 9. The second filling layer 12 may be, for example, a rod with an inside diameter of greater than or equal to $\varphi 1.0$ mm and less than or equal to $\varphi 5.0$ mm, filled with cellulose acetate fibers with a high density and added with a plasticizer containing triacetin at 6mass% or higher and 20mass% or lower with respect to the mass of cellulose acetate and cured. Since the second filling layer 12 has a high packing density of fibers, air and aerosol flow through only the hollow portion and almost do not flow through the second filling layer 12 during inhalation. Since the second filling layer 12 in the center hole segment 7 is a fiber filling layer, a touch feeling from outside during use is less likely to make a user feel a sense of discomfort. The center hole segment 7 may be held in shape by heat molding without the second inner plug wrapper 13.

(Filter Segment)

The configuration of the filter segment 8 is not limited and may be made up of one or multiple filling layers. The outside of the filling layer may be wrapped with one or multiple pieces of wrapping paper. An air-flow resistance per segment of the filter segment 8 may be changed as needed by the amount, material, or the like of a filler filling the filter segment 8. When, for example, the filler is cellulose acetate fibers, it is possible to increase the air-flow resistance when the amount of cellulose acetate fibers filling the filter segment 8 is increased. When the filler is cellulose acetate fibers, the packing density of cellulose acetate fibers may range from 0.13 $g/cm^3$ to 0.18 $g/cm^3$. The air-flow resistance is a value measured with an air-flow resistance measuring device (product name: SODIMAX made by SODIM).

The circumferential length of the filter segment 8 is not limited and preferably ranges from 16 mm to 25 mm, more preferably ranges from 20 mm to 24 mm, and further preferably ranges from 21 mm to 23 mm. The axial length of the filter segment 8 can be selected within the range of 4 mm to 10 mm and is selected such that the air-flow resistance ranges from 15 $mmH_2O/seg$ to 60 $mmH_2O/seg$. The axial length of the filter segment 8 preferably ranges from 5 mm to 9 mm and more preferably ranges from 6 mm to 8 mm. The sectional shape of the filter segment 8 is not limited and may be, for example, a circular shape, an elliptical shape, a polygonal shape, or the like. The filter segment 8 may be directly added with a breakable capsule containing a flavoring agent, a flavor bead, or a flavoring agent.

As illustrated in Fig. 2, the center hole segment 7 and the filter segment 8 can be connected by an outer plug wrapper (outer wrapping paper) 14. The outer plug wrapper 14 may be, for example, a cylindrical paper. The tobacco-containing segment 5, the cooling segment 6, and the connected center hole segment 7 and filter segment 8 can be connected by the mouthpiece lining paper 15. These connections can be made by, for example, applying a paste, such as vinyl acetate paste, on the inner surface of the mouthpiece lining paper 15 and rolling the mouthpiece lining paper 15 with the three segments placed inside. These segments may be connected in multiple steps with multiple pieces of lining paper.

[Heat-Not-Burn Flavor Inhaling System]

A heat-not-burn flavor inhaling system according to the present embodiment includes the heat-not-burn flavor inhaler according to the present embodiment, and a heating device that heats the tobacco-containing segment of the heat-not-burn flavor inhaler. The heat-not-burn flavor inhaling system according to the present embodiment may include another component in addition to the heat-not-burn flavor inhaler according to the present embodiment and the heating device.

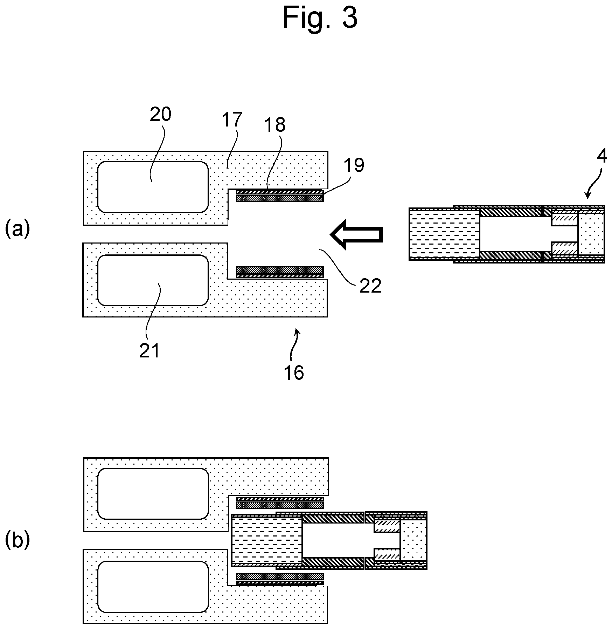

Fig. 3 is an example of the heat-not-burn flavor inhaling system according to the present embodiment. The heat-not-burn flavor inhaling system illustrated in Fig. 3 includes the heat-not-burn flavor inhaler 4 according to the present embodiment, and a heating device 16 that heats the tobacco-containing segment of the heat-not-burn flavor inhaler 4 from outside.

Fig. 3(a) illustrates a state before the heat-not-burn flavor inhaler 4 is inserted in the heating device 16. Fig. 3(b) illustrates a state where the heat-not-burn flavor inhaler 4 is inserted in the heating device 16 and heated. The heating device 16 illustrated in Fig. 3 includes a body 17, a heater 18, a metal tube 19, a battery unit 20, and a control unit 21. The body 17 has a cylindrical recess 22. The heater 18 and the metal tube 19 are disposed on the inner side of the recess 22 at a location corresponding to the tobacco-containing segment of the heat-not-burn flavor inhaler 4 inserted in the recess 22. The heater 18 may be an electrical resistance heater. Electric power is supplied from the battery unit 20 in response to instructions from the control unit 21 that executes temperature control, and the heater 18 performs heating. Heat emitted from the heater 18 is transferred to the tobacco-containing segment of the heat-not-burn flavor inhaler 4 through the metal tube 19 having a high heat conductivity.

Since Fig. 3(b) shows a schematic diagram, there is a gap between the outer periphery of the heat-not-burn flavor inhaler 4 and the inner periphery of the metal tube 19. Actually, it is desirable that there is no gap between the outer periphery of the heat-not-burn flavor inhaler 4 and the inner periphery of the metal tube 19 for the purpose of efficiently transferring heat. The heating device 16 heats the tobacco-containing segment of the heat-not-burn flavor inhaler 4 from outside. Alternatively, the heating device 16 may heat the tobacco-containing segment from inside.

The heating temperature of the heating device is not limited and is preferably lower than or equal to 400°C, more preferably higher than or equal to 150°C and lower than or equal to 400°C, and further preferably higher than or equal to 200°C and lower than or equal to 350°C. The heating temperature represents the temperature of the heater of the heating device.

Furthermore, the heat-not-burn flavor inhaler is sought for improvement in delivery of a flavor component (smoke). Hereinafter, a heat-not-burn flavor inhaler of which delivery of a flavor component (smoke) is improved will be described.

[First Embodiment]

The present embodiment includes the following [1a] to [19a]. According to the present embodiment, it is possible to provide a heat-not-burn flavor inhaler and a heat-not-burn flavor inhaling system with a uniform balance of components supplied to a user over a first half to a second half of use.

> [1a] In a heat-not-burn flavor inhaler including a tobacco-containing segment and a mouthpiece segment,
>
>> the tobacco-containing segment includes a first segment including an aerosol generator and a second segment including the tobacco sheet for a heat-not-burn flavor inhaler according to the present embodiment, and
>> the mouthpiece segment includes a cooling segment and a filter segment.
>
> [2a] In the heat-not-burn flavor inhaler according to [1a], the aerosol generator is at least one selected from the group consisting of glycerin, propylene glycol, and 1,3-butanediol.
> [3a] In the heat-not-burn flavor inhaler according to [1a] or [2a], the first segment further includes plant fibers.
> [4a] In the heat-not-burn flavor inhaler according to [3a], the first segment includes a cylindrical wrapper and a nonwoven fabric made up of plant fibers filling an inside of the wrapper, and the nonwoven fabric contains the aerosol generator.
> [5a] In the heat-not-burn flavor inhaler according to [4a], multiple pieces of the sheet nonwoven fabric are stacked, and fill an inside of the wrapper in a state of being folded in an S-shape.
> [6a] In the heat-not-burn flavor inhaler according to [4a] or [5a], the wrapper is a metal foil, a laminated sheet of a metal foil and paper, a polymer film, a laminated sheet of polymer film and paper, or paper on a surface of which a coating agent selected from the group consisting of modified cellulose, modified starch, polyvinyl alcohol, and vinyl acetate is applied.
> [7a] In the heat-not-burn flavor inhaler according to any one of [4a] to [6a], the wrapper is a laminated body of a paper layer forming an outer surface and a liquid impermeable layer forming an inner surface,
>
>> the liquid impermeable layer is made up of a layer of a metal foil, a polymer film, or a layer of a coating agent selected from the group consisting of modified cellulose, modified starch, polyvinyl alcohol, and vinyl acetate, and
>> the wrapper is formed in a cylindrical shape in a manner such that the liquid impermeable layer of the wrapper is bonded at one end and the other end of the wrapper.

[8a] In the heat-not-burn flavor inhaler according to any one of [1a] to [7a], the first segment further contains a thickener.

[9a] In the heat-not-burn flavor inhaler according to any one of [1a] to [8a], the tobacco sheet contains a flavor developing agent.

[10a] In the heat-not-burn flavor inhaler according to any one of [1a] to [9a], the tobacco sheet contains lipid.

[1 la] In the heat-not-burn flavor inhaler according to any one of [1a] to [10a], the second segment is disposed adjacent to the mouthpiece segment with respect to the first segment.

[12a] In the heat-not-burn flavor inhaler according to any one of [1a] to [10a], the columnar first segment is provided so as to extend in an axial direction of the tobacco-containing segment, and the second segment is disposed on an outer periphery of the first segment.

[13a] In the heat-not-burn flavor inhaler according to any one of [1a] to [10a], the columnar second segment is provided so as to extend in an axial direction of the tobacco-containing segment, and the first segment is disposed on an outer periphery of the second segment.

[14a] In the heat-not-burn flavor inhaler according to any one of [1a] to [11a], the first segment and the second segment are connected by being wrapped with an outer wrapper including a heat transfer raw material.

[15a] A heat-not-burn flavor inhaling system includes

the heat-not-burn flavor inhaler according to any one of [1a] to [14a], and
a heating device including a heater that heats the tobacco-containing segment of the heat-not-burn flavor inhaler.

[16a] In the heat-not-burn flavor inhaling system according to [15a], the heater includes a first circumferential heater that heats an entire side of the columnar first segment and that heats part of a side of the columnar second segment or that does not heat the second segment.

[17a] In the heat-not-burn flavor inhaling system according to [15a], the heater includes a second circumferential heater that heats an entire side and entire bottom of the columnar first segment and that heats at least part of a side of the columnar second segment or that does not heat the second segment.

[18a] In the heat-not-burn flavor inhaling system according to any one of [15a] to [17a], the heater includes an internal heater that heats an inside of the columnar first segment entirely in an axial direction and that heats an inside of the columnar second segment partially in an axial direction or that does not heat the second segment.

[19a] In the heat-not-burn flavor inhaling system according to any one of [15a] to [18a], a heating temperature of the heater ranges from 200°C to 350°C.

[Heat-Not-Burn Flavor Inhaler]

In the heat-not-burn flavor inhaler according to the present embodiment, the tobacco-containing segment includes a first segment including an aerosol generator and a second segment including the tobacco sheet for a heat-not-burn flavor inhaler according to the present embodiment. Therefore, when the tobacco-containing segment is heated, it is possible to increase the heating temperature of the first segment including the aerosol generator having a high boiling point (low vapor pressure) and to decrease the heating temperature of the second segment including the flavor component, such as a tobacco component having a low boiling point (high vapor pressure). Thus, it is possible to suppress volatilization of the flavor component having a low boiling point (high vapor pressure) in the first half of use and to maintain volatilization and supply of the flavor component up to the second half of use. Furthermore, it is possible to facilitate volatilization of the aerosol generator having a high boiling point (low vapor pressure) in the first half of use. Therefore, with the heat-not-burn flavor inhaler according to the present embodiment, it is possible to provide a uniform balance of components supplied to a user over a period from the first half to the second half of use.

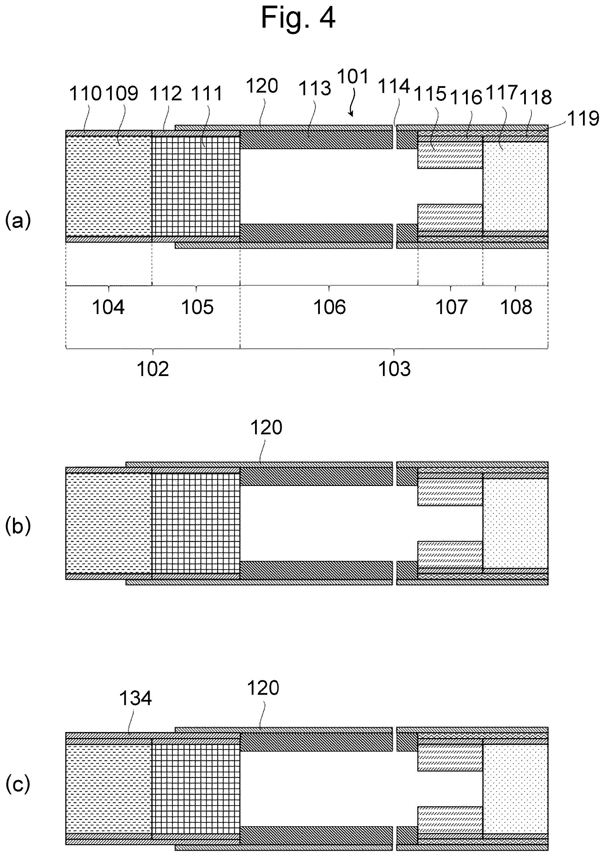

Fig. 4(a) is an example of the heat-not-burn flavor inhaler according to the present embodiment. A heat-not-burn flavor inhaler 101 illustrated in Fig. 4(a) includes a tobacco-containing segment 102 and a mouthpiece segment 103. The tobacco-containing segment 102 includes a first segment 104 including an aerosol generator, and a second segment 105 disposed downstream of the first segment 104 and including the tobacco sheet for a heat-not-burn flavor inhaler according to the present embodiment. The mouthpiece segment 103 includes a cooling segment 106, a center hole segment 107, and a filter segment 108 from an upstream side in this order. In the present embodiment, the mouthpiece segment 103 does not need to include the center hole segment 107. During use, at least part (mainly the first segment 104) of the tobacco-containing segment 102 is heated, the aerosol generator of the first segment 104 and the flavor component of the second segment 105 vaporize and are transferred to the mouthpiece segment 103 through inhalation, and inhalation is performed from the end of the filter segment 108.

(Tobacco-Containing Segment)

The tobacco-containing segment according to the present embodiment includes a first segment including an aerosol generator and a second segment including the tobacco sheet for a heat-not-burn flavor inhaler according to the present embodiment. The tobacco-containing segment according to the present embodiment may include a plurality of the first segments and/or a plurality of the second segments.

<First Segments

The first segment according to the present embodiment includes an aerosol generator. Examples of the aerosol generator include glycerin, propylene glycol, and 1,3-butanediol. One of them may be used or two or more of them may be used in combination.

The first segment preferably further includes plant fibers from the viewpoint of sufficiently holding an aerosol generator. Examples of the plant fibers include wood pulp, hemp, corn, bamboo, cotton, and tobacco. One of them may be used or two or more of them may be used in combination. The plant fibers may be a plant fiber sheet made up of collected plant fibers. The plant fibers preferably contain 10mass% to 50mass% of aerosol generator and more preferably contain 12mass% to 30mass% of aerosol generator from the viewpoint that the aerosol generator is stably held in a plant fiber sheet and a necessary amount of aerosol generated is ensured.

Preferably, the first segment includes a cylindrical wrapper and a nonwoven fabric made up of plant fibers filling the wrapper, and the nonwoven fabric contains an aerosol generator. In the first segment, it is possible to sufficiently hold an aerosol generator with a nonwoven fabric. The thickness of the nonwoven fabric is not limited and may, for example, range from 1 mm to 2 mm. The nonwoven fabric preferably contains 10mass% to 50mass% of the aerosol generator and more preferably contains 12mass% to 30mass% of the aerosol generator.

Preferably, the first segment includes a cylindrical wrapper and paper made up of plant fibers filling the wrapper, and the paper contains an aerosol generator. In the first segment, it is possible to sufficiently hold an aerosol generator with paper. The thickness of the paper is not limited and may, for example, range from 50 $\mu$m to 200 $\mu$m. The paper preferably contains 10mass% to 50mass% of the aerosol generator and more preferably contains 12mass% to 30mass% of the aerosol generator.

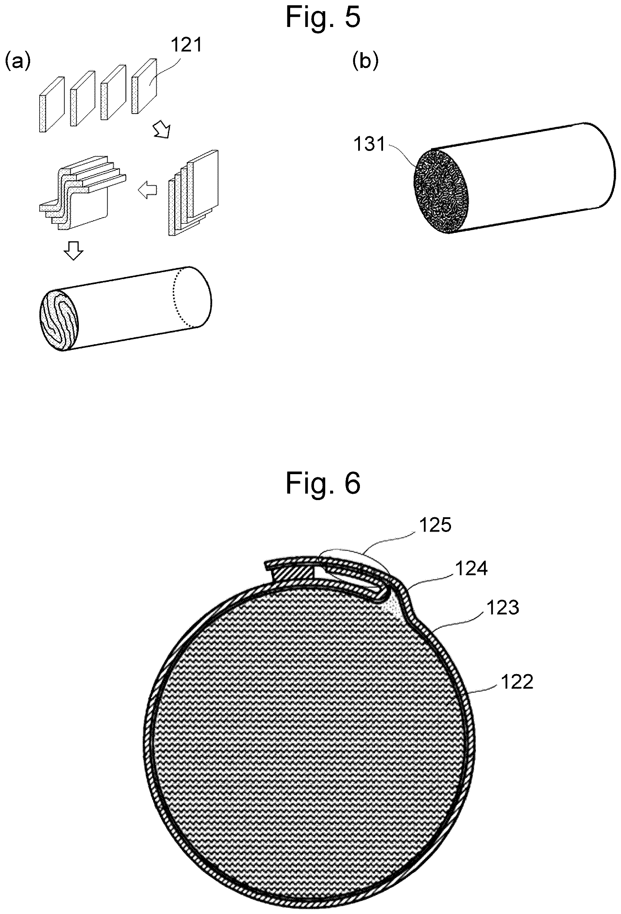

In the first segment, for example, as illustrated in Fig. 5(a), multiple pieces of sheet nonwoven fabric 121 are stacked and fill the inside of the wrapper in a state of being folded in an S-shape. With such a first segment, the nonwoven fabric is folded to fill the inside, so a gap between pieces of nonwoven fabric is not commonly visually recognized; however, when, for example, an internal heater having a blade shape, a rod shape, or the like is inserted, the heater enters the gap between pieces of nonwoven fabric, and there is no damage to the nonwoven fabric itself. Therefore, when the heater performs heating, it is possible to reduce a situation that the nonwoven fabric or the like chars to be brittle and remains in the device as wastes.

In the first segment, for example, as illustrated in Fig. 5(b), pieces of sheet paper 131 preferably fill the inside of the wrapper in a gathered state. With such a first segment, when, for example, an internal heater having a blade shape, a rod shape, or the like is inserted, the heater enters the gap between pieces of paper, and there is no damage to the paper itself. Therefore, when the heater performs heating, it is possible to reduce a situation that the paper or the like chars to be brittle and remains in the device as wastes. The nonwoven fabric may be filling the inside in a state of being folded in the S-shape but filling the inside in a gathered state. When filling the inside in a gathered state, a plurality of channels through which air easily permeates in a flow direction of air is formed, so it is possible to reduce the air-flow resistance of the first segment.

From the viewpoint of suppressing exudation of aerosol generator, the wrapper is desirably the one with a reduced liquid permeability. Examples of the wrapper with a low liquid permeability include a metal foil, a laminated sheet of a metal foil and paper, a polymer film, a laminated sheet of a polymer film and paper, and paper on a surface of which a coating agent that suppresses permeation of liquid, such as modified cellulose, modified starch, polyvinyl alcohol, and vinyl acetate, is applied. In addition to the viewpoint of suppressing permeation of liquid, from the viewpoint of providing a uniform temperature distribution in the longitudinal direction of the first segment, a wrapper preferably includes a metal foil having an excellent thermal conductivity. Furthermore, when a metal foil is disposed on an inner side and paper is disposed on an outer side after rod wrapping as a laminated sheet of a metal foil and paper, it is possible to assimilate the external appearance to a general heat-burn flavor inhaler (cigarette). When the amount of aerosol generator included in the first segment is relatively small, paper on the surface of which a coating agent that reduces permeation of liquid, such as modified cellulose, modified starch, polyvinyl alcohol, and vinyl acetate, is applied is preferably used in order to make it possible to assimilate the rod hardness, elasticity, and touch feeling of the first segment to a general heat-burn flavor inhaler (cigarette).

When the wrapper is a laminated body of a paper layer forming an outer surface and a liquid impermeable layer forming an inner surface, the liquid impermeable layer may be made up of a layer of a metal foil, a polymer film, or a coating agent selected from the group consisting of modified cellulose, modified starch, polyvinyl alcohol, and vinyl acetate. Here, the wrapper is preferably formed in a cylindrical shape in a manner such that the liquid impermeable layer of the wrapper is bonded at one end and the other end of the wrapper. For example, as illustrated in Fig. 6, a nonwoven fabric 122 containing an aerosol generator fills the inside of a cylindrical wrapper that is a laminated body of a paper layer 124 forming an outer surface and a liquid impermeable layer 123 forming an inner surface. Here, the wrapper is formed in a cylindrical shape in a manner such that the liquid impermeable layer 123 is bonded (bonding portion 125) at one end and the other end of the wrapper. When the liquid impermeable layer is bonded to each other in this way, it is possible to further suppress exudation of aerosol generator to the outside.

The first segment preferably further contains a thickener from the viewpoint of improving retention of aerosol generator. For example, an aerosol generator, such as glycerin and propylene glycol, is liquid at ordinary temperature, so, when a large amount of aerosol generator is contained in a nonwoven fabric or the like, the aerosol generator may exudate from the nonwoven fabric. However, when a thickener is further contained in the nonwoven fabric or the like, it is possible to suppress exudation of aerosol generator to the outside, so ease of handling improves. Examples of the thickener include polysaccharide thickeners, such as gellan gum, tamarind gum, agar, carageenan, pectin, and alginate, proteins, such as collagen and gelatin, and modified cellulose, such as HPC, CMC, and HPMC. One of these thickeners may be used or two or more of the thickeners may be used in combination. When the first segment contains a thickener, the content of the thickener preferably ranges from 0.1 parts by mass to 5.0 parts by mass with respect to 100 parts by mass of the aerosol generator depending on the type of the thickener used. When, for example, glycerin is used as an aerosol generator, native gellan gum is used as a thickener, and water is used as a diluent, the native gellan gum ranges from 0.3 parts by mass to 0.7 parts by mass and water is 23.5 parts by mass with respect to 100 parts by mass of glycerin. Thus, an aerosol generator with a viscosity having an excellent retention, that is, a viscosity of 2000 to 26000 (mPa·s at 25°C) is obtained. The aerosol generator is gel in a room temperature range and becomes liquid when warmed to about 60°C to 70°C. With this configuration, at the time of manufacturing the first segment, it is possible to easily contain an aerosol generator by warming the aerosol generator into a liquid state and applying the aerosol generator to a nonwoven fabric or paper, and the aerosol generator is in a gel state and stably held after the temperature decreases to about ordinary temperature.

The first segment may further include, for example, a tobacco component, a flavor component (externally added flavoring agent) other than the tobacco component, or the like in addition to the aerosol generator, the plant fibers (nonwoven fabric or paper), the wrapper, and the thickener. Examples of the flavor component other than the tobacco component include L-menthol, liquorice root extract, reducing sugar, and cocoa extract. The first segment does not need to include a flavor component.

The axial length of the first segment is not limited and may, for example, range from 5 mm to 15 mm. The circumferential length of the first segment is not limited and may, for example, range from 15 mm to 24 mm.

<Second Segment>

The second segment according to the present embodiment includes the tobacco sheet for a heat-not-burn flavor inhaler according to the present embodiment. In other words, the second segment includes a flavor component, such as a tobacco component. The second segment may include, for example, a cylindrical wrapper, and the tobacco sheet for a heat-not-burn flavor inhaler according to the present embodiment, filling the inside of the wrapper.

The tobacco sheet may contain a flavor developing agent. The flavor developing agent may contain at least one of carbonates, hydrogencarbonates, oxides, and hydroxides of alkali metals and/or alkaline earth metals. Preferably, the flavor developing agent is potassium carbonate or sodium carbonate. Since most of the tobacco component contained in the tobacco sheet is amines, when the tobacco sheet contains a flavor developing agent, volatilization of the tobacco component is ensured even at a relatively low temperature, so it is possible to sufficiently develop a tobacco flavor. The amount of the flavor developing agent contained in the tobacco sheet preferably ranges from 5 parts by mass to 20 parts by mass with respect to 100 parts by mass of the tobacco sheet. The pH of the tobacco sheet may be 7 to 11 as a result of adding a flavor developing agent. The pH can be measured with a pH meter (for example, IQ240 made by IQ Scientific Instruments, Inc.). For example, distilled water ten times as heavy as 2 to 10 g of tobacco material in mass ratio is added to the tobacco sheet, a mixture of water and the tobacco sheet is shaken at 200 rpm for ten minutes at room temperature (for example, 22°C) and left standing for five minutes, and then the pH of the obtained extract is measured with the pH meter.

The tobacco sheet may contain lipid. Examples of the lipid include acylglycerols, such as monoglyceride, diglyceride, and triglyceride, and fatty acids. One of them may be used or two or more of them may be used in combination. When the tobacco sheet contains lipid, it is possible to reduce redundant volatilization of flavor component, such as nicotine, due to interaction between the lipid and the flavor component, such as nicotine, contained in the tobacco sheet. When the tobacco sheet contains lipid, a small amount of lipid can also be contained in an aerosol generated during use. With this configuration, it is possible to suppress re-vaporization of a flavor component after vapor of the flavor component and the aerosol generator is cooled and an aerosol is formed. The amount of lipid contained in the tobacco sheet preferably ranges from 2 parts by mass to 15 parts by mass with respect to 100 parts by mass of the tobacco sheet.

Examples of the second segment may include the one in which tobacco sheet shreds obtained by shredding the tobacco sheet fill the inside of a cylindrical wrapper randomly or in an aligned orientation and the one in which the tobacco sheet is gathered without being shredded and fills the inside of the cylindrical wrapper. Hereinafter, tobacco sheet shreds are also referred to as tobacco shreds. Examples of the wrapper include the one obtained by forming a wrapping paper into a cylindrical shape. The content of nicotine in the filler filling the inside of the wrapper is preferably higher than or equal to 1.5mass% and more preferably ranges from 2.0mass% to 4.0mass%. When the packing density of tobacco shreds filling the inside of the wrapper ranges from 0.2 mg/mm$^3$ to 0.7 mg/mm$^3$, generation of a sufficient flavor component during use is ensured, and a sufficient rod hardness of the second segment is ensured, so it is preferable.

The size of tobacco shreds and its preparation method are not limited. In an example, the tobacco sheet is shredded into a shape with a width of greater than or equal to 0.5 mm and less than or equal to 2.0 mm and a length of greater than or equal to 3 mm and less than or equal to 10 mm. Tobacco shreds with such a size are preferable to fill an object to be filled. In another example, the tobacco sheet may be shredded (strand-type shreds) with a width of greater than or equal to 0.5 mm and less than or equal to 2.0 mm and a length of greater than that of the above-described tobacco shreds and preferably a length equivalent to that of an object to be filled. The strand-type shreds preferably use a tobacco sheet from the viewpoint of ease of molding.

The moisture content of tobacco shreds may be higher than or equal to 10mass% and lower than or equal to 15mass% with respect to the total mass of tobacco shreds and preferably higher than or equal to 11mass% and lower than or equal to 13mass%. With such a moisture content, occurrence of wrapping stains is reduced after tobacco shreds fill an object to be filled.

The packing density of the tobacco sheet in the wrapper can be set as needed according to the form of the tobacco sheet used, an intended flavor, an air-flow resistance, and the like. For example, the packing density may be greater than or equal to 0.2 mg/mm$^3$ and less than or equal to 0.7 mg/mm$^3$. The packing density is calculated by the percentage of the mass of the tobacco sheet to the internal volume of the rod formed by the wrapper.

The axial length of the second segment is not limited and may, for example, range from 5 mm to 15 mm. The circumferential length of the second segment is not limited and may, for example, range from 15 mm to 24 mm.

<Configuration of Tobacco-Containing Segment>

The configuration of the tobacco-containing segment is not limited as long as the tobacco-containing segment includes the first segment and the second segment; however, the second segment is preferably disposed adjacent to the mouthpiece segment (on the downstream side) with respect to the first segment. For example, as illustrated in Fig. 4(a), the columnar second segment 105 can be disposed adjacent to the mouthpiece segment 103 (on the downstream side) with respect to the columnar first segment 104. In Fig. 4(a), the first segment 104 can be configured such that a nonwoven fabric 109 made up of plant fibers and containing an aerosol generator fills the inside of a first wrapper 110. The second segment 5 can be configured such that the tobacco sheet 111 fills the inside of a second wrapper 112. Ease of volatilization of the components contained in the first segment and the second segment mainly depends on the heating temperature, and volatilization of the components is facilitated when a substance highly compatible with volatilizing components is present around. With the configuration, an aerosol generator volatilized in the first segment is cooled to liquefy (aerosolize) at the instance when flowing into the second segment during inhalation, dissolves a flavor component (for example, nicotine) present in the second segment in the aerosol to carry the aerosol to outside the tobacco-containing segment. Thus, the concentration of the flavor component in the second segment decreases, and volatilization is facilitated. Thus, even when the temperature of the second segment is not increased so much, release efficiency is ensured. Therefore, each time of puff action at a low temperature, the flavor component can be released from the second segment, with the result that it is possible to suppress exhaustion of the flavor component. The ratio (A/B) of the length (A) of the first segment to the length (B) of the second segment in the axial direction of the tobacco-containing segment preferably ranges from 0.3 to 3.0 and more preferably ranges from 0.5 to 2.0.

The first segment and the second segment can be connected by being wrapped with an outer wrapper. Here, the outer wrapper may be a general paper wrapper; however, the outer wrapper preferably contains a heat transfer raw material. When the first segment and the second segment are wrapped with the outer wrapper containing a heat transfer raw material, heat of the circumferential heater can be uniformly and efficiently transferred to the second segment even when, for example, only the side of the first segment is heated by the heater. Examples of the heat transfer raw material include a metal foil having a higher heat conductivity than paper. Particularly, as is represented by an aluminum foil and a stainless steel foil, a metal foil having a heat conductivity higher than or equal to 10 W/m·K, low in cost, resistant to corrosion, and high working characteristics (a thickness of several micrometers to 10 μm, high tensile strength, and easy to bend) is preferably used. For reference, the heat conductivities of typical metal foils (alloy foils) are shown in Table 1.

[Table 1]

| RAW MATERIAL | HEAT CONDUCTIVITY (W/m·K) |
|---|---|
| TITANIUM FOIL | 21.9 |
| STAINLESS STEEL FOIL | 16.3 |
| NICKEL FOIL | 90.7 |
| 42 ALLOY FOIL | 14.6 |
| COPPER FOIL | 390 |
| BERYLLIUM FOIL | 120 |
| MOLYBDENUM FOIL | 138 |
| BRASS FOIL | 84 |
| NIOBIUM FOIL | 53.7 |
| TANTALUM FOIL | 57.5 |
| ZINC FOIL | 11.6 |
| ALUMINUM FOIL | 236 |
| TIN FOIL | 66.6 |
| SILVER FOIL | 420 |
| KOVAR FOIL | 13.7-19.7 |
| IRON FOIL | 84 |
| ZIRCONIUM FOIL | 22.7 |
| LEAD FOIL | 34 |
| INDIUM FOIL | 81.6 |
| GOLD FOIL | 320 |
| PLATINUM FOIL | 70 |
| PAPER | 0.06 |
| ROLLING PAPER FOR TOBACCO | 0.3-0.4 |

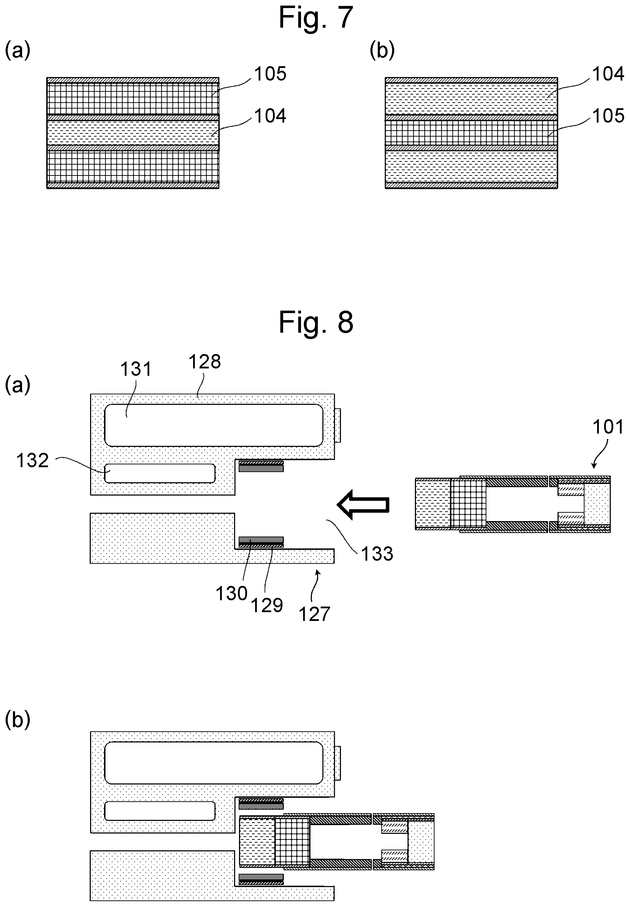

The columnar first segment may be provided so as to extend in the axial direction of the tobacco-containing segment, and the second segment may be disposed on the outer periphery of the first segment. For example, as illustrated in Fig. 7(a), the second segment 105 can be disposed on the outer periphery of (the side of) the columnar first segment 104. With this configuration, heating can be performed by inserting an internal heater, such as a blade heater, to the first segment. In the configuration, since the first segment heated at a higher temperature is formed in a thin rolled shape, it is preferable in terms that the first segment can be efficiently heated at a high temperature with an internal heater. Ease of flow of air in the longitudinal direction of the circular columnar rod during inhalation is set so as to be higher in the second segment than in the first segment by adjusting the packing density of each of the fillers. Thus, an aerosol generator mainly generated from the first segment does not directly move toward a mouthpiece but an aerosol generator mainly generated from the first segment can move to the second segment, associate with a flavor component, and move to a mouthpiece portion. In this case, an interface between the first segment and the second segment is preferably made of a permeable wrapper, for example, paper having an air permeability of 1000 to 30000 CORESTA Unit, so that air and an aerosol can permeate. Even when a member like a wrapper is not present at the interface, it is preferable from the viewpoint of facilitating movement of gas components from the first segment to the second segment.

The columnar second segment may be provided so as to extend in the axial direction of the tobacco-containing segment, and the second segment may be disposed on the outer periphery of the first segment. For example, as illustrated in Fig. 7(b), the first segment 104 can be disposed on the outer periphery of (the side of) the columnar second segment 105. With such a configuration, the side of the first segment can be heated with a circumferential heater. In the configuration, it is preferable in terms that the first segment intended to be heated at a higher temperature is efficiently heated at a high temperature with an external heater. Ease of flow of air in the longitudinal direction of the circular columnar rod during inhalation is set so as to be higher in the second segment than in the first segment by adjusting the packing density of each of the fillers. Thus, an aerosol generator mainly generated from the first segment does not directly move toward a mouthpiece but an aerosol generator mainly generated from the first segment can move to the second segment, associate with a flavor component, and move to a mouthpiece portion. In this case, an interface between the first segment and the second segment is preferably made of a permeable wrapper, for example, paper having an air permeability of 1000 to 30000 CORESTA Unit, so that air and an aerosol can permeate. Even when a member like a wrapper is not present at the interface, it is preferable from the viewpoint of facilitating movement of gas components from the first segment to the second segment.

The axial length of the tobacco-containing segment is not limited and may, for example, range from 12 mm to 50 mm. The circumferential length of the tobacco-containing segment is not limited and may, for example, range from 15 mm to 24 mm.

(Mouthpiece Segment)

The mouthpiece segment according to the present embodiment includes a cooling segment and a filter segment. The mouthpiece segment according to the present embodiment includes a plurality of cooling segments and/or a plurality of filter segments. The mouthpiece segment according to the present embodiment may include another segment in addition to the cooling segment and the filter segment. Examples of another segment include a center hole segment.

<Cooling Segments

As illustrated in Fig. 4(a), a mode in which the cooling segment 106 is made up of a cylindrical member 113 can be provided. The cylindrical member 113 may be, for example, a paper core formed by working thick paper into a cylindrical shape.

The cooling segment is located downstream of the tobacco-containing segment. Functions sought for the cooling segment are to cool vapor of a flavor component and an aerosol generator to liquefy (aerosolize) while suppressing a reduction of vapor of the flavor component and aerosol generator, generated in the tobacco-containing segment during use, due to filtration or adsorption as much as possible. For example, a difference between a segment internal temperature at a cooling segment inlet and a segment internal temperature at a cooling segment outlet during inhalation can be greater than or equal to 20°C. When a high-temperature vapor component of a flavor component and an aerosol generator pass through a cellulose acetate fiber filling segment used as a filter member of a general heat-burn flavor inhaler, a temperature difference between a segment inlet and a segment outlet can be greater than or equal to 20°C; however, a large amount of vapor of a flavor component and an aerosol generator reduces due to filtration and adsorption at the time of passing through a fiber filling layer. The fiber filling layer is not referred to as cooling segment in this application.

One mode of the cooling segment may be a hollow tube obtained by working single paper or laminated paper of multiple pieces of sheet into a cylindrical shape. The material of the tube may be a substance obtained by corrugating cellulose acetate fibers into a sheet shape or a plastic film, such as polyolefin and polyester, other than the paper. To increase a cooling effect by bringing outside air at room temperature into contact with high-temperature vapor, a hole for introducing outside air is preferably provided around the tube. When polymer coating of polyvinyl alcohol or the like or polysaccharide coating of pectin or the like is provided on the inner surface of the tube, it is possible to increase a cooling effect by taking advantage of heat of dissolution resulting from absorption of heat or phase change of coating. The air-flow resistance of the cylindrical cooling segment is 0 mmH$_2$O.

Another mode of the cooling segment is to preferably fill the inside of a tube worked into a cylindrical shape, with a cooling sheet member. At this time, when one or multiple airflow channels are provided in a flow direction, it is possible to perform cooling with the cooling sheet and achieve removal of components at the time of passing through a low-level segment. The air-flow resistance of the cooling segment filled with the cooling sheet desirably ranges from 0 mmH$_2$O to 30 mmH$_2$O. The air-flow resistance (RTD) is a pressure needed to push air through the overall length of an object under a test of a flow rate of 17.5 ml/s at 22°C and 101 kPa (760 torr). RTD is commonly expressed by the unit of mmH$_2$O and is measured in accordance with ISO 6565: 2011. In the mode in which the cooling sheet fills inside as well, a hole for introducing outside air can be provided in a tube member.

The total surface area of a cooling sheet member may be higher than or equal to 300 mm$^2$/mm and lower than or equal to 1000 mm$^2$/mm. The surface area is a surface area per length (mm) of the cooling sheet member in a ventilation direction. The total surface area of the cooling sheet member is preferably greater than or equal to 400 mm$^2$/mm and more preferably greater than or equal to 450 mm$^2$/mm, while the total surface area of the cooling sheet member is preferably less than or equal to 600 mm$^2$/mm and more preferably less than or equal to 550 mm$^2$/mm.

The cooling sheet member desirably has a large surface area from the viewpoint of cooling function. The air-flow resistance of the cooling segment filled with the cooling sheet member is desirably lower from the viewpoint of reducing removal of a flavor component and an aerosol generator due to filtration or adsorption. Therefore, in a preferred embodiment, a sheet for cooling may be provided with ridges and grooves to form channels in a flow direction and then may be made up of a sheet of a thin material, pleated, gathered, or folded.

In some embodiments, the thickness of a constituent material of the cooling sheet member may be greater than or equal to 5 $\mu$m and less than or equal to 500 $\mu$m and may be, for example, greater than or equal to 10 $\mu$m and less than or equal to 250 $\mu$m.

The material of the cooling sheet member may be a sheet material, such as a metal foil, a polymer sheet, and paper with a low air permeability. In one embodiment, the cooling segment may contain a sheet material selected from the group consisting of polyethylene, polypropylene, polyvinyl chloride, polyethylene terephthalate, polylactate, cellulose acetate, and aluminum foil.

Paper is desirably used as the material of the cooling sheet member from the viewpoint of reducing an environmental load. Paper used for the cooling sheet member desirably has a basis weight of 30 g/m$^2$ to 100 g/m$^2$ and a thickness of 20 $\mu$m to 100 $\mu$m. The air permeability of paper to be used as a material for a cooling sheet is desirably lower and the air permeability is preferably lower than or equal to 10 CORESTA Unit from the viewpoint of reducing removal of the flavor component and aerosol generator in the cooling segment. When polymer coating of polyvinyl alcohol or the like or polysaccharide coating of pectin or the like is provided on the paper serving as a cooling sheet member, it is possible to increase a cooling effect by taking advantage of heat of dissolution resulting from absorption of heat or phase change of coating.

In Fig. 4(a), the cylindrical member 113 and a mouthpiece lining paper 120 (described later) have perforations 114 extending through both members. With the presence of the perforations 114, outside air is introduced into the cooling segment 106 during inhalation. Thus, an aerosol vaporized component generated by heating the tobacco-containing segment 102 contacts with outside air, and the temperature of the aerosol vaporized component decreases, so the aerosol vaporized component liquefies to form an aerosol. The diameter (span length) of each perforation 114 is not limited and may be, for example, greater than or equal to 0.5 mm and less than or equal to 1.5 mm. The number of the perforations 114 is not limited and may be one or two or more. For example, a plurality of the perforations 114 may be provided along the circumference of the cooling segment 106.

The amount of outside air introduced through the perforations 114 is preferably lower than or equal to 85vol% with respect to the volume of the entire gas inhaled by a user and more preferably lower than or equal to 80vol%. When the percentage of the amount of outside air is lower than or equal to 85vol%, it is possible to sufficiently suppress a reduction in flavor resulting from dilution with outside air. This also called ventilation in other words. A lower limit of the range of ventilation percentage is preferably higher than or equal to 55vol% and more preferably higher than or equal to 60vol% from the viewpoint of cooling capability.

In some embodiments, the generated aerosol can decrease by a temperature of 10°C or more when the aerosol is inhaled by a user through the cooling segment. In another mode, the temperature can decrease by 15°C or more. Further in another mode, the temperature can decrease by 20°C or more.

The cooling segment can be formed in a rod shape of which the axial length is, for example, greater than or equal to 7 mm and less than or equal to 30 mm. For example, the axial length of the cooling segment may be 20 mm.

In some embodiments, the cooling segment has substantially a circular shape as a sectional shape in the axial direction, the circumferential length preferably ranges from 16 mm to 25 mm, more preferably ranges from 20 mm to 24 mm, and further preferably ranges from 21 mm to 23 mm.

<Center Hole Segment>

The center hole segment is made up of a filling layer having one or multiple hollow portions and an inner plug wrapper (inner wrapping paper) covering the filling layer. For example, as illustrated in Fig. 4(a), the center hole segment 107 is made up of a second filling layer 115 having a hollow portion, and a second inner plug wrapper 116 covering the second filling layer 115. The center hole segment 107 has a function to enhance the strength of the mouthpiece segment 103. The second filling layer 115 may be, for example, a rod with an inside diameter of greater than or equal to $\varphi$1.0 mm and less than or equal to $\varphi$5.0 mm, filled with cellulose acetate fibers with a high density and added with a plasticizer containing triacetin at 6mass% or higher and 20mass% or lower with respect to the mass of cellulose acetate and cured. Since the second filling layer 115 has a high packing density of fibers, air and aerosol flow through only the hollow portion and almost do not flow through the second filling layer 115 during inhalation. Since the second filling layer 115 in the center hole segment 107 is a fiber filling layer, a touch feeling from outside during use is less likely to make a user feel a sense of discomfort. The center hole segment 107 may be held in shape by heat molding without the second inner plug wrapper 116.

<Filter Segment>

The configuration of the filter segment is not limited and may be made up of one or multiple filling layers. For example, as illustrated in Fig. 4(a), in the filter segment 108, the outside of the first filling layer 117 may be wrapped with a first inner plug wrapper 118 (inner wrapping paper). An air-flow resistance per segment of the filter segment may be changed as needed by the amount, material, or the like of a filler filling the filter segment. When, for example, the filler is cellulose acetate fibers, it is possible to increase the air-flow resistance when the amount of cellulose acetate fibers filling the filter segment is increased. When the filler is cellulose acetate fibers, the packing density of cellulose acetate fibers may range from 0.13 g/cm$^3$ to 0.18 g/cm$^3$. At the same packing density as well, the thickness of cellulose acetate fibers used is preferably greater to develop a low air-flow resistance. The thickness of one of cellulose acetate fibers preferably ranges from five denier/filament to 20 denier/filament. Furthermore, from the viewpoint of high-speed manufacturing of the filter segment, the thickness further preferably ranges from seven denier/filament to 13 denier/filament. The air-flow resistance is a value measured with an air-flow resistance measuring device (product name: SODIMAX made by SODIM).

The circumferential length of the filter segment is not limited and preferably ranges from 16 mm to 25 mm, more preferably ranges from 20 mm to 24 mm, and further preferably ranges from 21 mm to 23 mm. The axial length of the filter segment can be selected within the range of 5 mm to 20 mm and is selected such that the air-flow resistance ranges from 10 mmH$_2$O/seg to 60 mmH$_2$O/seg. The axial length of the filter segment preferably ranges from 5 mm to 9 mm and more preferably ranges from 6 mm to 8 mm. The sectional shape of the filter segment is not limited and may be, for example, a circular shape, an elliptical shape, a polygonal shape, or the like. The filter segment may be directly added with a breakable capsule containing a flavoring agent, a flavor bead, or a flavoring agent.

As illustrated in Fig. 4(a), the center hole segment 107 and the filter segment 108 can be connected by an outer plug wrapper (outer wrapping paper) 119. The outer plug wrapper 119 may be, for example, a cylindrical paper. The tobacco-containing segment 102, the cooling segment 106, and the connected center hole segment 107 and filter segment 108 can be connected by the mouthpiece lining paper 120. These connections can be made by, for example, applying a paste, such as vinyl acetate paste, on the inner surface of the mouthpiece lining paper 120 and rolling the mouthpiece lining paper 120 with the three segments placed inside. These segments may be connected in multiple steps with multiple pieces of lining paper. As illustrated in Fig. 4(b), the first segment 104 may be fixed by the mouthpiece lining paper 120. As illustrated in Fig. 4(c), after the first segment 104 and the second segment 105 are connected by an outer wrapper 134, the tobacco-containing segment 102, the cooling segment 106, and the connected center hole segment 107 and filter segment 108 may be connected by the mouthpiece lining paper 120.

(Configuration of Heat-Not-Burn Flavor Inhaler)

The axial length of the heat-not-burn flavor inhaler according to the present embodiment is not limited and is preferably greater than or equal to 40 mm and less than or equal to 90 mm, more preferably greater than or equal to 50 mm and less than or equal to 75 mm, and further preferably greater than or equal to 50 mm and less than or equal to 60 mm. The circumferential length of the heat-not-burn flavor inhaler is preferably greater than or equal to 16 mm and less than or equal to 25 mm, more preferably greater than or equal to 20 mm and less than or equal to 24 mm, further preferably greater than or equal to 21 mm and less than or equal to 23 mm. For example, there may be a mode in which the length of the tobacco-containing segment is 20 mm, the length of the cooling segment is 20 mm, the length of the center hole segment is 8 mm, and the length of the filter segment is 7 mm. The length of the filter segment can be selected within the range greater than or equal to 4 mm and less than or equal to 20 mm. A selection is made such that the air-flow resistance of the filter segment at that time is greater than or equal to 10 mmH$_2$O/seg and less than or equal to 60 mmH$_2$O/seg. The lengths of these individual segments may be changed as needed according to manufacturing suitability, quality requirements, and the like. Furthermore, even when only the filter segment is disposed downstream of the cooling segment without using the center hole segment, it can also function as a heat-not-burn flavor inhaler.

[Heat-Not-Burn Flavor Inhaling System]

A heat-not-burn flavor inhaling system according to the present embodiment includes the heat-not-burn flavor inhaler according to the present embodiment, and a heating device including a heater that heats the tobacco-containing segment of the heat-not-burn flavor inhaler. Since the heat-not-burn flavor inhaling system according to the present embodiment includes the heat-not-burn flavor inhaler according to the present embodiment, a balance of components supplied to a user is uniform over a first half to a second half of use. The heat-not-burn flavor inhaling system according to the present embodiment may include another component in addition to the heat-not-burn flavor inhaler according to the present embodiment and the heating device.

Fig. 8 is an example of the heat-not-burn flavor inhaling system according to the present embodiment. The heat-not-burn flavor inhaling system illustrated in Fig. 8 includes the heat-not-burn flavor inhaler 101 according to the present embodiment, and a heating device 127 that heats the tobacco-containing segment of the heat-not-burn flavor inhaler 101 from outside. Fig. 8(a) illustrates a state before the heat-not-burn flavor inhaler 101 is inserted in the heating device 127. Fig. 8(b) illustrates a state where the heat-not-burn flavor inhaler 101 is inserted in the heating device 127 and heated. The heating device 127 illustrated in Fig. 8 includes a body 128, a heater 129, a metal tube 130, a battery unit 131, and a control unit 132. The body 128 has a cylindrical recess 133. The heater 129 and the metal tube 130 are disposed on the inner side of the recess 133 at a location corresponding to the tobacco-containing segment (mainly, the first segment) of the heat-not-burn flavor inhaler 101 inserted in the recess 133. The heater 129 may be an electrical resistance heater. Electric power is supplied from the battery unit 131 in response to instructions from the control unit 132 that executes temperature control, and the heater 129 performs heating. Heat emitted from the heater 129 is transferred to the tobacco-containing segment (mainly, the first segment) of the heat-not-burn flavor inhaler 101 through the metal tube 130 having a high heat conductivity.

Since Fig. 8(b) illustrates a schematic diagram, there is a gap between the outer periphery of the heat-not-burn flavor inhaler 101 and the inner periphery of the metal tube 130. Actually, it is desirable that there is no gap between the outer periphery of the heat-not-burn flavor inhaler 101 and the inner periphery of the metal tube 130 for the purpose of efficiently transferring heat. The heating device 127 heats the tobacco-containing segment (mainly, the first segment) of the heat-not-burn flavor inhaler 101 from outside. Alternatively, the heating device 127 may heat the tobacco-containing segment from inside. When the heating device 127 heats the tobacco-containing segment from inside, a plate-shaped, blade-shaped or columnar heater having stiffness is preferably used without using the metal tube 130. Examples of the heater include a ceramic heater in which molybdenum, tungsten, or the like is applied onto a ceramic substrate.

In the heat-not-burn flavor inhaling system according to the present embodiment, the heater preferably includes a first circumferential heater that heats an entire side of the columnar first segment and that heats part of a side of the columnar second segment or that does not heat the second segment. With this configuration, the heating temperature of the first segment including an aerosol generator having a high boiling point (low vapor pressure) is increased, and the heating temperature of the second segment including a flavor component having a low boiling point (high vapor pressure) is decreased, so a uniform balance of components supplied to a user over a first half to a second half of use can be provided. The first circumferential heater can heat the entire side of the columnar first segment and heat part of the side of the columnar second segment as in the case of, for example, the heater 129 illustrated in Fig. 8. In Fig. 8, the heater 129 heats part of the side of the second segment; however, the heater 129 does not need to heat the second segment. In this case, the second segment is heated by heat transfer or residual heat from the first segment.

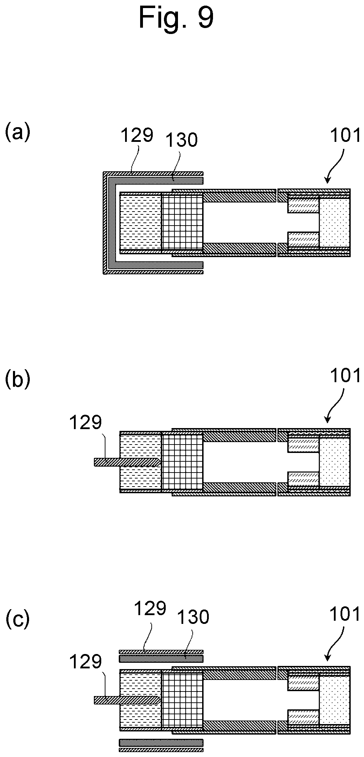

In the heat-not-burn flavor inhaling system according to the present embodiment, the heater preferably includes a second circumferential heater that heats an entire side and entire bottom of the columnar first segment and that heats at least part of a side of the columnar second segment or that does not heat the second segment. With such a configuration, as in the case of the above embodiment, it is possible to provide a uniform balance of components supplied to a user over a period from the first half to the second half of use. The second circumferential heater can heat the entire side and entire bottom of the columnar first segment and heat the side of the columnar second segment as in the case of, for example, the heater 129 illustrated in Fig. 9(a). In Fig. 9(a), the heater 129 heats the side of the second segment; however, the heater 129 does not need to heat the second segment. In this case, the second segment is heated by heat transfer or residual heat from the first segment.

In another heat-not-burn flavor inhaling system according to the present embodiment, the heater preferably includes an internal heater that heats an inside of the columnar first segment entirely in an axial direction and that heats an inside of the columnar second segment partially in an axial direction or that does not heat the second segment. With such a configuration, as in the case of the above embodiment, it is possible to provide a uniform balance of components supplied to a user over a period from the first half to the second half of use. The internal heater may heat the inside of the columnar first segment over an overall axial direction and does not need to heat the columnar second segment as in the case of, for example, the heater 129 illustrated in Fig. 9(b). In Fig. 9(b), the heater 129 does not heat the second segment, but the heater 129 may heat part of the inside of the second segment in the axial direction.

In another heat-not-burn flavor inhaling system according to the present embodiment, a heater may be a combination of the first or second circumferential heater and the internal heater. The heater may be a combination of a circumferential heater that heats an entire side of the columnar first segment and an entire side of the columnar second segments, and an internal heater that heats an inside of the columnar first segment entirely in an axial direction and does not heat the columnar second segment, as in the case of, for example, the heater 129 illustrated in Fig. 9(c).

The heating temperature of the heater preferably ranges from 200°C to 350°C. The heating temperature represents the temperature of the heater.

[Second Embodiment]

The present embodiment includes the following [1b] to [7b]. According to the present embodiment, it is possible to provide a heat-not-burn flavor inhaler and a heat-not-burn flavor inhaling system with which the delivery amount of component generated by heating is improved.

[1b] In a rod-like heat-not-burn flavor inhaler including a tobacco-containing segment including the tobacco sheet for a heat-not-burn flavor inhaler according to the present embodiment, and a mouthpiece segment,

the mouthpiece segment includes a filter segment having a filter element, and
the filter element is made of fibers of which a circumferential cross section has a Y-shape and a single fiber denier is greater than or equal to eight and less than or equal to 12.

[2b] In the heat-not-burn flavor inhaler according to [1b], a density of the filter element is greater than or equal to 0.09 g/cm$^3$ and less than or equal to 0.14 g/cm$^3$.

[3b] In the heat-not-burn flavor inhaler according to [1b] or [2b], a compression rate of change P in a filter element, expressed by the following expression (1), is higher than or equal to 88% and lower than or equal to 95%.

$$P = (D1 \times 100)/D2 \qquad (1)$$

P(%): compression rate of change
D1 (mm): a diameter of the filter element in a compression direction after the filter element is compressed under conditions that a compressive load per unit length in a long-axis direction is 3 N/mm and a compression time is 10 seconds such that the filter element deforms in a direction perpendicular to a ventilation direction
D2 (mm): an average diameter of the filter element before compression

[4b] In the heat-not-burn flavor inhaler according to any one of [1b] to [3b], a length of the filter element in a long-axis direction is greater than or equal to 5 mm and less than or equal to 20 mm.
[5b] In the heat-not-burn flavor inhaler according to any one of [1b] to [4b], an air-flow resistance in a long-axis direction of the filter segment is higher than or equal to 1.0 mmH$_2$O/mm and lower than or equal to 4.0 mmH$_2$O/mm.
[6b] In the heat-not-burn flavor inhaler according to any one of [1b] to [5b], a flavoring agent capsule is disposed inside the filter element.
[7b] A heat-not-burn flavor inhaling system made up of a heating device including a heater, a battery unit that is an electric power supply of the heater, and a control unit for controlling the heater, and the heat-not-burn flavor inhaler according to any one of [1b] to [6b], inserted so as to be in contact with the heater.

<Heat-Not-Burn Flavor Inhaler>

A heat-not-burn flavor inhaler according to one embodiment of the present invention (also simply referred to as "heat-not-burn flavor inhaler") is a rod-like heat-not-burn flavor inhaler including a tobacco-containing segment including the tobacco sheet for a heat-not-burn flavor inhaler according to the present embodiment, and a mouthpiece segment,

the mouthpiece segment includes a filter segment having a filter element, and
the filter element is made of fibers of which a circumferential cross section has a Y-shape and a single fiber denier is greater than or equal to eight and less than or equal to 12.

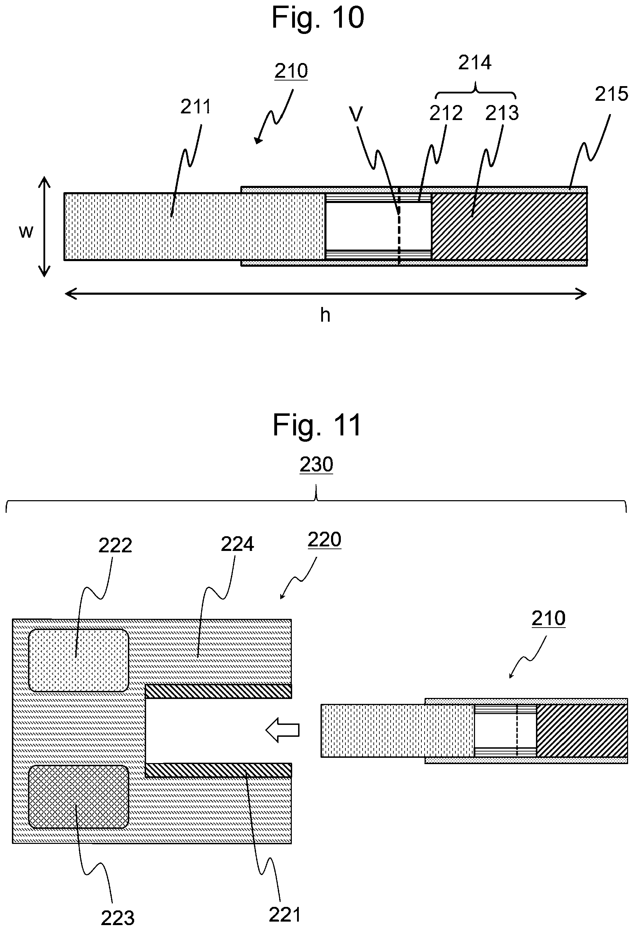

Fig. 10 is an example of the heat-not-burn flavor inhaler according to the present embodiment. Hereinafter, the heat-not-burn flavor inhaler will be described with reference to Fig. 10.
A rod-like heat-not-burn flavor inhaler 210 illustrated in Fig. 10 is a rod-like heat-not-burn flavor inhaler including a tobacco-containing segment 211, a mouthpiece segment 214, and a tipping paper 215 wrapping them, the mouthpiece segment 214 includes a cooling segment 212 and a filter segment 213 including a filter element, the cooling segment 212 is adjacent to and sandwiched by the tobacco-containing segment 211 and the filter segment 213 with respect to an axial direction (also referred to as "long-axis direction") of the heat-not-burn flavor inhaler 210, and perforations V are concentrically provided in a circumferential direction of the cooling segment 212. The perforations V are commonly holes for facilitating inflow of air from outside resulting from inhalation of a user, and it is possible to decrease the temperature of component and air flowing from the tobacco-containing segment 211 as a result of the inflow of air.
In the heat-not-burn flavor inhaler 210, a component generated as a result of heating the tobacco-containing segment 211 and the like passes through the mouthpiece segment, and is delivered to the inside of the mouth of a user. Examples of the components generated by heating include a flavor component derived from a flavoring agent, nicotine and tar derived from tobacco leaves, and an aerosol component derived from an aerosol generator. In the specification, an aerosol generator is a substrate for generating an aerosol.
The heat-not-burn flavor inhaler 210 preferably has a columnar shape that satisfies a shape of which an aspect ratio defined as follows is higher than or equal to one.

$$\text{Aspect ratio} = h/w$$

where w is the width of the bottom of the columnar body (in the specification, the width of the bottom adjacent to the tobacco-containing segment) and h is the height, it is preferable that $h \geq w$. In the specification, it is defined that the long-axis direction is a direction denoted by h. Therefore, even in the case where $w \geq h$, the direction indicated by h is referred to as long-axis direction for the sake of convenience. The shape of the bottom is not limited and may be a polygonal shape, a rounded-corner polygonal shape, a circular shape, an elliptical shape, or the like. The width w is a diameter when the bottom has a circular shape, a longitudinal diameter when the bottom has an elliptical shape, or the diameter of a circumcircle or the longitudinal diameter of a circumscribed ellipse when the bottom has a polygonal shape or a rounded-corner polygonal shape.

The length h in the long-axis direction of the heat-not-burn flavor inhaler 210 is not limited. The length h in the long-axis direction of the heat-not-burn flavor inhaler 210 is, for example, commonly greater than or equal to 40 mm, preferably greater than or equal to 45 mm, and more preferably greater than or equal to 50 mm. The axial length h of the heat-not-burn flavor inhaler 210 is commonly less than or equal to 100 mm, preferably less than or equal to 90 mm, and more preferably less than or equal to 80 mm.

The width w of the bottom of the columnar body of the heat-not-burn flavor inhaler 210 is not limited and is, for example, commonly greater than or equal to 5 mm and preferably greater than or equal to 5.5 mm. The width w of the bottom is commonly less than or equal to 10 mm, preferably less than or equal to 9 mm, and more preferably less than or equal to 8 mm.

The ratio between the length of the cooling segment and the length of the filter segment ((Cooling segment):(Filter segment)) in the length in the long-axis direction of the heat-not-burn flavor inhaler is not limited. From the viewpoint of the delivery amount of a flavoring agent, the ratio commonly ranges from 0.60:1.40 to 1.40:0.60, preferably ranges from 0.80:1.20 to 1.20:0.80, more preferably ranges from 0.85:1.15 to 1.15:0.85, further preferably ranges from 0.90:1.10 to 1.10:0.90, and particularly preferably ranges from 0.95:1.05 to 1.05:0.95.

When the ratio between the length of the cooling segment and the length of the filter segment falls within the above range, a balance is kept among a cooling effect, the effect of suppressing losses resulting from adhesion of generated vapor and aerosol to the inner wall of the cooling segment, and a function of the filter to adjust the amounts of air and a flavor, so it is possible to realize the effect of providing a good flavor. Particularly, when the cooling segment is long, formation of particles of an aerosol and the like is facilitated and a good flavor can be realized; however, if the cooling segment is too long, adhesion of a passage substance to an inner wall occurs.

The air-flow resistance in the long-axis direction per one stick of the heat-not-burn flavor inhaler 210 is not limited. From the viewpoint of inhalation easiness, the air-flow resistance is commonly higher than or equal to 8 mmH$_2$O, preferably higher than or equal to 10 mmH$_2$O, and more preferably higher than or equal to 12 mmH$_2$O, and the air-flow resistance is commonly lower than or equal to 100 mmH$_2$O, preferably lower than or equal to 80 mmH$_2$O, and more preferably lower than or equal to 60 mmH$_2$O.

The air-flow resistance is measured with, for example, a filter air-flow resistance measuring device made by Cerulean in compliant with an ISO standard method (ISO6565: 2015). The air-flow resistance indicates a difference in air pressure between a first end surface and a second end surface when air is flowed at a predetermined air flow rate (17.5 cc/min) from one end surface (first end surface) to the other end surface (second end surface) in a state where permeation of air does not occur at the side of the heat-not-burn flavor inhaler 210. The unit is commonly mmH$_2$O. It is known that the relationship between the air-flow resistance and the length of the heat-not-burn flavor inhaler is a proportional relationship in an ordinarily used length range (a length of 5 mm to 200 mm). When the length is doubled, the air-flow resistance of the heat-not-burn flavor inhaler is also doubled.

[Mouthpiece Segment]

The mouthpiece segment 214 may be a mode in which the mouthpiece segment 214 includes the filter segment 213 having a filter element, the filter element is not limited as long as the filter element is made of fibers of which a circumferential cross section has a Y-shape and a single fiber denier is greater than or equal to eight and less than or equal to 12, for example, as illustrated in Fig. 10, the mouthpiece segment 214 includes the cooling segment 212 and the filter segment 213 including the filter element, and the cooling segment 212 is adjacent to and sandwiched by the tobacco-containing segment 211 and the filter segment 213 with respect to the axial direction of the heat-not-burn flavor inhaler 210. Hereinafter, the filter segment 213 and the cooling segment 212 will be described in detail.

(Filter Segment)

The filter segment 213 includes a filter element. The filter element is made of fibers of which a circumferential cross section has a Y-shape and a single fiber denier is greater than or equal to eight and less than or equal to 12. The filter segment 213 is not limited as long as the filter segment 213 has a function of a general filter. Examples of the general function of the filter include adjusting the amount of air to be mixed when an aerosol and the like are inhaled, reducing a flavor, and reducing nicotine and tar; however, the filter does not need to have all of these functions. In a heat-not-burn flavor inhaling system that tends to have a smaller amount of component generated and a lower packing fraction of tobacco filler as compared to a cigarette product, it is also one of important functions to reduce falling of tobacco filler while suppressing a filtering function.

The shape of the filter segment 213 is not limited and may adopt a known shape. The shape of the filter segment 213 may be commonly a circular columnar shape and may be configured in the following modes.

The circumferential sectional shape of the filter segment 213 is substantially a circular shape, and the diameter of the circle can be changed as needed according to the size of a product. The diameter of the circle is commonly greater than or equal to 4.0 mm and less than or equal to 9.0 mm, preferably greater than or equal to 4.5 mm and less than or equal to 8.5 mm, and more preferably greater than or equal to 5.0 mm and less than or equal to 8.0 mm. When the circumferential section is not in a circular shape, a diameter of a circle having the same area as the area of the section is applied as the diameter.

The circumferential length of the circumferential sectional shape of the filter segment 213 can be changed as needed according to the size of a product. The circumferential length of the circumferential sectional shape of the filter segment 213 is commonly greater than or equal to 14.0 mm and less than or equal to 27.0 mm, preferably greater than or equal to 15.0 mm and less than or equal to 26.0 mm, and more preferably greater than or equal to 16.0 mm and less than or equal to 25.0 mm.

The length of the filter segment 213 can be changed as needed according to the size of a product. The length in the long-axis direction of the filter segment 213 is commonly greater than or equal to 15 mm and less than or equal to 35 mm, preferably greater than or equal to 17.5 mm and less than or equal to 32.5 mm, and more preferably greater than or equal to 20.0 mm and less than or equal to 30.0 mm.

The shape and dimensions of the filter element can be adjusted as needed such that the shape and dimensions of the filter segment 213 fall within the above ranges. The length in the long-axis direction of the filter element may be changed as needed according to the size of a product and is commonly greater than or equal to 3 mm and less than or equal to 30 mm, preferably greater than or equal to 5 mm and less than or equal to 20 mm, further preferably greater than or equal to 8 mm and less than or equal to 18 mm, and furthermore preferably greater than or equal to 10 mm and less than or equal to 15 mm from the viewpoint of making it possible to obtain a desired hardness.

The air-flow resistance in the long-axis direction of the filter segment 213 is not limited and is commonly higher than or equal to 1.0 $mmH_2O$/mm and lower than or equal to 4.0 $mmH_2O$/mm from the viewpoint of ease of inhalation. Particularly, when the filter element includes a flavoring agent capsule (described later), the air-flow resistance is preferably higher than or equal to 1.5 $mmH_2O$/mm and lower than or equal to 4.0 $mmH_2O$/mm from the viewpoint of ease of inhalation. In this case, when the filter element further contains a flavor agent (described later) and particularly, contains a crystalline substance, such as menthol, as a flavor agent, the air-flow resistance is more preferably higher than or equal to 2.5 $mmH_2O$/mm and lower than or equal to 3.6 $mmH_2O$/mm; whereas, when the filter element does not contain a flavor agent, the air-flow resistance is more preferably higher than or equal to 1.9 $mmH_2O$/mm and lower than or equal to 3.0 $mmH_2O$/mm. When the filter element does not include a flavoring agent capsule (described later), the air-flow resistance is preferably higher than or equal to 1.3 $mmH_2O$/mm and lower than or equal to 2.4 $mmH_2O$/mm from the viewpoint of ease of inhalation irrespective of whether a flavoring agent is contained. These conditions of air-flow resistance may also be applied as the conditions of air-flow resistance in the ventilation direction of the filter element.

The air-flow resistance is measured with, for example, a filter air-flow resistance measuring device made by Cerulean in compliant with an ISO standard method (ISO6565). The air-flow resistance of the filter segment 213 indicates a difference in air pressure between a first end surface and a second end surface when air is flowed at a predetermined air flow rate (17.5 cc/min) from one end surface (first end surface) to the other end surface (second end surface) in a state where permeation of air does not occur at the side of the filter segment 213. The unit is commonly $mmH_2O$. It is known that the relationship between the air-flow resistance of the filter segment 213 and the length of the filter segment 213 is a proportional relationship in an ordinarily used length range (a length of 5 mm to 200 mm). When the length is doubled, the air-flow resistance of the filter segment 213 is also doubled.

The mode of the filter segment 213 may be a plain filter including a single filter segment, a multi-segment filter including a plurality of filter segments, such as a dual filter and a triple filter, or the like.

The filter segment 213 can be manufactured with a known method. When, for example, a synthetic fiber, such as cellulose acetate tow, is used as the material of the filter element, the filter segment 213 can be manufactured with a method in which a polymer solution including a polymer and a solvent is spun and the spun yarn is crimped. The method can be, for example, the method described in International Publication No. 2013/067511.

In manufacturing the filter segment 213, regulating air-flow resistance and adding additives (known adsorbent, flavoring agent (for example, menthol), granular activated carbon, flavoring agent holder, and the like) to the filter element can be designed as needed.

As long as the filter element that is a component of the filter segment 213 has a Y-shape in the circumferential cross section and is made of fibers having a single fiber denier of greater than or equal to eight and less than or equal to 12, the filter element is not limited. For example, the one obtained by working tow, such as cellulose acetate tow made of fibers having a Y-shape in the circumferential cross section, into a circular columnar shape can be used.

The shape of the circumferential cross section of fibers that make up a tow is a Y-shape. When a tow having a Y-fiber shape is used, as compared to a case where a tow having a general fiber shape, such as a circular shape, is used, the fiber shape is complex. Therefore, a filter segment that excels in delivery amount is more easily obtained. Particularly, a filter segment that has a high component delivery amount and a desired hardness can be manufactured with a small amount of use, that is, controlled costs.

A single fiber denier (g/9000 m) of fibers is not limited as long as the single fiber denier is greater than or equal to eight and less than or equal to 12 and may be greater than or equal to nine and less than or equal to 11 from the viewpoint of improvement in the delivery amount of a component generated by heating. When the single fiber denier of fibers becomes less than the range, the structure of fibers that make up the filter element is too dense and, as a result, the delivery amount of a component reduces; whereas, when the single fiber denier of fibers becomes greater than the range, the structure of fibers that make up the filter element is too sparse and, as a result, a sufficient hardness is not obtained. A total fiber denier (g/9000 m) of fibers is not limited; however, the total fiber denier may be greater than or equal to 12000 and less than or equal to 35000 and preferably higher than or equal to 15000 and less than or equal to 30000 from the viewpoint of improvement in the delivery amount of a component generated by heating. These single fiber denier and total fiber denier are particularly preferable when the circumference of the mouthpiece segment is 22 mm. In the case of a filter filled with fibers, triacetin may be added in amount higher than or equal to 5wt% and lower than or equal to 10wt% to a total fiber weight to improve filter hardness.

A manufacturing method for fibers having a Y-shape in circumferential cross section is not limited. When, for example, acetate fibers are manufactured, a fiber-shaped bundle can be manufactured by manufacturing acetate flakes (acetyl cellulose) via oxidation of pulp raw material, then dissolving (doping) acetate flakes into acetone with a dissolver, and spinning the acetate flakes. In this spinning step, the circumferential cross section can be made as a Y-shape by changing the shape of nozzle mouthpiece, and the thickness (filament denier) of fibers can be changed by changing a nozzle hole diameter. After that, a total denier is determined according to a needed air-flow resistance. Thus, the number of bundled yarn ((Total denier) ÷ (Filament denier) is determined. Spinning is performed by using a needed number of spinning rooms. Spun and bundled acetate fibers are subjected to a uniform corrugated shape (crimping) in a crimping machine. A tow flowing in a ribbon shape can be stacked in layers while being traversed in a baler.

The density of the filter element (particularly, when a flavoring agent capsule (described later) is contained, the density in a state excluding the flavoring agent capsule) is not limited; however, from the viewpoint of making it possible to obtain a desired hardness, the density is commonly greater than or equal to 0.09 g/cm$^3$ and less than or equal to 0.25 g/cm$^3$, preferably greater than or equal to 0.09 g/cm$^3$ and less than or equal to 0.20 g/cm$^3$, more preferably greater than or equal to 0.09 g/cm$^3$ and less than or equal to 0.14 g/cm$^3$, and further preferably greater than or equal to 0.11 g/cm$^3$ and less than or equal to 0.14 g/cm$^3$.

The compression rate of change P of the filter element, expressed by the expression (1), is one of indices indicating a hardness and is not limited; however, from the viewpoint of making it possible to obtain a desired hardness, the compression rate of change P is commonly higher than or equal to 85% and lower than or equal to 98%, preferably higher than or equal to 88% and lower than or equal to 95%, and further preferably higher than or equal to 90% and lower than or equal to 93%. A method of measuring the compression rate of change P is not limited. The compression rate of change P may be measured with, for example, SODIM-H Hardness module made by Sodim SAS company. The numeric value can be adjusted by changing the density and material of the filter element.

$$P = (D1 \times 100)/D2 \qquad (1)$$

P(%): compression rate of change
D1 (mm): a diameter of the filter element in a compression direction after the filter element is compressed under conditions that a compressive load per unit length in a long-axis direction is 3 N/mm and a compression time is 10 seconds such that the filter element deforms in a direction perpendicular to a ventilation direction (in the case of a circular columnar shape, a circumferential direction)
D2 (mm): an average diameter of the filter element before compression

The compression rate of change is one of indices indicating the hardness of the filter element, so the compression rate of change is also referred to as "hardness" in the specification.

The filter element may contain a component, such as a flavor material, in addition to a flavoring agent capsule (described later). Examples of the flavor agent include menthol, spearmint, peppermint, fenugreek, clove and medium-chain triglyceride (MCT), and menthol is preferable. One type of these components may be used solely or two or more types may be used in selected combination at a selected ratio.

The content of a flavor agent (particularly menthol) in the filter element (except the flavor agent in the flavoring agent capsule (described later)) is not limited and is commonly higher than or equal to 0.5wt% and lower than or equal to 15wt%, preferably higher than or equal to 3wt% and lower than or equal to 10wt%, and further preferably higher than or equal to 10wt% and lower than or equal to 5wt%.

In the filter element, a breakable additive releasing container (for example, a flavoring agent capsule) including a breakable outer shell, such as gelatin, may be disposed. The mode of the flavoring agent capsule (which may also be referred to as "additive releasing container" in the technical field) is not limited. A known mode may be adopted. The mode of the capsule may be, for example, a breakable additive releasing container including a breakable outer shell, such as gelatin. In this case, when the flavoring agent capsule is broken by the user before use, during use, or after use by the user of the flavor inhaler, the flavoring agent capsule releases liquid or substance (commonly, flavor agent) contained in the flavoring agent capsule. Subsequently, the liquid or the substance is transferred by the smoke of tobacco while the flavor inhaler is being used, and is transferred to an ambient environment after use.

The form of the additive releasing container is not limited. Examples of the form of the flavoring agent capsule include an easily breakable flavoring agent capsule and the shape of the flavoring agent capsule is preferably spherical. An additive contained in the flavoring agent capsule may include the above-described selected additive and particularly preferably includes a flavor agent and activated carbon. One or more kinds of materials that help filtering smoke may be added as an additive. The form of the additive is not limited and is commonly liquid or solid. Using a capsule containing an additive is known in the technical field. An easily breakable flavoring agent capsule and its manufacturing method are known in the technical field.

The flavor agent may be, for example, menthol, spearmint, peppermint, fenugreek, clove, medium-chain triglyceride (MCT), or the like. The flavor agent may be menthol, or menthol and the like, or a combination of these materials.

In a case where a flavoring agent capsule is used, when the single fiber denier of fibers that make up the above-described filter element is greater than the upper limit of the above-described range, spread of exudate of a component released from the flavoring agent capsule to the filter tends to be insufficient; whereas, when the single fiber denier is less than the lower limit, spread of exudate to the filter is excessively facilitated, so the component delivery amount tends to be excessively reduced.

The filter segment 213 may include a wrapping paper (filter plug wrapping paper) that wraps a filter element and the like from the viewpoint of improvement in strength and structural stiffness. The mode of wrapping paper is not limited and may include a joint including one or more lines of an adhesive. The adhesive may include a hot-melt adhesive. In addition, the hot-melt adhesive can contain polyvinyl alcohol. When the filter segment is made up of two or more segments, a wrapping paper preferably wraps these two or more segments together.

The material of the wrapping paper is not limited. A known material may be used. Also, the material of the wrapping paper may contain a filler, such as calcium carbonate, or the like.

The thickness of the wrapping paper is not limited. The thickness of the wrapping paper is commonly greater than or equal to 20 $\mu$m and less than or equal to 140 $\mu$m, preferably greater than or equal to 30 $\mu$m and less than or equal to 130 $\mu$m, and more preferably greater than or equal to 30 $\mu$m and less than or equal to 120 $\mu$m.

The basis weight of the wrapping paper is not limited. The basis weight of the wrapping paper is commonly greater than or equal to 20 gsm and less than or equal to 100 gsm, preferably greater than or equal to 22 gsm and less than or equal to 95 gsm, and more preferably greater than or equal to 23 gsm and less than or equal to 90 gsm.

The wrapping paper may be coated or not coated. From the viewpoint of imparting a function other than strength or structural stiffness, the wrapping paper is preferably coated with a desired material.

The filter segment 213 may further include a center hole segment having one or multiple hollow portions. The center hole segment is commonly disposed on the cooling segment side with respect to the filter element and preferably disposed adjacent to the cooling segment.

The center hole segment is made up of a filling layer having one or multiple hollow portions and an inner plug wrapper (inner wrapping paper) covering the filling layer. For example, the center hole segment is made up of a filling layer having a hollow portion and an inner plug wrapper covering the filling layer. The center hole segment has a function to enhance the strength of the mouthpiece segment. The filling layer may be, for example, a rod with an inside diameter of greater than or equal to $\varphi$1.0 mm and less than or equal to $\varphi$5.0 mm, filled with cellulose acetate fibers with a high density and added with a plasticizer containing triacetin at 6mass% or higher and 20mass% or lower with respect to the mass of cellulose acetate and cured. Since the filling layer has a high packing density of fibers, air and aerosol flow through only the hollow portion and almost do not flow through the filling layer during inhalation. Since the filling layer in the center hole segment is a fiber filling layer, a touch feeling from outside during use is less likely to make a user feel a sense of discomfort. The center hole segment may be held in shape by heat molding without the inner plug wrapper.

The center hole segment and the filter element may be connected by, for example, an outer plug wrapper (outer wrapping paper). The outer plug wrapper may be, for example, a cylindrical paper. The tobacco-containing segment 211, the cooling segment 212, and the connected center hole segment and filter element may be connected by, for example, a mouthpiece lining paper. Connection of them may be performed by, for example, applying paste, such as vinyl acetate paste, on the inner surface of the mouthpiece lining paper, putting the tobacco-containing segment 211, the cooling segment 212, and the connected center hole segment and filter element in the mouthpiece lining paper, and rolling the mouthpiece lining paper. These may be connected separately with a plurality of pieces of lining paper multiple times.

(Cooling Segment)

The cooling segment 212 is a rod member adjacent to and sandwiched by the tobacco-containing segment and the filter segment and that commonly has a cavity of which the circumferential cross section of a cylinder or the like is hollow (cavity).

The cooling segment 212 may have perforations V (in the technical field, also referred to as "ventilation filter (Vf)") in the circumferential direction and concentrically.

When an aerosol generator is used in the tobacco-containing segment, vapor containing an aerosol generator and a tobacco flavor component generated as a result of heating a tobacco rod contacts with air from outside to decrease in temperature and liquefy, with the result that generation of an aerosol can be facilitated.

When the perforations V present concentrically are regarded as one perforation group, the number of perforation groups may be one or may be two or more. When the number of perforation groups is two or more, from the viewpoint improvement in the delivery amount of a component generated by heating, a perforation group is preferably not provided in a region shorter than 4 mm in a direction toward the cooling segment from a boundary between the cooling segment and the filter segment.

When the heat-not-burn flavor inhaler 210 is in a mode in which the tobacco-containing segment 211, the cooling segment 212, and the filter segment 213 are wrapped with the tipping paper 215, perforations are preferably provided in the tipping paper 215 at locations just above the perforations V provided in the cooling segment 212. When the thus configured heat-not-burn flavor inhaler 210 is manufactured, the tipping paper 215 provided with perforations that overlap the perforations V may be prepared for wrapping. From the viewpoint of ease of manufacturing, preferably, after the heat-not-burn flavor inhaler 210 is manufactured by using the cooling segment 212 with no perforation V, holes that extend through the cooling segment 212 and the tipping paper 215 at the same time are perforated.

From the viewpoint of improving the delivery amount of a component generated by heating, the region in which the perforations V are present is preferably a region 4 mm or more distant, more preferably a region 4.5 mm or more distant, further preferably a region 5 mm or more distant, and particularly preferably 5.5 mm or more distant from the boundary between the cooling segment 212 and the filter segment 213 in the direction toward the cooling segment. From the viewpoint of ensuring a cooling function, the region is preferably a region 15 mm or less distant, more preferably 10 mm or less distant, and further preferably a region 7 mm or less distant from the boundary between the cooling segment 212 and the filter segment 213 in the direction toward the cooling segment.

From the viewpoint of improving the delivery amount of a component generated by heating, the region in which the perforations V are present is preferably a region 22 mm or more distant, preferably a region 23.5 mm or more distant, preferably a region 24 mm or more distant, and more preferably a region 25 mm or more distant from the inhalation port end of the heat-not-burn flavor inhaler in a direction toward the cooling segment. From the viewpoint of ensuring a cooling function, the region is preferably a region 38 mm or less distant, more preferably a region 36.5 mm or less distant, further preferably a region 33 mm or less distant from the inhalation port end of the heat-not-burn flavor inhaler in a direction toward the cooling segment.

Assuming that the boundary between the cooling segment 212 and the tobacco-containing segment 211 is a reference, when the axial length of the cooling segment 212 is greater than or equal to 20 mm, from the viewpoint of ensuring a cooling function, the region in which the perforations V are present is preferably a region 2 mm or more distant, more preferably a region 3.5 mm or more distant, and further preferably a region 7 mm or more distant from the boundary between the cooling segment 212 and the tobacco-containing segment 211 in a direction toward the cooling segment. From the viewpoint of improving the delivery amount of a component generated by heating, the region is preferably 18 mm or less distant, more preferably a region 16.5 mm or less distant, further preferably 15 mm or less distant, and particularly preferably a region 14.5 mm or less distant from the boundary between the cooling segment 212 and the tobacco-containing segment 211 in a direction toward the cooling segment.

The diameter of each perforation V is not limited and is preferably greater than or equal to 100 μm and less than or equal to 1000 μm and more preferably greater than or equal to 300 μm and less than or equal to 800 μm. Each

perforation preferably has substantially a circular shape or substantially an elliptical shape, and the diameter in the case of the elliptical shape means a longitudinal diameter.

The length in the long-axis direction of the cooling segment can be changed as needed according to the size of a product and is commonly greater than or equal to 15 mm and preferably greater than or equal to 20 mm, and the length in the long-axis direction of the cooling segment is commonly less than or equal to 40 mm, preferably less than or equal to 35 mm, and more preferably less than or equal to 30 mm. When the length in the long-axis direction of the cooling segment is greater than or equal to the lower limit, it is possible to obtain a good flavor while ensuring a sufficient cooling function. When the length in the long-axis direction of the cooling segment is less than or equal to the upper limit, it is possible to reduce losses due to adhesion of generated vapor and aerosol to the inner wall of the cooling segment.

When a cooling sheet or the like for cooling fills the cooling segment 212, the entire surface area of the cooling segment 212 is not limited and may be, for example, greater than or equal to 150 mm$^2$/mm and less than or equal to 1000 mm$^2$/mm. The surface area is a surface area of the cooling segment 212 per length (mm) in the ventilation direction. The total surface area of the cooling segment 212 is preferably greater than or equal to 200 mm$^2$/mm and more preferably greater than or equal to 250 mm$^2$/mm, while the total surface area of the cooling segment 212 is preferably less than or equal to 600 mm$^2$/mm and more preferably less than or equal to 400 mm$^2$/mm.

The internal structure of the cooling segment 212 desirably has a large total surface area. Therefore, in a preferred embodiment, the cooling segment 212 may be provided with ridges and grooves to form channels and then may be made up of a sheet of a thin material, pleated, gathered, or folded. When there are many folds or pleats in a given volume of an element, the total surface area of the cooling segment increases.

The thickness of the constituent material of the cooling segment 212 is not limited and, for example, may be greater than or equal to 5 $\mu$m and less than or equal to 500 $\mu$m or may be greater than or equal to 10 $\mu$m and less than or equal to 250 $\mu$m.

[Tobacco-Containing Segment]

The mode of the tobacco-containing segment 211 is not limited as long as the tobacco-containing segment 211 includes the tobacco sheet for a heat-not-burn flavor inhaler according to the present embodiment, and may be a mode in which a tobacco filler including a tobacco sheet is wrapped with a wrapping paper. The tobacco filler may contain an aerosol generator. The aerosol generator is a substrate that generates an aerosol when heated, and examples of the aerosol generator include glycerin, propylene glycol, triacetin, 1,3-butanediol, and mixtures of them.

The content of the aerosol generator in the tobacco filler is not limited. From the viewpoint of sufficiently generating an aerosol and imparting a good flavor, the content of the aerosol-source material is commonly higher than or equal to 5wt% and preferably higher than or equal to 10wt% with respect to the total amount of the tobacco filler, and may be commonly lower than or equal to 50wt% and preferably higher than or equal to 15wt% and lower than or equal to 25wt%.

The tobacco-containing segment 211 may have a fitting part with a heater or the like for heating the heat-not-burn flavor inhaler.

The tobacco-containing segment 211 formed by wrapping a tobacco filler with a wrapping paper preferably has a columnar shape. In this case, the aspect ratio expressed by the height in the long-axis direction of the tobacco-containing segment 211 to the width of the bottom of the tobacco-containing segment 211 is preferably higher than or equal to one.

The shape of the bottom is not limited and may be a polygonal shape, a rounded-corner polygonal shape, a circular shape, an elliptical shape, or the like. The width is a diameter when the bottom has a circular shape, a longitudinal diameter when the bottom has an elliptical shape, or the diameter of a circumcircle or the longitudinal diameter of a circumscribed ellipse when the bottom has a polygonal shape or a rounded-corner polygonal shape. Preferably, the height of the tobacco filler that is a component of the tobacco-containing segment 211 ranges from about 10 mm to about 70 mm, and the width ranges from about 4 mm to about 9 mm.

The length of the tobacco-containing segment 211 in the long-axis direction can be changed as needed according to the size of a product. The length in the long-axis direction of the tobacco-containing segment 211 is commonly greater than or equal to 10 mm, preferably greater than or equal to 12 mm, more preferably greater than or equal to 15 mm, and further preferably greater than or equal to 18 mm, and the length in the long-axis direction of the tobacco-containing segment 211 is commonly less than or equal to 70 mm, preferably less than or equal to 50 mm, more preferably less than or equal to 30 mm, and further preferably less than or equal to 25 mm. The ratio of the length of the tobacco-containing segment 211 to the length h in the long-axis direction of the heat-not-burn flavor inhaler 210 is commonly higher than or equal to 10%, preferably higher than or equal to 20%, more preferably higher than or equal to 25%, and further preferably higher than or equal to 30%, and is commonly lower than or equal to 60%, preferably lower than or equal to 50%, more preferably lower than or equal to 45%, and further preferably lower than or equal to 40% from the viewpoint of balance between a delivery amount and an aerosol temperature.

(Wrapping Paper)

The configuration of wrapping paper is not limited and may be a general mode. For example, the configuration of wrapping paper may be the one containing pulp as a main component. Not only sheet is made from wood pulp, such as soft wood pulp and hard wood pulp, but also pulp may be made by mixing non-wood pulp generally used in wrapping paper for a tobacco product, such as flax pulp, cannabis pulp, sisal pulp, and esparto.

Chemical pulp, ground pulp, chemiground pulp, thermomechanical pulp, or the like obtained by kraft cooking, acid, neutral, alkali sulfite cooking, soda salt cooking, or the like may be used as the type of pulp.

During a sheet making process performed by a Fourdrinier paper machine, a cylinder paper machine, a cylinder-tanmo complex paper machine, or the like by using the above-described pulp, formation is uniformed to produce wrapping paper. Where necessary, a wet strength agent may be added to impart a wrapping paper with water resistance or a sizing agent may be added to adjust the printing condition of the wrapping paper. Furthermore, a paper internal agent, such as aluminum sulfate, various anionic, cationic, nonionic, or amphoteric yield enhancement agents, a freeness enhancement agent, and a paper strengthening agent, and a paper making additive, such as dye, a pH adjustor, an antifoamer, a pitch control agent, and a slime control agent, may be added.

The basis weight of the wrapping paper base paper is, for example, commonly greater than or equal to 20 gsm and preferably greater than or equal to 25 gsm. On the other hand, the basis weight is commonly less than or equal to 65 gsm, preferably less than or equal to 50 gsm, and more preferably less than or equal to 45 gsm.

The thickness of the wrapping paper having the above characteristics is not limited. From the viewpoint of stiffness, air permeability, and easiness of adjustment during paper manufacturing, the thickness of the wrapping paper is commonly greater than or equal to 10 μm, preferably greater than or equal to 20 μm, and more preferably greater than or equal to 30 μm, and the thickness of the wrapping paper is commonly less than or equal to 100 μm, preferably less than or equal to 75 μm, and more preferably less than or equal to 50 μm.

Examples of the shape of the wrapping paper of the heat-not-burn flavor inhaler may include a square shape and a rectangular shape.

When used as the wrapping paper for wrapping the tobacco filler (manufacturing the tobacco-containing segment), the length of one side may range from about 12 mm to about 70 mm, the length of another one side may range from 15 mm to 28 mm, the preferred length of another one side may range from 22 mm to 24 mm, and the further preferred length may be about 23 mm. When the tobacco filler is wrapped with a wrapping paper into a columnar shape, for example, one end of the wrapping paper in the w direction and its opposite-side end are overlapped with about 2 mm to be bonded into a columnar paper core shape, and the tobacco filler fills the inside. The size of the rectangular wrapping paper can be determined by the size of the completed tobacco-containing segment 211.

When the wrapping paper couples and wraps the tobacco-containing segment 211 and another member adjacent to the tobacco-containing segment 211 as in the case of a tipping paper, the length of one side may range from 20 mm to 60 mm and the length of another one side may range from 15 mm to 28 mm.

In addition to the above-described pulp, the wrapping paper may contain a filler. The content of the filler may be higher than or equal to 10wt% and lower than 60wt% and preferably higher than or equal to 15wt% and lower than or equal to 45wt% with respect to the total weight of the wrapping paper.

In the wrapping paper, the content of the filler is preferably higher than or equal to 15wt% and lower than or equal to 45wt% within the preferable basis weight range (greater than or equal to 25 gsm and less than or equal to 45 gsm).

Furthermore, when the basis weight is greater than or equal to 25 gsm and less than or equal to 35 gsm, the filler is preferably higher than or equal to 15wt% and lower than or equal to 45wt%. When the basis weight is greater than 35 gsm and less than or equal to 45 gsm, the filler is preferably higher than or equal to 25wt% and lower than or equal to 45wt%.

Examples of the filler include calcium carbonate, titanium dioxide, and kaolin. From the viewpoint of enhancing flavor and whiteness, or other viewpoints, calcium carbonate is preferably used.

The wrapping paper may be added with various aids in addition to base paper and a filler and may be added with, for example, a water resistance improving agent for improvement in water resistance. The water resistance improving agent includes a wet strength agent (WS agent) and a sizing agent. Examples of the wet strength agent include urea formaldehyde resin, melamine-formaldehyde resin, and polyamide-epichlorohydrin (PAE). Examples of the sizing agent include rosin soap, alkyl ketene dimer (AKD), alkenyl succinic anhydride (ASA), and high-saponification polyvinyl alcohol with a saponification degree of higher than or equal to 90%.

A paper strengthening agent may be added as an aid. Examples of the paper strengthening agent include polyacrylamide, cationic starch, oxidized starch, CMC, polyamide epichlorohydrin resin, and polyvinyl alcohol. Particularly, as for oxidized starch, it is known that air permeability improves when a very small amount is used (Japanese Unexamined Patent Application Publication No. 2017-218699).

The wrapping paper may be coated as needed.

A coating agent may be added to at least one side of the two front and back sides of the wrapping paper. The coating agent is not limited and is preferably a coating agent capable of forming a film on the surface of paper and reducing liquid permeability. Examples of the coating agent include polysaccharides, such as alginic acid and its salts (for example, sodium salt), and pectin, cellulose derivatives, such as ethyl cellulose, methyl cellulose, carboxymethyl cellulose, and nitrocellulose, and starches and their derivatives (for example, ether derivatives, such as carboxymethyl starch, hydroxyalkyl starch, and cationic starch, and ester derivatives, such as starch acetate, starch phosphate, and starch octenyl succinate).

[Tipping Paper]

The configuration of a tipping paper 215 is not limited and may be a general mode. For example, the configuration of the tipping paper may be the one containing pulp as a main component. Not only sheet is made from wood pulp, such as soft wood pulp and hard wood pulp, but also pulp may be made by mixing non-wood pulp generally used in wrapping paper for a tobacco article, such as flax pulp, cannabis pulp, sisal pulp, and esparto. One type of these pulps may be used solely or multiple types may be used in combination at a selected ratio.

The tipping paper 215 may be made up of a single sheet or may be made up of a plurality of sheets or more.

Chemical pulp, ground pulp, chemiground pulp, thermomechanical pulp, or the like obtained by kraft cooking, acid, neutral, alkali sulfite cooking, soda salt cooking, or the like may be used as the mode of pulp.

The tipping paper 215 may be manufactured with a manufacturing method (described later) or may be obtained by using a commercial product.

The shape of the tipping paper 215 is not limited and may be a square shape or a rectangular shape.

The basis weight of the tipping paper 215 is not limited. The basis weight is commonly greater than or equal to 32 gsm and less than or equal to 40 gsm, preferably greater than or equal to 33 gsm and less than or equal to 39 gsm, and more preferably greater than or equal to 34 gsm and less than or equal to 38 gsm.

The air permeability of the tipping paper 215 is not limited. The air permeability is commonly higher than or equal to 0 CORESTA Unit and lower than or equal to 30000 CORESTA Unit, and preferably higher than 0 CORESTA Unit and lower than or equal to 10000 CORESTA Unit. Air permeability is a value measured in compliant with ISO2965: 2009, and indicates the flow rate ($cm^3$) of gas that passes through an area 1 $cm^2$ per one minute when the pressure difference between both sides is 1 kPa. One CORESTA Unit (1 C.U.) is $cm^3/(min \cdot cm^2)$ under 1 kPa.

The tipping paper 215 may contain a filler in addition to the above-described pulp. Examples of the filler include a metal carbonate, such as calcium carbonate and magnesium carbonate, a metal oxide, such as titanium oxide, titanium dioxide, and aluminum oxide, a metal sulfate, such as barium sulfate and calcium sulfate, a metal sulfate, such as zinc sulfide, quartz, kaolin, talc, diatom earth, and gypsum. Particularly, the tipping paper 215 preferably contains calcium carbonate from the viewpoint of improving whiteness and opacity and increasing a heating rate. These fillers may be one type used solely or may be two or more types used in combination.

The tipping paper 215 may be added with various aids in addition to the above-described pulp and/or fillers and may have, for example, a water resistance improving agent for improvement. The water resistance improving agent includes a wet strength agent (WS agent) and a sizing agent. Examples of the wet strength agent include urea formaldehyde resin, melamine-formaldehyde resin, and polyamide-epichlorohydrin (PAE). Examples of the sizing agent include rosin soap, alkyl ketene dimer (AKD), alkenyl succinic anhydride (ASA), and high-saponification polyvinyl alcohol with a saponification degree of higher than or equal to 90%.

A coating agent may be added to at least one side of the two front and back sides of the tipping paper 215. The coating agent is not limited and is preferably a coating agent capable of forming a film on the surface of paper and reducing liquid permeability.

The configuration of the heat-not-burn flavor inhaler according to the present embodiment can be used in a heat-not-burn flavor inhaling system (described later), and may also be applied to a cigarette that accompanies combustion (cigarette).

[Manufacturing Method for Heat-Not-Burn Flavor Inhaler]

The above-described manufacturing method for a heat-not-burn flavor inhaler is not limited, and a known method may be applied. For example, manufacturing can be performed by rolling the tobacco-containing segment and the mouthpiece segment with the tipping paper.

<Heat-Not-Burn Flavor Inhaling System>

A heat-not-burn flavor inhaling system according to another embodiment of the present invention (also simply referred to as "heat-not-burn flavor inhaling system") is a heat-not-burn flavor inhaling system made up of a heating device including a heater, a battery unit that is an electric power supply of the heater, and a control unit for controlling the heater, and the heat-not-burn flavor inhaler inserted so as to be in contact with the heater.

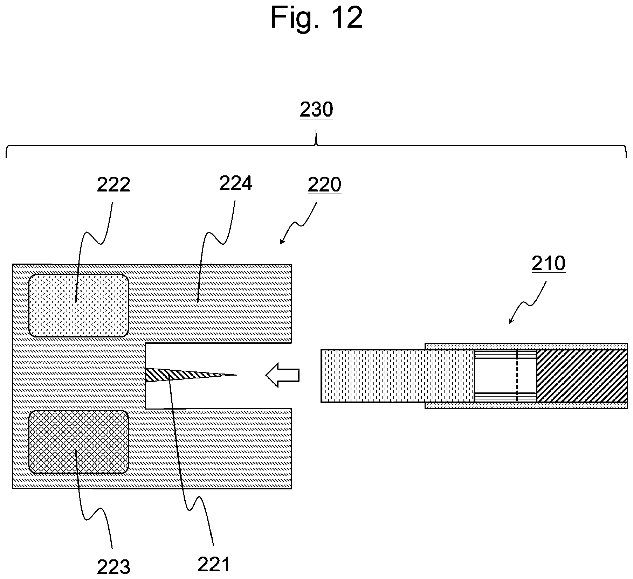

The mode of the heat-not-burn flavor inhaling system may be a mode in which, as illustrated in Fig. 11, the outer periphery of the heat-not-burn flavor inhaler 210 is heated or may be a mode in which, as illustrated in Fig. 12, heating is performed from the inside of the tobacco-containing segment 211 in the heat-not-burn flavor inhaler 210. The heating device 220 illustrated in Fig. 11 and Fig. 12 has an air introduction hole; however, the air introduction hole is not illustrated here. Hereinafter, a heat-not-burn flavor inhaling system 230 will be described with reference to Fig. 12. As for the heat-not-burn flavor inhaler 210 in Fig. 11 and Fig. 12, reference signs that indicate the components illustrated in Fig. 11 and Fig. 12 are partially omitted.

The heat-not-burn flavor inhaling system 230 is used in a manner such that the above-described heat-not-burn flavor inhaler 210 is inserted in the heater 221 disposed inside the heating device 220 so as to contact with the heater 221.

The heating device 220 includes a battery unit 222 and a control unit 223 inside, for example, a resin body 224.

When the heat-not-burn flavor inhaler 210 is inserted in the heating device 220, the outer periphery of the tobacco-containing segment 211 contacts with the heater 221 of the heating device 220, and finally the entire outer periphery of the tobacco-containing segment 211 and part of the outer periphery of the tipping paper contact with the heater 221.

The heater 221 of the heating device 220 produces heat under control of the control unit 223. When the heat is transferred to the tobacco-containing segment 211 of the heat-not-burn flavor inhaler 210, an aerosol generator, a flavor component, or the like contained in the tobacco filler of the tobacco-containing segment 211 volatilizes.

The heater 221 may be, for example, a sheet heater, a planar heater, or a tubular heater. A sheet heater is a flexible sheet-shaped heater. Examples of the sheet heater include a heater that includes a film (of which the thickness ranges from about 20 μm to about 225 μm) made of heat-resistant polymer, such as polyimide. A planar heater is a rigid planar heater (of which the thickness ranges from about 200 μm to about 500 μm). Examples of planar heater include a heater in which a resistance circuit is provided on a flat substrate and this part is regarded as a heat generating part. A tubular heater is a hollow or solid tubular heater (of which the thickness ranges from about 200 μm to about 500 μm). Examples of the tubular heater include a heater that has a resistance circuit on the outer periphery of a tube made of, for example, metal and this part is regarded as a heat generating part. Examples of the heater include a rod heater, a prism heater and a cone heater made of, for example, metal, which has a resistance circuit inside and this part is regarded as a heat generating part. The circumferential sectional shape of the tubular heater may be a circular shape, an elliptical shape, a polygonal shape, a rounded-corner polygonal shape, or the like.

When the outer periphery of the heat-not-burn flavor inhaler 210 is heated as illustrated in Fig. 11, the above-described sheet heater, planar heater, and tubular heater may be used. On the other hand, when heating is performed from the inside of the tobacco-containing segment 11 in the heat-not-burn flavor inhaler 210 as illustrated in Fig. 12, the above-described planar heater, columnar heater, prism heater, and cone heater may be used.

Where the length in the long-axis direction of the tobacco-containing segment 211 is L mm, the length in the long-axis direction of the heater 221 can fall within the range of L ± 5.0 mm. The length in the long-axis direction of the heater 221 is preferably greater than or equal to L mm from the viewpoint of sufficiently transferring heat to the tobacco-containing segment 211 and sufficiently volatilizing an aerosol generator, a flavor component, or the like contained in the tobacco filler, that is, aerosol delivery, and is preferably less than or equal to L + 0.5 mm, less than or equal to L + 1.0 mm, less than or equal to L + 1.5 mm, less than or equal to L + 2.0 mm, less than or equal to L + 2.5 mm, less than or equal to L + 3.0 mm, less than or equal to L + 3.5 mm, less than or equal to L + 4.0 mm, less than or equal to L + 4.5 mm, or less than or equal to L + 5.0 mm from the viewpoint of reducing generation of a component that has an undesirable influence on a flavor or the like.

A heating strength, that is, a heating time and a heating temperature of the heat-not-burn flavor inhaler 210 with the heater 221 can be set in advance for each heat-not-burn flavor inhaling system 230. When, for example, pre-heating is performed for a certain period of time after the heat-not-burn flavor inhaler 210 is inserted in the heating device 220, the heating strength can be set in advance such that heating is performed until the temperature of the outer periphery of a portion inserted in the heating device 220 in the heat-not-burn flavor inhaler 210 becomes X(°C) and then the temperature is kept at a certain temperature lower than or equal to X(°C).

The X(°C) is preferably higher than or equal to 80°C and lower than or equal to 400°C from the viewpoint of the delivery amount of a component and the like generated by heating. Specifically, the X(°C) can be set to 80°C, 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, or 400°C.

Due to heating with the heater 221, vapor containing a component derived from the aerosol generator, a component derived from a flavor component, and the like, and generated from the tobacco-containing segment 211 reaches into the oral cavity of a user through the mouthpiece segment 214 made up of the cooling segment 212, the filter segment 213, and the like.

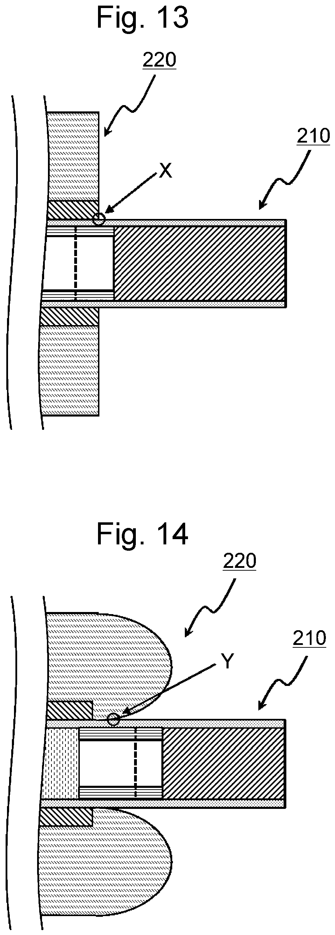

The perforations V provided in the cooling segment 212 are preferably present on an inhalation port end side with respect to an inhalation port end-side end of a region that contacts with the heating device 220 in the cooling segment 212 (a portion indicated by the arrow X in the drawing) as illustrated in Fig. 13 from the viewpoint of facilitating inflow of air from outside and reducing stagnation of a component generated by heating in the cooling segment 212. An insertion port of the heating device 220 for inserting the heat-not-burn flavor inhaler 210 may be tapered as illustrated in Fig. 14 to make it easy to insert the heat-not-burn flavor inhaler 210. In this case, the inhalation port end-side end of the region that contacts with the heating device 220 is a location of a portion indicated by the arrow Y in the drawing. As for the heat-not-burn flavor inhaler 210 in Fig. 13 and Fig. 14, reference signs that indicate the components illustrated in Fig. 10 to Fig. 12 are partially omitted.

[Third Embodiment]

The present embodiment includes the following [1c] to [13c]. According to the present embodiment, it is possible to provide a heat-not-burn flavor inhaler that includes a tobacco-containing segment that is excellent in balance between suppressing breakage and heat transfer efficiency.

[1c] A heat-not-burn flavor inhaler includes

a tobacco-containing segment including a tobacco sheet for a heat-not-burn flavor inhaler according to the present embodiment,
an adjacent member adjacent to the tobacco-containing segment, and
a roll wrapping material that rolls to wrap the tobacco-containing segment or a roll wrapping material that rolls to wrap the tobacco-containing segment and the adjacent member,
the roll wrapping material has a high heat transfer portion having a higher heat conductivity than a wrapped member with which the roll wrapping material contacts, and
the high heat transfer portion rolls to wrap an area near a downstream end of the tobacco-containing segment.

[2c] In the heat-not-burn flavor inhaler according to [1c], the high heat transfer portion rolls to wrap from an area near the downstream end of the tobacco-containing segment to an area near an upstream end of the adjacent member.
[3c] In the heat-not-burn flavor inhaler according to [1c] or [2c], the roll wrapping material is a tipping paper that connects the tobacco-containing segment with the adjacent member.
[4c] In the heat-not-burn flavor inhaler according to [1c], the roll wrapping material is a wrapping paper that directly rolls to wrap the tobacco sheet in the tobacco-containing segment.
[5c] In the heat-not-burn flavor inhaler according to any one of [1c] to [4c], the high heat transfer portion is made of a material that satisfies heat transfer characteristics of an expression (1),

$$Q_{dT} \geq 330 (W/°C) \qquad (1)$$

where $Q_{dT}$ is a heat transfer coefficient defined by the following expression calculated based on a cylindrical sample,
$Q_{dT} = K \times 2\pi L/\ln(r_2/r_1)$
K = (Thermal conductivity) (W/m/°C)
L = (Axial length of sample) (mm)
$r_2$ = (External radius of sample) (mm)
$r_1$ = (Internal radius of sample) (mm)

[6c] In the heat-not-burn flavor inhaler according to any one of [1c] to [5c], the high heat transfer portion is present at a portion heated by a heater of the tobacco-containing segment.
[7c] In the heat-not-burn flavor inhaler according to any one of [1c] to [6c], a region near a downstream end of the tobacco-containing segment is a region with a start point set to the downstream end and an end point set to a location at a 5% to 50% of an axial length of the tobacco-containing segment.
[8c] In the heat-not-burn flavor inhaler according to any one of [2c], [3c], and [5c] to [7c], a region near an upstream end of the adjacent member is a region with a start point set to the upstream end and an end point set to a location at 1% to 15% of an axial length of the adjacent member.
[9c] In the heat-not-burn flavor inhaler according to any one of [1c] to [8c], an axial length of the high heat transfer portion ranges from 3 mm to 10 mm.
[10c] In the heat-not-burn flavor inhaler according to any one of [1c] to [9c], the high heat transfer portion includes a metal selected from the group consisting of aluminum, stainless steel, gold, silver, and combinations of some of these materials.

[lie] In the heat-not-burn flavor inhaler according to any one of [1c] to [10c], the high heat transfer portion includes paper and the metal particles or metal sheet supported on the paper.

[12c] In the heat-not-burn flavor inhaler according to any one of [1c] to [11c], the adjacent member is a cooling member.

[13c] A heat-not-burn flavor inhaling system includes

the heat-not-burn flavor inhaler according to any one of [1c] to [12c], and

a heating device including a heater that heats a portion where the high heat transfer portion is rolled to be wrapped in the tobacco-containing segment of the heat-not-burn flavor inhaler.

1. Heat-Not-Burn Flavor Inhaler

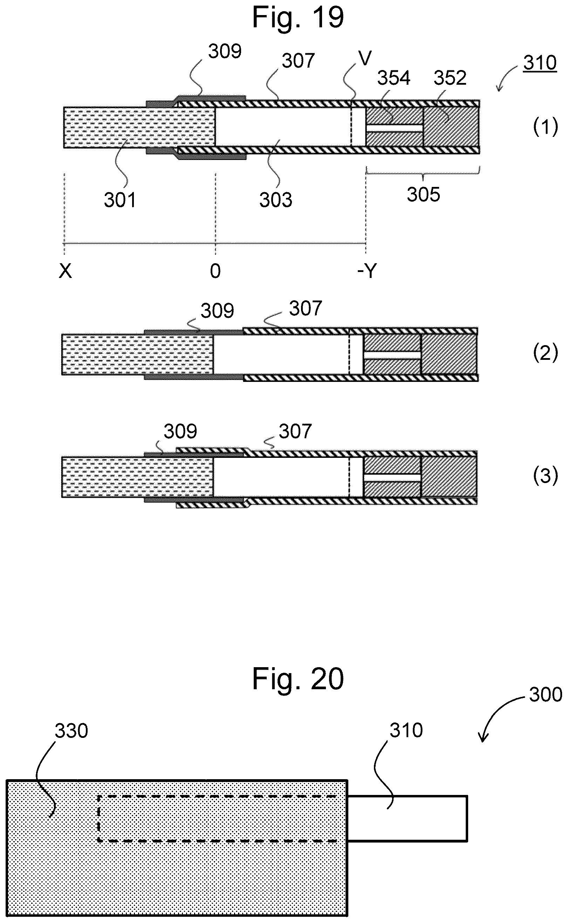

Fig. 19 illustrates some modes of the heat-not-burn flavor inhaler according to the present embodiment. In the drawing, 310 indicates a heat-not-burn flavor inhaler, 301 indicates a tobacco-containing segment, 303 indicates an adjacent member (preferably a cooling member) adjacent to the tobacco-containing segment, 305 indicates a mouthpiece, 352 indicates a filter, 354 indicates a center hole filter, 307 indicates a tipping paper, 309 indicates a roll wrapping material, and V indicates a ventilation. The mode illustrated in Fig. 19 directly heats a tobacco sheet, so it is also called heat-not-burn direct-heating flavor inhaler.

(1) Tobacco-Containing Segment

The tobacco-containing segment includes a tobacco sheet according to the present embodiment, and is substantially a circular columnar member for generating an inhaling flavor component contained in the tobacco sheet. The tobacco-containing segment includes a wrapping paper (wrapper) that wraps the tobacco sheet and its surroundings. The shape of the tobacco sheet filled in the wrapping paper is not limited and may be, for example, the sheet itself or the one obtained by shredding the sheet into a width of 0.8 mm to 1.2 mm. The sheet may be not shredded but gathered, folded, or formed in a spiral shape and filled in a wrapping paper to form a tobacco-containing segment. Alternatively, the sheet is shredded into strips and these are filled into a wrapping paper so as to be concentric or such that a longitudinal direction of each strip is parallel to a longitudinal direction of the tobacco-containing segment to form the tobacco-containing segment.

The packing density of the tobacco sheet is not limited and is commonly greater than or equal to 250 mg/cm$^3$ and preferably greater than or equal to 320 mg/cm$^3$ from the viewpoint of ensuring the characteristics of the heat-not-burn flavor inhaler and impart good smoke taste. The upper limit is commonly less than or equal to 800 mg/cm$^3$ and preferably less than or equal to 600 mg/cm$^3$. The length of the tobacco-containing segment 301 is not limited and preferably ranges from 15 mm to 25 mm. The diameter is not limited and preferably ranges from 6 mm to 8 mm.

The tobacco sheet may generate vapor when heated. A heating temperature is not limited and ranges from about 30°C to about 350°C. To facilitate generation of an aerosol, an aerosol source, such as polyols, may be added to the tobacco sheet. Examples of the polyols include glycerin, propylene glycol, and 1,3-butanediol. An additive amount of the aerosol source preferably ranges from 5wt% to 50wt% and more preferably ranges from 10wt% to 30wt% with respect to a dry weight of the tobacco sheet. Other than the above, a known flavoring agent or the like may be added to the tobacco sheet.

(2) Adjacent Member

An adjacent member 303 is a member adjacent on the downstream side to the tobacco-containing segment 301. In the present embodiment, downstream means a direction toward an inhalation port end. Examples of the adjacent member include a cooling member for cooling an aerosol, a support member for enhancing the strength of the overall device, and a mouthpiece (described later). In the present embodiment, the adjacent member 303 is preferably a cooling member.

The cooling member is a member for facilitating aerosolization by, for example, cooling an inhaling flavor component and vapor generated in the tobacco-containing segment 301. The cooling member may be a hollow paper core. The paper core is preferably made from a cardboard having higher stiffness than the wrapping paper or the tipping paper. The paper core may have ventilations V (perforations). A plurality of ventilations is preferably provided along the circumference of the paper core. A sheet gathered to enhance heat exchange efficiency may fill the inside of the cooling member. The dimensions of the cooling member are not limited. The length preferably ranges from 15 mm to 25 mm, and the diameter preferably ranges from 5.5 mm to 7.5 mm.

(3) Roll Wrapping Material

A roll wrapping material rolls to wrap a tobacco-containing segment or the tobacco-containing segment and an adjacent member. The roll wrapping material includes a high heat transfer portion having a higher heat conductivity than a wrapped member with which the roll wrapping material contacts. The heat-not-burn flavor inhaler having the above configuration excels in balance between suppressing breakage and heat transfer efficiency and increases the total amount of smoke. Examples of the material of the high heat transfer portion include a material of which the thermal conductivity is higher than or equal to 50 (W/m/°C). Specific examples of such a material include aluminum, iron, stainless steel, zinc, gold, and silver.

Heat conductivity from the roll wrapping material to the tobacco-containing segment fluctuates depending on the axial length or thickness of the high heat transfer portion, the diameter of the heat-not-burn flavor inhaler, or the like in addition to the thermal conductivity of a material used. Thus, the material of the high heat transfer portion may be selected so as to satisfy the heat transfer characteristics of the expression (1).

$$Q_{dT} \geq 330 (W/°C) \qquad (1)$$

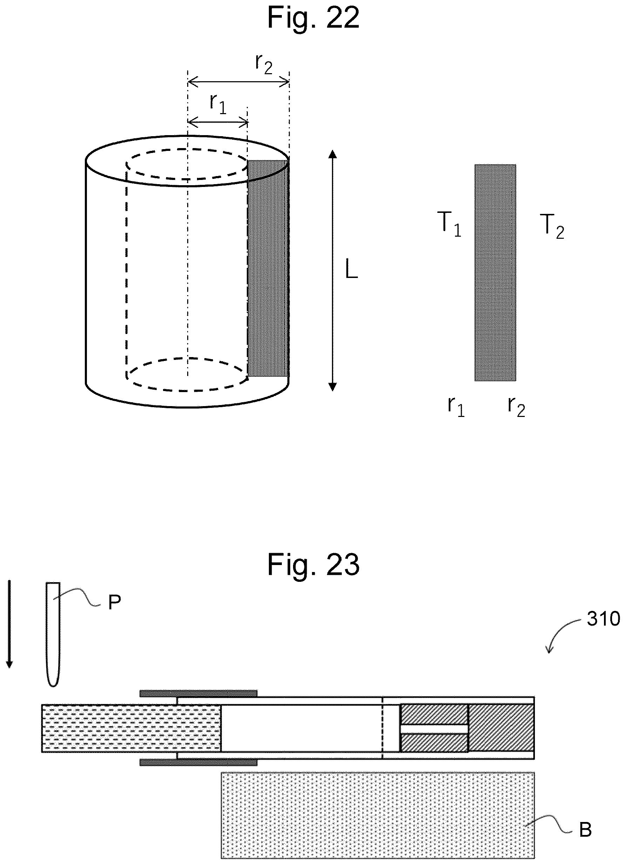

where $Q_{dT}$ is a heat transfer coefficient defined by the following expression calculated based on a cylindrical sample illustrated in Fig. 22.

$$Q_{dT} = K \times 2\pi L / \ln(r_2/r_1)$$

K = (Thermal conductivity) (W/m/°C)
L = (Axial length of sample) (mm)
$r_2$ = (External radius of sample) (mm)
$r_1$ = (Internal radius of sample) (mm)

Specifically, $Q_{dT}$ is defined as follows.

Fig. 22 is a cylindrical sample with an internal radius ri, an external radius $r_2$, and a height L, and the temperature of an inner wall is $T_1$, and the temperature of an outer wall is $T_2$. In this case, a heat transfer velocity Q (W) is obtained by using the expression (i) from Fourier's law. K is a thermal conductivity (W/m/°C), and Am is a logarithmic mean area ($m^2$).
[Formula 1]

$$Q = -Am\, K\frac{dT}{dr} \qquad (i)$$

When this expression is modified into the expression (ii) and both sides are integrated, the expression (iii) holds, and hereinafter can be modified to the expression (1). In other words, $Q_{dT}$ is a parameter obtained by dividing the heat transfer velocity Q (W) obtained in the model of Fig. 22, by a temperature difference between the inner wall and the outer wall.
[Formula 2]

$$\frac{-Q}{Am}\, dr = K\, dT \qquad (ii)$$

$$\frac{-Q}{Am}\int_{r_1}^{r_2} dr = K\int_{T_1}^{T_2} dT$$

$$\frac{-Q}{Am}(r_2-r_1) = K(T_2-T_1) \qquad \text{(iii)}$$

$$Q = K\,Am\,\frac{(T_1-T_2)}{(r_2-r_1)} \qquad \text{(iv)}$$

$$\frac{Q}{(T_1-T_2)} = \frac{K\,Am}{(r_2-r_1)} \qquad \text{(v)} \qquad Am = \frac{2\pi L(r_2-r_1)}{Ln(r_2/r_1)}$$

$$Q_{dT} = \frac{Q}{(T_1-T_2)} = \frac{K\,2\pi L}{Ln(r_2/r_1)} \qquad (1)$$

For example, in the case of a thin-rolled type of which the diameter of the heat-not-burn flavor inhaler is about 5 mm, when aluminum (K = 236 (W/m/°C)) is used, it is possible to satisfy the expression (1) in the following case.

[Table 2]

| K [1] W/m/°C | AXIAL LENGTH OF HIGH HEAT TRANSFER PORTION (mm) | CIRCUMFERENCE (mm) | THICKNESS OF HIGH HEAT TRANSFER PORTION μm | $Q_{dT}$ W/°c |
|---|---|---|---|---|
| 236 | 5 | 17 | 30 | 665 |
| 236 | 10 | 17 | 30 | 1330 |
| 236 | 15 | 17 | 30 | 1995 |
| 236 | 20 | 17 | 30 | 2660 |
| 236 | 30 | 17 | 30 | 3990 |
| 236 | 35 | 17 | 30 | 4665 |
| 236 | 5 | 17 | 60 | 331 |
| 236 | 10 | 17 | 60 | 661 |
| 236 | 15 | 17 | 60 | 992 |
| 236 | 20 | 17 | 60 | 1322 |
| 236 | 30 | 17 | 60 | 1984 |
| 236 | 35 | 17 | 60 | 2314 |
| 1) Handbook of Scientific Tables 2021 National Astronomical Observatory of Japan (Maruzen Publishing) | | | | |

In the case of a standard-rolled type of which the diameter of the heat-not-burn flavor inhaler is about 7 mm, it is possible to satisfy the expression (1) in the following case. Cases are shown in the following table together with a case where a material having a low heat conductivity is used.

[Table 3]

| | K [1] W/m/°C | AXIAL LENGTH OF HIGH HEAT TRANSFER PORTION (mm) | CIRCUMFERENCE (mm) | THICKNESS OF HIGH HEAT TRANSFER PORTION μm | $Q_{dT}$ W/°C |
|---|---|---|---|---|---|
| IRON | 83.5 | 10 | 22 | 30 | 610 |

(continued)

| | $K^{1)}$ W/m/ °C | AXIAL LENGTH OF HIGH HEAT TRANSFER PORTION (mm) | CIRCUMFERENCE (mm) | THICKNESS OF HIGH HEAT TRANSFER PORTION μm | $Q_{dT}$ W/°C |
|---|---|---|---|---|---|
| ZINC | 117 | 10 | 22 | 30 | 854 |
| ALUMINUM | 236 | 10 | 22 | 30 | 1723 |
| | | 5 | 22 | 30 | 862 |
| | | 15 | 22 | 30 | 2585 |
| | | 20 | 22 | 30 | 3446 |
| | | 30 | 22 | 30 | 5170 |
| | | 35 | 22 | 30 | 6031 |
| GOLD | 319 | 10 | 22 | 30 | 2329 |
| COPPER | 403 | 10 | 22 | 30 | 2943 |
| SILVER | 428 | 10 | 22 | 30 | 3125 |
| PAPER | 0.05 | 10 | 22 | 30 | 0.37 |
| GLASS | 1.05 | 10 | 22 | 30 | 8 |
| 1) Handbook of Scientific Tables 2021 National Astronomical Observatory of Japan (Maruzen Publishing) | | | | | |

From above, in one mode, $Q_{dT}$ is preferably greater than or equal to 650 (W/°C) or greater than or equal to 850 (W/°C). The high heat transfer portion is selected from the group consisting of aluminum, stainless steel, gold, silver, and combinations of some of these materials.

The roll wrapping material may be made up of only the high heat transfer portion and may include another material. For example, the roll wrapping material may be a laminated body (laminate) in which metal particles or metal sheet is supported on paper or polymer sheet. The roll wrapping material may be a composite in which particles of a metal, a ceramic, or the like having a high heat conductivity are dispersed in a matrix of paper, polymer, or the like. Alternatively, the roll wrapping material may be a sheet obtained by joining a sheet of paper, polymer, or the like with a sheet of a metal, a ceramic, or the like having a high heat conductivity at ends or near ends.

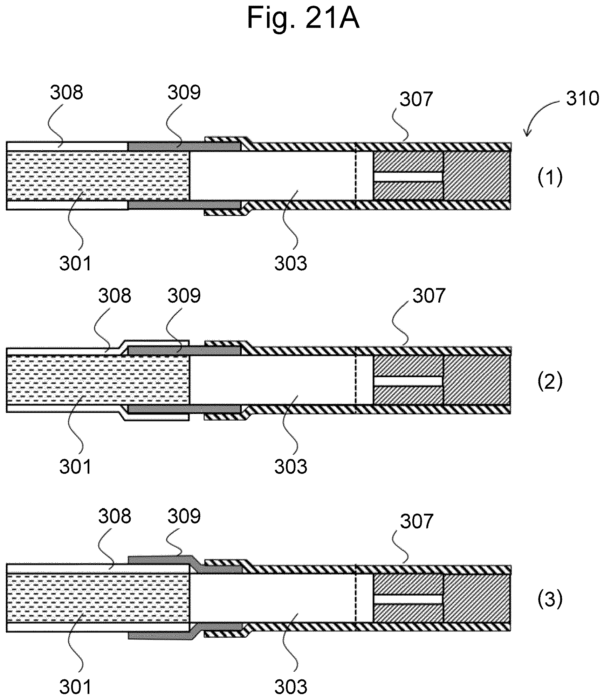

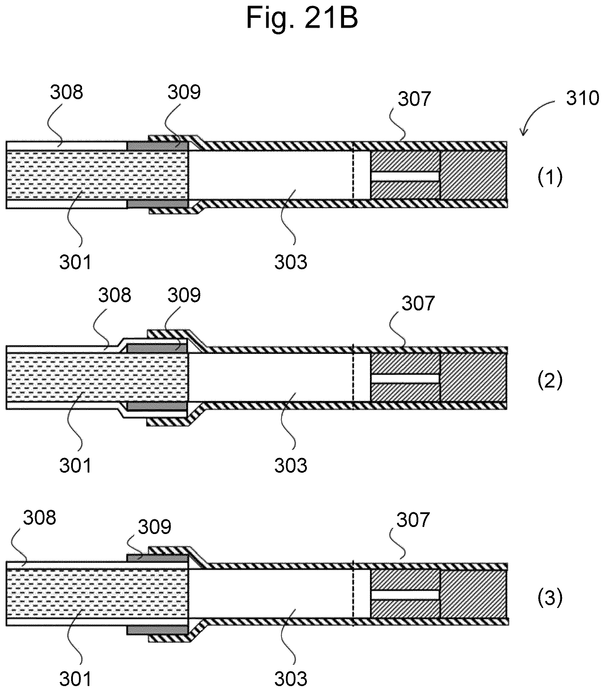

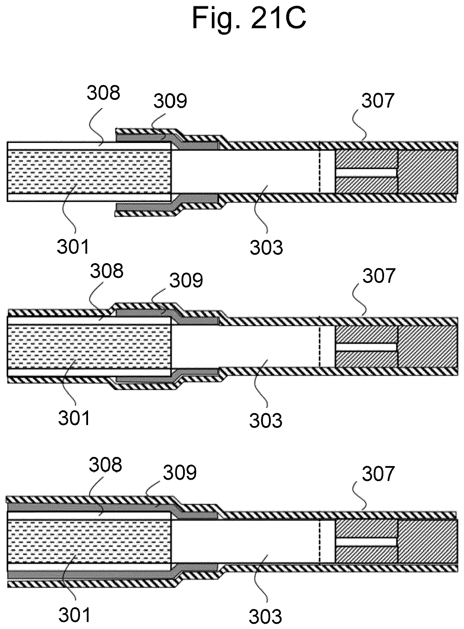

As illustrated in Fig. 19(1), the high heat transfer portion of the roll wrapping material 309 rolls to wrap a region near the downstream end of the tobacco-containing segment 301. For the sake of easy description, it is assumed that the downstream end of the tobacco-containing segment 301 is origin 0, the upstream end of the tobacco-containing segment 301 is X, and the downstream end of the adjacent member 303 is -Y. A region near the downstream end of the tobacco-containing segment 301 is preferably a region with a start point set to the origin 0 and an end point set to 0.05X to 0.5X and is more preferably a region with a start point set to the origin 0 and an end point set to 0.05X to 0.2X. From the viewpoint of providing a further remarkable advantageous effect of the present embodiment, the high heat transfer portion preferably wraps a joint between the tobacco-containing segment 301 and the adjacent member 303, that is, a region near the upstream end of the adjacent member 303. A region near the upstream end of the adjacent member 303 is preferably a region with a start point set to the origin 0 and an end point set to -0.01Y to -0.5Y and is more preferably a region with an end point set to -0.01Y to -0.15Y. Furthermore, from the viewpoint of enhancing heat conductivity, the high heat transfer portion may wrap up to a most upstream end of the tobacco-containing segment 301. As illustrated in Fig. 19(2), the roll wrapping material 309 and the tipping paper 307 may be joined with each other at end surfaces to be integrated as a tipping paper. Furthermore, as illustrated in Fig. 19(3), the tipping paper 307 may be disposed outside the roll wrapping material 309. As described above, the roll wrapping material 309 may be made up of only the high heat transfer portion or may include another material. For the sake of simplification of description, Fig. 19 and Fig. 21 illustrate modes in which the roll wrapping material 309 is made up of only the high heat transfer portion.

Fig. 21A illustrates specific modes in which the roll wrapping material 309 extends from the tobacco-containing segment 301 to the adjacent member 303. In these modes, the tipping paper 307 does not roll to wrap the tobacco-containing segment 301. In the drawing, 308 indicates a second wrapping paper that is preferably made of paper. Fig. 21A(1) illustrates a mode in which the roll wrapping material 309 and the second wrapping paper 308 are joined to be integrated and roll to wrap from the distal end of the tobacco-containing segment 301 to the upstream end of the adjacent member 303. Fig. 21A(2) illustrates a mode in which the roll wrapping material 309 rolls to wrap from the downstream end of the tobacco-containing segment 301 to the upstream end of the adjacent member 303, the second wrapping paper 308 rolls to wrap the tobacco-containing segment 301, and part of the second wrapping paper 308 is present on the outer peripheral part of the roll wrapping material 309. Fig. 21A(3) illustrates a mode in which the second wrapping paper 308 rolls to wrap the tobacco-containing segment 301 and the roll wrapping material 309 rolls to wrap from a region on the second wrapping paper 308 to the downstream end of the tobacco-containing segment 301 and extends to the upstream end of the adjacent member 303.

Fig. 21B illustrates specific modes in which the roll wrapping material 309 rolls to wrap the downstream end of the tobacco-containing segment 301. In these modes, the tipping paper 307 rolls to wrap the downstream end of the tobacco-containing segment 301. Fig. 21B(1) illustrates a mode in which the roll wrapping material 309 and the second wrapping paper 308 are joined to be integrated and roll to wrap the tobacco-containing segment 301. Fig. 21B(2) illustrates a mode in which the roll wrapping material 309 rolls to wrap the downstream end of the tobacco-containing segment 301 and the second wrapping paper 308 rolls to wrap the tobacco-containing segment 301 from a region on the roll wrapping material 309. Fig. 21B(3) illustrates a mode in which the second wrapping paper 308 rolls to wrap the tobacco-containing segment 301 and the roll wrapping material 309 rolls to wrap the downstream end of the tobacco-containing segment 301 on the second wrapping paper.

Fig. 21 illustrates specific modes in which the roll wrapping material 309 is covered with the tipping paper 307. In these modes, the roll wrapping material 309 is laminated with part of the inner periphery of the tipping paper 307. Fig. 21C(1) illustrates a mode in which the roll wrapping material 309 rolls to wrap the downstream end of the tobacco-containing segment 301, rolled to be wrapped with the second wrapping paper 308, and the upstream end of the adjacent member 303. The upstream end of the tipping paper 307 is placed at the same position as the upstream end of the roll wrapping material 309. Fig. 21C(2) illustrates a mode in which, in Fig. 21C(1), the upstream end of the tipping paper 307 extends to the upstream end of the tobacco-containing segment 301. Fig. 21C(3) illustrates a mode in which, in Fig. 21C(1), the tipping paper 307 and the roll wrapping material 309 extend to the upstream end of the tobacco-containing segment 301.

The high heat transfer portion of the roll wrapping material 309 is preferably present at a portion heated by the heater of the tobacco-containing segment 301. In one mode, the axial length of the high heat transfer portion ranges from about 3 mm to about 10 mm.

(4) Mouthpiece

The mouthpiece is a member that makes up an inhalation port end. In one mode, the mouthpiece 305 includes a filter 352 and a center hole filter 354. A known one may be used as the filter 352 and the center hole filter 354.

2. Heat-Not-Burn Flavor Inhaling System

A combination of a heat-not-burn flavor inhaler and a heating unit is also referred to as heat-not-burn flavor inhaling system. Fig. 20 illustrates one mode of the system. In the drawing, 300 indicates a heat-not-burn flavor inhaling system, 310 indicates a heat-not-burn flavor inhaler, and 330 indicates a heating unit including a heater. The heating unit includes a heater, a housing, a power supply, and the like.

The heater preferably electrically heats the tobacco-containing segment 301. The shape of the heater is not limited, and the heater is disposed on the outer periphery of the tobacco-containing segment 301. The heater may be, for example, a sheet heater, a planar heater, a tubular heater, or a needle heater. A sheet heater is a flexible sheet-shaped heater. Examples of the sheet heater include a heater that includes a film (of which the thickness ranges from about 20 $\mu$m to about 225 $\mu$m) made of heat-resistant polymer, such as polyimide. A planar heater is a rigid planar heater (of which the thickness ranges from about 200 $\mu$m to about 500 $\mu$m). Examples of the planar heater include a heater in which a resistance circuit is provided on a flat substrate and this part is regarded as a heat generating part. A tubular heater is a hollow or solid tubular heater. Examples of the tubular heater include a heater that has a resistance circuit on the outer periphery and this part is regarded as a heat generating part. The sectional shape of the tubular heater may be a circular shape, an elliptical shape, a polygonal shape, a rounded-corner polygonal shape, or the like.

Examples

Hereinafter, specific examples of the present embodiment will be described; however, the present invention is not limited thereto.

[Example 1]

A tobacco lamina (leaf tobacco) was dry-milled with Hosokawa Micron ACM machine to obtain tobacco powder.

For the tobacco powder, a cumulative 90% particle size (D90) in a particle size distribution on a volume basis, measured by dry laser diffractometry, was measured with Mastersizer (product name, made by Malvern Panalytical division of Spectris Co., Ltd.), and 200 μm was obtained.

A tobacco sheet was manufactured by using the tobacco powder as a tobacco raw material. Specifically, 70 parts by mass of the tobacco raw material, 12 parts by mass of glycerin serving as an aerosol generator, four parts by mass of powder carboxymethyl cellulose serving as a first forming agent, one parts by mass of carboxymethyl cellulose swollen with water, serving as a second forming agent, five parts by mass of fiber pulp serving as a reinforcing agent, and eight parts by mass of cocoa powder serving as a flavoring agent were mixed and kneaded with an extruder. The kneaded product was molded into a sheet with two pairs of metal rolls to obtain a rolled molding product. A noodle making rotary roll blade was pressed against the rolled molding product to cut the rolled molding product into strips while imparting a corrugated shape. Furthermore, the rolled molding product was cut so as to have a length of 20 mm and dried to obtain tobacco sheets with a length of 20 mm and a width of 0.8 mm. The cross section of each tobacco sheet in the thickness direction had a sectional shape as illustrated in Fig. 1.

For the obtained tobacco sheets, a bulkiness was measured. Specifically, the tobacco sheets were left standing for 48 hours in a conditioned room at 22°C and 60%, and then the bulkiness was measured with DD-60A (product name, made by Borgward company). Measurement was performed by putting 15 g of the tobacco sheets in a cylindrical casing with an inside diameter of 60 mm, and obtaining a volume when compressed for 30 seconds with a load of 3 kg. The results are shown in Table 4. In Table 4, a bulkiness was represented by the rate of increase (%) in bulkiness with respect to a reference value set to the value of bulkiness of Comparative Example 1 (described later).

[Comparative Example 1]

A rolled molding product was manufactured with a method similar to that of Example 1. After that, the rolled molding product was cut into strips with a plurality of ring-shaped rotary blades. Furthermore, the rolled molding product was cut to have a length of 20 mm to obtain tobacco sheets with a length of 20 mm and a width of 0.8 mm without a corrugated shape. For the obtained tobacco sheets, a bulkiness was measured as in the case of Example 1. The results are shown in Table 4.

[Table 4]

|  | RATE OF INCREASE IN BULKINESS (%) |
|---|---|
| EXAMPLE 1 | 54 |
| COMPARATIVE EXAMPLE 1 | - |

From Table 4, with the tobacco sheets of Example 1 that are the tobacco sheets according to the present embodiment, the bulkiness improved as compared to the tobacco sheets of Comparative Example 1 without a corrugated shape.

<Manufacturing of Heat-Not-Burn Flavor Inhaler>

[Reference Example 1b]

A tobacco filler was prepared by mixing shreds of sheet tobacco with 15 g/100 g of glycerin and 4 g/100 g of propylene glycol. The tobacco filler was rolled with a wrapping paper (basis weight: 35 g/m$^2$, thickness: 52 μm, made by Nippon Paper Papylia Co., Ltd.)) with a high-speed wrapping machine.

The weight of shreds per one stick was set to 0.8 g, the roll circumference was set to 22 mm, and the roll length was set to 68 mm.

Rolled tobacco-containing segments were put 200 by 200 for each level in a plastic hermetically sealed casing and stored.

The stored tobacco-containing segments were cut so as to have a length of 20 mm. After that, the tobacco-containing segment, a paper core with a length of 20 mm, a center hole having a through-hole (diameter: 4.5 mm) with a length of 12 mm, and a filter element (density: 0.122 g/cm$^3$, and compression rate of change P (hereinafter, referred to as "hardness"): 88%) made up of cellulose acetate fibers (single fiber denier (g/9000 m): 12, and total fiber denier (g/9000 m): 28000) with a length of 8 mm and a Y-shape in circumferential cross section were wrapped with the tipping paper prepared above. Thus, a heat-not-burn flavor inhaler without perforations was manufactured, and then 17 holes were perforated at a location 5.5 mm in a paper core-side direction from a boundary between the paper core and a center hole filter (25.5 mm from an inhalation port end of the heat-not-burn flavor inhaler) concentrically in a circumferential direction of the paper core so as to extend through both the tipping paper and the paper core to manufacture the heat-not-burn flavor inhaler of Reference Example 1b. The air-flow resistance in the long-axis direction of the filter segment of the heat-not-burn flavor inhaler was 1.35 mmH$_2$O/mm.

The compression rate of change P (hardness) of the filter element, expressed by the above-described expression (1), was measured with SODIM-H Hardness module made by Sodim SAS company, or the like. This also applies to the following all Reference Examples and Comparative Examples.

[Comparative Example 1b]

Except that the filter element (density: 0.122 g/cm$^3$) with a single fiber denier (g/9000 m) of 12 and a total fiber denier (g/9000 m) of 28000 was replaced with a filter element (density: 0.143 g/cm$^3$, hardness: 87%) with a single fiber denier (g/9000 m) of 5.9 and a total fiber denier (g/9000 m) of 35000, a heat-not-burn flavor inhaler of Comparative Example 1b was manufactured with a method similar to that of the heat-not-burn flavor inhaler of Reference Example 1b. The air-flow resistance in the long-axis direction of the filter segment of the heat-not-burn flavor inhaler was 2.62 mmH$_2$O/mm.

[Reference Example 2b]

Except that a flavoring agent capsule (a spherical shape with a diameter of 3.5 mm, and flavoring agent capsules in the other Reference Examples and Comparative Examples were the same) containing menthol was disposed in a filter element, the length of the center hole was changed from 12 mm to 8 mm, and the length of the filter element was changed from 8 mm to 12 mm, a heat-not-burn flavor inhaler of Reference Example 2b was manufactured with a method similar to that of the heat-not-burn flavor inhaler of Reference Example 1b. The density (density in a state excluding the flavoring agent capsule), hardness, and air-flow resistance in the long-axis direction of the filter segment of the heat-not-burn flavor inhaler were respectively 0.122 g/cm$^3$, 88%, and 1.93 mmH$_2$O/mm. The parameters associated with the filter segment were evaluated without breaking the flavoring agent capsule. This also applies to the other Reference Examples and Comparative Examples using the flavoring agent capsule.

[Reference Example 3b]

Except that the filter element (density: 0.122 g/cm$^3$) with a single fiber denier (g/9000 m) of 12 and a total fiber denier (g/9000 m) of 28000 was replaced with a filter element (density: 0.119 g/cm$^3$, hardness: 89%) with a single fiber denier (g/9000 m) of 8 and a total fiber denier (g/9000 m) of 28000, a heat-not-burn flavor inhaler of Reference Example 3b was manufactured with a method similar to that of the heat-not-burn flavor inhaler of Reference Example 1b. The air-flow resistance in the long-axis direction of the filter segment of the heat-not-burn flavor inhaler was 1.69 mmH$_2$O/mm.

[Reference Example 4b]

Except that a flavoring agent capsule containing menthol was disposed in a filter element, the length of the center hole was changed from 12 mm to 8 mm, the length of the filter element was changed from 8 mm to 12 mm, and the filter element (density: 0.122 g/cm$^3$, hardness: 88%) with a single fiber denier (g/9000 m) of 12 and a total fiber denier (g/9000 m) of 28000 was replaced with a filter element (density: 0.123 g/cm$^3$, hardness: 91%) with a single fiber denier (g/9000 m) of 8 and a total fiber denier (g/9000 m) of 28000, a heat-not-burn flavor inhaler of Reference Example 4b was manufactured with a method similar to that of the heat-not-burn flavor inhaler of Reference Example 1b. The air-flow resistance in the long-axis direction of the filter segment of the heat-not-burn flavor inhaler was 2.76 mmH$_2$O/mm.

[Reference Example 5b]

Except that the length of the center hole was changed from 12 mm to 6 mm, and the length of the filter element was changed from 8 mm to 14 mm, a heat-not-burn flavor inhaler of Reference Example 5b was manufactured with a method similar to that of the heat-not-burn flavor inhaler of Reference Example 1b. The density, hardness, and air-flow resistance in the long-axis direction of the filter segment of the heat-not-burn flavor inhaler were respectively 0.129 g/cm$^3$, 90%, and 1.58 mmH$_2$O/mm.

[Reference Example 6b]

Except that the length of the center hole was changed from 12 mm to 6 mm, the length of the filter element was changed from 8 mm to 14 mm, and the filter element (density: 0.122 g/cm$^3$, hardness: 88%) with a single fiber denier (g/9000 m) of 12 and a total fiber denier (g/9000 m) of 28000 was replaced with a filter element (density: 0.119 g/cm$^3$, hardness: 89%) with a single fiber denier (g/9000 m) of 8 and a total fiber denier (g/9000 m) of 28000, a heat-not-burn flavor inhaler of Reference Example 6b was manufactured with a method similar to that of the heat-not-burn flavor inhaler of Reference Example 1b. The air-flow resistance in the long-axis direction of the filter segment of the heat-not-burn flavor inhaler was 1.69 mmH$_2$O/mm.

[Reference Example 7b]

Except that a flavoring agent capsule containing menthol was disposed in a filter element, 6 mg/12 mm of menthol was added to the filter element, the length of the center hole was changed from 12 mm to 8 mm, and the length of the filter element was changed from 8 mm to 12 mm, a heat-not-burn flavor inhaler of Reference Example 7b was manufactured with a method similar to that of the heat-not-burn flavor inhaler of Reference Example 1b. The density (density in a state excluding the flavoring agent capsule), hardness, and air-flow resistance in the long-axis direction of the filter segment of the heat-not-burn flavor inhaler were respectively 0.122 g/cm$^3$, 91%, and 2.48 mmH$_2$O/mm.

[Comparative Example 2b]

Except that a flavoring agent capsule containing menthol was disposed in a filter element, 6 mg/12 mm of menthol was added to the filter element, the length of the center hole was changed from 12 mm to 8 mm, the length of the filter element was changed from 8 mm to 12 mm, and the filter element (density: 0.122 g/cm$^3$, hardness: 88%) with a single fiber denier (g/9000 m) of 12 and a total fiber denier (g/9000 m) of 28000 was replaced with a filter element (density (density of a state excluding the flavoring agent capsule): 0.152 g/cm$^3$, hardness: 94%) with a single fiber denier (g/9000 m) of 5.9 and a total fiber denier (g/9000 m) of 35000, a heat-not-burn flavor inhaler of Comparative Example 2b was manufactured with a method similar to that of the heat-not-burn flavor inhaler of Reference Example 1b. The air-flow resistance in the long-axis direction of the filter segment of the heat-not-burn flavor inhaler was 6.23 mmH$_2$O/mm.

[Comparative Example 3b]

Except that the filter element (density: 0.122 g/cm$^3$) with a single fiber denier (g/9000 m) of 12 and a total fiber denier (g/9000 m) of 28000 was replaced with a filter element (density: 0.113 g/cm$^3$, hardness: 85%) with a single fiber denier (g/9000 m) of 20 and a total fiber denier (g/9000 m) of 25000, a heat-not-burn flavor inhaler of Comparative Example 3b was manufactured with a method similar to that of the heat-not-burn flavor inhaler of Reference Example 1b. The air-flow resistance in the long-axis direction of the filter segment of the heat-not-burn flavor inhaler was 0.80 mmH$_2$O/mm. The heat-not-burn flavor inhaler of Comparative Example 3b did not have a sufficient hardness, so evaluation of the delivery amount (described later) was not performed.
Table 5 summarizes the manufacturing conditions and properties of the heat-not-burn flavor inhalers of the above-described Reference Examples and Comparative Examples.

[Table 5]

| | | REFER-ENCE EX-AMPLE 1b | COMPARA-TIVE EXAM-PLE 1b | REFER-ENCE EX-AMPLE 2b | REFER-ENCE EX-AMPLE 3b | REFER-ENCE EX-AMPLE 4b | REFER-ENCE EX-AMPLE 5b | REFER-ENCE EX-AMPLE 6b | REFER-ENCE EX-AMPLE 7b | COMPARA-TIVE EXAM-PLE 2b | COMPARA-TIVE EXAM-PLE 3b |
|---|---|---|---|---|---|---|---|---|---|---|---|
| GLYCERIN | (g/100g) | 15 | 15 | 15 | 15 | 15 | 15 | 15 | 15 | 15 | 15 |
| PROPYLENE GLYCOL | (g/100g) | 4 | 4 | 4 | 4 | 4 | 4 | 4 | 4 | 4 | 4 |
| ROLLING PAPER | BASIS WEIGHT (g/m²) | 35 | 35 | 35 | 35 | 35 | 35 | 35 | 35 | 35 | 35 |
| | THICK-NESS (μm) | 52 | 52 | 52 | 52 | 52 | 52 | 52 | 52 | 52 | 52 |
| SHREDS WEIGHT | (g) | 0.8 | 0.8 | 0.8 | 0.8 | 0.8 | 0.8 | 0.8 | 0.8 | 0.8 | 0.8 |
| ROLLED CIRCUMFERENCE | (mm) | 22 | 22 | 22 | 22 | 22 | 22 | 22 | 22 | 22 | 22 |
| ROLLED LENGTH | (mm) | 68 | 68 | 68 | 68 | 68 | 68 | 68 | 68 | 68 | 68 |
| LENGTH OF FLAVOR GEN-ERATING SEG-MENT | (mm) | 20 | 20 | 20 | 20 | 20 | 20 | 20 | 20 | 20 | 20 |
| LENGTH OF PAPER CORE | (mm) | 20 | 20 | 20 | 20 | 20 | 20 | 20 | 20 | 20 | 20 |
| CENTER HOLE | LENGTH (mm) | 12 | 12 | 8 | 12 | 8 | 6 | 6 | 8 | 8 | 12 |
| | INSIDE DIAMETER (mm) | 4.5 | 4.5 | 4.5 | 4.5 | 4.5 | 4.5 | 4.5 | 4.5 | 4.5 | 4.5 |

(continued)

| | | REFERENCE EXAMPLE 1b | COMPARATIVE EXAMPLE 1b | REFERENCE EXAMPLE 2b | REFERENCE EXAMPLE 3b | REFERENCE EXAMPLE 4b | REFERENCE EXAMPLE 5b | REFERENCE EXAMPLE 6b | REFERENCE EXAMPLE 7b | COMPARATIVE EXAMPLE 2b | COMPARATIVE EXAMPLE 3b |
|---|---|---|---|---|---|---|---|---|---|---|---|
| FILTER ELEMENT | LENGTH (mm) | 8 | 8 | 12 | 8 | 12 | 14 | 14 | 12 | 12 | 8 |
| | SINGLE FIBER DENIER (-) | 12 | 5.9 | 12 | 8 | 8 | 12 | 8 | 12 | 5.9 | 20 |
| | TOTAL FIBER DENIER (-) | 28000 | 35000 | 28000 | 28000 | 28000 | 28000 | 28000 | 28000 | 35000 | 25000 |
| | DENSITY (g/cm$^3$) | 0.122 | 0.143 | 0.122 | 0.119 | 0.123 | 0.129 | 0.119 | 0.122 | 0.152 | 0.113 |
| | AIR-FLOW RESISTANCE (mmH$_2$O/m·m) | 1.35 | 2.62 | 1.93 | 1.69 | 2.76 | 1.58 | 1.69 | 2.48 | 6.23 | 0.80 |
| | MENTHOL ADDED | NOT ADDED | NOT ADDED | NOT ADDED | NOT ADDED | NOT ADDED | NOT ADDED | NOT ADDED | ADDED | ADDED | NOT ADDED |
| | CAPSULE ADDED | NOT ADDED | NOT ADDED | ADDED | NOT ADDED | ADDED | NOT ADDED | NOT ADDED | ADDED | ADDED | NOT ADDED |
| COMPRESSION RATE OF CHANGE P | (%) | 88 | 87 | 88 | 89 | 91 | 90 | 89 | 91 | 94 | 85 |

<Evaluation of Delivery Amount>

The heat-not-burn flavor inhalers manufactured in Reference Examples 1b to 7b and Comparative Examples 1b to 3b were subjected to a smoking test, and the delivery amount of components generated by heating was evaluated.

The smoking test was conducted under the following conditions with reference to Canadian Intense Smoking (CIR).

A heating device for circumferential heating was used, the heat-not-burn flavor inhaler was inserted, and then a heater temperature was increased to 295°C within 21 seconds, decreased to 260°C within five seconds, and kept 260°C until the end of evaluation (for about 330 seconds). After that, in the smoking test, automatic smoking was performed with a single-barreling automatic smoking machine manufactured by Borgwaldt under the conditions of a flow rate of 55 cc/2 s and a smoking interval of 30 seconds. At this time, the perforations provided in the cooling segment were located 25.5 mm distant from the inhalation port end-side end of a region where the heat-not-burn flavor inhaler and the heating device were in contact with each other. Mainstream smoke generated in the smoking test was trapped in a Cambridge pad. A puff action was performed 12 times for Reference Examples 1b to 6b and Comparative Example 1b, a puff action was performed 10 times for Reference Examples 7b, 8b and Comparative Examples 2b, 3b, and then the Cambridge pad was taken out, components were extracted with 10 ml ethanol, and the amounts of components in the mainstream smoke collected in each puff action were measured with GC-MS.

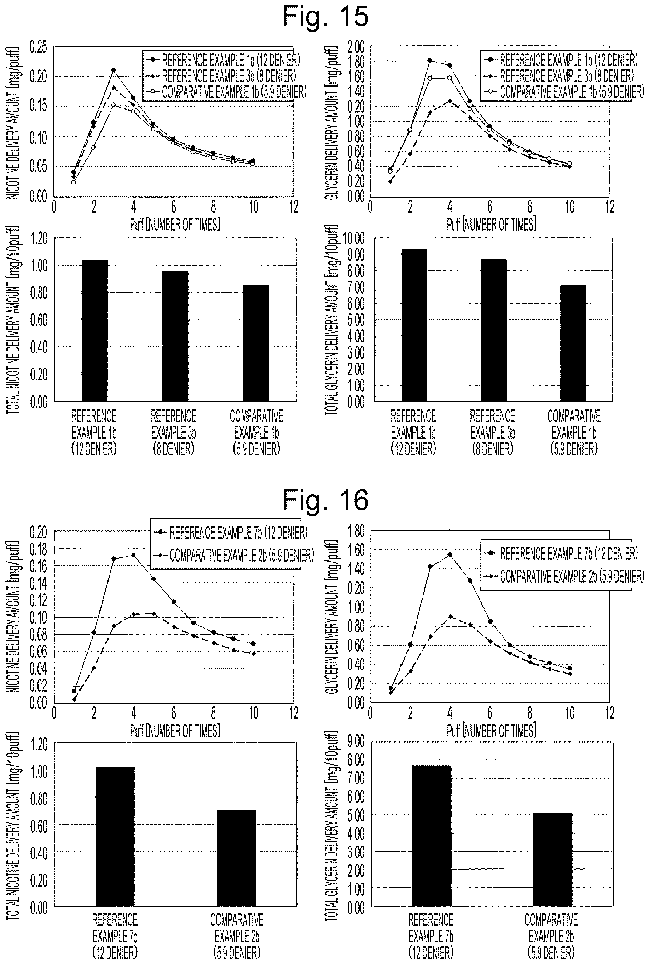

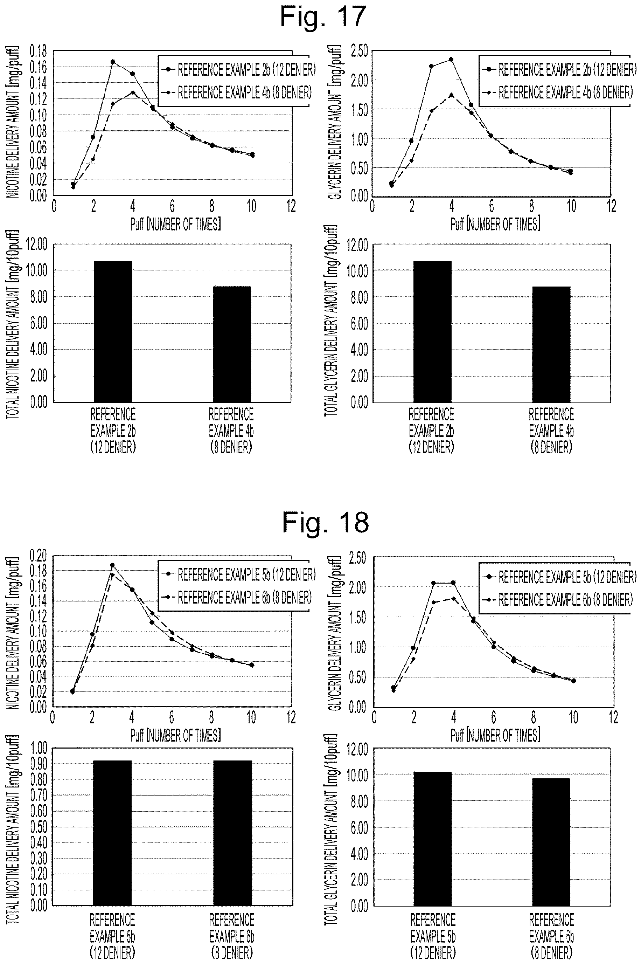

In the heat-not-burn flavor inhalers of Reference Examples 1b to 9b and Comparative Example 1b, the amounts of components of nicotine and glycerin were shown in Tables 6 and 7 and Figs. 15 to 18 as indices of the amounts of components in mainstream smoke, obtained from the measurement. Specifically, Fig. 15 shows the results of Reference Examples 1b and 3b and Comparative Example 1b (study on the influence of fiber denier under the conditions of absence of capsule, absence of menthol and (Length of the center hole):(Length of the filter segment) = 12:8). Fig. 16 shows the results of Reference Example 7b and Comparative Example 2b (study on the influence of fiber denier under the conditions of presence of capsule, presence of menthol, and (Length of the center hole):(Length of the filter segment) = 8:12). Fig. 17 shows the results of Reference Examples 2b and 4b (study on the influence of fiber denier under the conditions of presence of capsule, absence of menthol and (Length of the center hole):(Length of the filter segment) = 12:8). Fig. 18 shows the results of Reference Examples 5b and 6b (study on the influence of single fiber denier under the conditions of absence of capsule, absence of menthol and (Length of the center hole):(Length of the filter segment) = 6:14). Reference Examples and Comparative Examples to which the capsule was added were subjected to the above evaluation after the flavoring agent capsule was broken.

[Table 6]

| NICOTINE (mg) | PUFF (NUMBER OF TIMES) | | | | | | | | | | |
|---|---|---|---|---|---|---|---|---|---|---|---|
| | 1 | 2 | 3 | 4 | 5 | 6 | 7 | 8 | 9 | 10 | Total |
| REFERENCE EXAMPLE 1b | 0.041 | 0.123 | 0.210 | 0.165 | 0.121 | 0.096 | 0.081 | 0.073 | 0.065 | 0.060 | 1.035 |
| COMPARATIVE EXAMPLE 1b | 0.024 | 0.082 | 0.152 | 0.141 | 0.112 | 0.089 | 0.074 | 0.065 | 0.059 | 0.055 | 0.852 |
| REFERENCE EXAMPLE 2b | 0.014 | 0.072 | 0.166 | 0.151 | 0.109 | 0.084 | 0.070 | 0.062 | 0.056 | 0.051 | 0.836 |
| REFERENCE EXAMPLE 3b | 0.034 | 0.117 | 0.182 | 0.153 | 0.114 | 0.092 | 0.078 | 0.068 | 0.062 | 0.057 | 0.957 |
| REFERENCE EXAMPLE 4b | 0.010 | 0.045 | 0.114 | 0.128 | 0.107 | 0.088 | 0.073 | 0.063 | 0.055 | 0.049 | 0.732 |
| REFERENCE EXAMPLE 5b | 0.021 | 0.096 | 0.187 | 0.155 | 0.111 | 0.089 | 0.075 | 0.067 | 0.061 | 0.055 | 0.916 |
| REFERENCE EXAMPLE 6b | 0.019 | 0.081 | 0.175 | 0.155 | 0.124 | 0.098 | 0.080 | 0.069 | 0.061 | 0.054 | 0.917 |
| REFERENCE EXAMPLE 7b | 0.014 | 0.082 | 0.168 | 0.172 | 0.144 | 0.118 | 0.093 | 0.082 | 0.075 | 0.069 | 1.017 |
| COMPARATIVE EXAMPLE 2b | 0.005 | 0.041 | 0.090 | 0.103 | 0.104 | 0.089 | 0.079 | 0.070 | 0.062 | 0.057 | 0.701 |

[Table 7]

| | | PUFF (NUMBER OF TIMES) | | | | | | | | | | |
|---|---|---|---|---|---|---|---|---|---|---|---|---|
| | | 1 | 2 | 3 | 4 | 5 | 6 | 7 | 8 | 9 | 10 | Total |
| GLYCERIN (mg) | REFERENCE EXAMPLE 1b | 0.366 | 0.882 | 1.808 | 1.743 | 1.266 | 0.934 | 0.736 | 0.600 | 0.509 | 0.440 | 9.283 |
| | COMPARATIVE EXAMPLE 1b | 0.209 | 0.569 | 1.120 | 1.275 | 1.055 | 0.809 | 0.634 | 0.533 | 0.462 | 0.403 | 7.070 |
| | REFERENCE EXAMPLE 2b | 0.234 | 0.947 | 2.227 | 2.340 | 1.564 | 1.043 | 0.765 | 0.601 | 0.511 | 0.442 | 10.675 |
| | REFERENCE EXAMPLE 3b | 0.336 | 0.896 | 1.571 | 1.575 | 1.169 | 0.892 | 0.706 | 0.585 | 0.506 | 0.448 | 8.683 |
| | REFERENCE EXAMPLE 4b | 0.194 | 0.621 | 1.469 | 1.736 | 1.434 | 1.033 | 0.788 | 0.613 | 0.492 | 0.402 | 8.782 |
| | REFERENCE EXAMPLE 5b | 0.322 | 0.981 | 2.065 | 2.068 | 1.425 | 1.001 | 0.760 | 0.602 | 0.514 | 0.434 | 10.173 |
| | REFERENCE EXAMPLE 6b | 0.277 | 0.803 | 1.742 | 1.809 | 1.468 | 1.082 | 0.823 | 0.650 | 0.542 | 0.448 | 9.643 |
| | REFERENCE EXAMPLE 7b | 0.148 | 0.604 | 1.422 | 1.546 | 1.275 | 0.846 | 0.598 | 0.479 | 0.413 | 0.356 | 7.687 |
| | COMPARATIVE EXAMPLE 2b | 0.107 | 0.332 | 0.694 | 0.899 | 0.815 | 0.640 | 0.513 | 0.423 | 0.352 | 0.303 | 5.080 |

From Tables 4 and 5 and Figs. 15 to 18, irrespective of whether the flavoring agent capsule was added to the filter element and whether menthol was added, it was found that the heat-not-burn flavor inhalers with a single fiber denier of greater than or equal to eight and less than or equal to 12 were excellent from the viewpoint of the delivery amount even in any one of nicotine and glycerin that are indices of the amount of components of mainstream smoke as compared to the heat-not-burn flavor inhalers with a short fiber denier falling outside the range.

[Reference Example 1c]

The heat-not-burn flavor inhaler as illustrated in Fig. 19 was prepared. The outside diameter was 7 mm, the overall length was 55 mm, and the dimensions of each of the segments were as follows.

Tobacco-containing segment: 20 mm
Cooling segment: 20 mm
Mouthpiece segment: 15 mm

The following roll wrapping material was prepared.

Aluminum foil A1: the axial length of the heat-not-burn flavor inhaler was 15 mm and the thickness was 30 $\mu$m
Aluminum foil A2: the axial length of the heat-not-burn flavor inhaler was 22 mm and the thickness was 30 $\mu$m

Laminated paper AP: a laminated body obtained by laminating a paper having an axial length of the heat-not-burn flavor inhaler 15 mm and a thickness of 50 $\mu$m with an aluminum foil having a thickness of 15 $\mu$m

The heat-not-burn flavor inhaler was rolled to be wrapped by using each of the roll wrapping materials. The location of an upstream end of the roll wrapping material with reference to the upstream end of the heat-not-burn flavor inhaler was shown in Table 8.

Tobacco shred side end of the heat-not-burn flavor inhaler was inserted in the heating device illustrated in Fig. 20. The tobacco-containing segment was heated to 295°C, and, at this time, part of the tobacco-containing segment 301 was heated with the heater. After that, a smoking test was conducted with a smoking machine. Specifically, samples were subjected to automatic smoking with an automatic smoker (LM-1 manufactured by Borgwaldt KC Inc.) under the conditions of a smoking capacity of 27.5 ml/s, a smoking time of two seconds/puff, a smoking frequency of two puffs/minute, and eight puffs.

The samples after smoking were cooled to room temperature and subjected to a breakage test. The overview of the test was illustrated in Fig. 23. In the drawing, P is a plunger, and B is a base. Table 8 summarized a moving distance of the plunger, a maximum load, and a breakage condition.

[Comparative Example 1c]

Except that the roll wrapping material was not rolled, the same heat-not-burn flavor inhaler as that of Reference Example 1c was prepared. For the flavor inhaler before being subjected to the smoking test, a breakage test was conducted with the same method as that of Reference Example 1c. Furthermore, the same heat-not-burn flavor inhaler as that of Reference Example 1c was prepared. The flavor inhaler without being rolled to be wrapped with a roll wrapping material was subjected to the smoking test with the same method as that of Reference Example 1c, and then subjected to the breakage test. The results are shown in Table 8.

[Table 8]

| | | T (mm) | AVERAGE DISTANCE (mm) | AVERAGE LOAD (N) | BREAKAGE CONDITION |
|---|---|---|---|---|---|
| COMPARATIVE EXAMPLE 1c* | NOT HEATED | - | 3.93 | 2.55 | BENT |
| | AFTER HEATED | | 1.36 | 1.61 | BROKEN |

(continued)

| | | T (mm) | AVERAGE DISTANCE (mm) | AVERAGE LOAD (N) | BREAKAGE CONDITION |
|---|---|---|---|---|---|
| REFERENCE EXAMPLE 1c** | AP AFTER HEATED | 10.0 | 2.31 | 4.33 | BROKEN |
| | A1 AFTER HEATED | 10.0 | 4.89 | 5.42 | BROKEN |
| | A2 AFTER HEATED | 0 | 1.84 | 4.76 | BROKEN |
| * NUMBER OF SAMPLES = 3/LEVEL ** NUMBER OF SAMPLES = 2/LEVEL | | | | | |

From the results of Comparative Example 1c, it is clear that the tobacco-containing segment before heating does not break and has resistance against breakage; however, the tobacco-containing segment after heating breaks with a small force. On the other hand, the tobacco-containing segment after heating in Reference Example 1c did not break with a force (1.61N) used to break the tobacco-containing segment after heating in Comparative Example 1c. In other words, the tobacco-containing segment of Reference Example 1c needed a considerably large force for breakage. The average distance is an average moving distance of the plunger until the sample becomes broken and is an index of toughness that the sample bows and is difficult to break. When Reference Example 1c and Comparative Example 1c are compared with each other, Reference Example 1c provides a higher value in both the average distance and the average load. For this reason, in the tobacco-containing segment of Reference Example 1c, it is clear that the effect of suppressing breakage is sufficiently developed.

[Measurement of Amount of Smoke]

A smoking test was conducted with the automatic smoker under the above-described conditions, and the amount of smoke per puff was measured. However, the heating temperature was set to 295°C. Specifically, a light transmittance of smoke discharged from the smoker without intervening a filter was detected with a photosensor, and the amount of smoke was measured. A collecting method in which a smoke component is collected in each puff by a glass fiber filter is used for general smoke amount measurement. However, this method needs a relatively complicated operation, and quick measurement in real time is difficult. Therefore, in the present embodiment, a measurement system using a photosensor was newly constructed and used. To examine the accuracy of the measurement system, a commercial item PloomTech+ (registered trademark) (made by Japan Tobacco Inc.) was used as an aerosol generating source, and the accuracy of the measurement system in a relationship of a voltage value to a certain amount of smoke was examined. As a result, the results of σ0.005V (CV value is lower than 2%) was obtained, so it was confirmed that the system had a sufficient accuracy in data evaluation.

[Correlation between Measured Amount of Smoke and Actual Amount of Smoke]

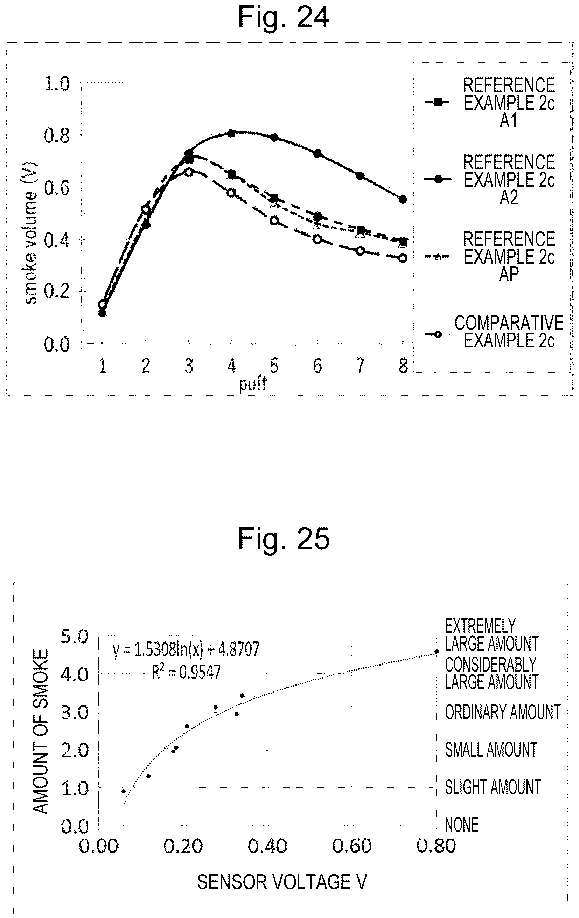

To investigate a relationship between the above-described measured amount of smoke (sensor voltage value) and a sensed amount of smoke, a sensory evaluation on the amount of smoke was performed by panelists. Six panelists sufficiently trained in sensory evaluation on the amount of smoke were determined, a sensory evaluation to a certain amount of smoke was conducted based on the following evaluation criteria by using the commercial item PloomS (registered trademark) (made by Japan Tobacco Inc.) as an aerosol generating source. At the same time, the amount of smoke was measured with the above-described system, and the correlation was examined. Specifically, examination was conducted in accordance with Weber-Fechner law that there is a logarithmic correlation between sensation and stimulus. The results are shown in Fig. 25.

<Evaluation Criteria>

0: No smoke is coming out
1: A slight amount of smoke is coming out
2: A small amount of smoke is coming out
3: Smoke is coming out
4: A considerable amount of smoke is coming out
5: An extremely large amount of smoke is coming out

From the results, it was found that there was a highly accurate correlation ($R^2 > 0.95$) between a sensor voltage value and a sensed amount of smoke as an evaluation on a certain amount of smoke. Thus, it was found that a sensor voltage value provided by the above-described measurement system was able to be an accurate alternative for sensory evaluation.

[Reference Example 2c]

A heat-not-burn flavor inhaler including the same roll wrapping material as that of Reference Example 1c was prepared. For each flavor inhaler, the amount of smoke was measured as described above. A voltage value from the photosensor reflected the concentration of smoke and was able to be recorded in real time with a data logger. A difference between a maximum value of a voltage value in one puff and a base line was regarded as the amount of smoke. The results are shown in Fig. 24. A difference in voltage value 0.05 V is a level under which the panelists can appropriately recognize a difference in the amount of smoke. To statistically examine variations in data, a standard deviation was calculated for values per puff of each of Comparative Examples and Reference Examples, and the average value of the standard deviations was obtained. As a result, the average value was 0.04 V, and it was found that there was a difference particularly in the third puff and the following puffs in each Reference Example with respect to the Comparative Example.

[Comparative Example 2c]

Except that the roll wrapping material was not rolled, the same heat-not-burn flavor inhaler as that of Reference Example 1c was prepared. A smoking test was conducted with the same method as that of Reference Example 2c, and the amount of smoke in each puff was obtained. The results are shown in Fig. 24.
As shown in the graph, heat from the heater was sufficiently transferred to the tobacco-containing segment in the Reference Example, so the effect of increasing a total amount of smoke was recognized. Among others, the tobacco-containing segment using the roll wrapping material of A2 provided a remarkable increase in the amount of smoke and also a small attenuation. In other words, the tobacco-containing segment achieved an increase in the total amount of smoke. This is presumably because the roll wrapping material of A2 can sufficiently give the amount of heat supplied to shreds and shreds located in a place distant from the heater can also be effectively heated.

REFERENCE SIGNS LIST

1     tobacco sheet
2     corrugation
3     sawtooth shape
4     heat-not-burn flavor inhaler
5     tobacco-containing segment
6     cooling segment

7　　center hole segment
8　　filter segment
9　　mouthpiece segment
10　 cylindrical member
11　 perforation
12　 second filling layer
13　 second inner plug wrapper
14　 outer plug wrapper
15　 mouthpiece lining paper
16　 heating device
17　 body
18　 heater
19　 metal tube
20　 battery unit
21　 control unit
22　 recess

**Claims**

1.  A tobacco sheet for a heat-not-burn flavor inhaler, the tobacco sheet comprising a tobacco raw material, the tobacco sheet having a corrugated shape in a cross section taken in a thickness direction of the tobacco sheet.

2.  The tobacco sheet for a heat-not-burn flavor inhaler according to claim 1, further comprising an aerosol generator.

3.  The tobacco sheet for a heat-not-burn flavor inhaler according to claim 2, wherein the aerosol generator is at least one selected from the group consisting of glycerin, propylene glycol, and 1,3-butanediol.

4.  The tobacco sheet for a heat-not-burn flavor inhaler according to claim 2 or 3, wherein a percentage of the aerosol generator contained in 100mass% of the tobacco sheet ranges from 4mass% to 50mass%.

5.  The tobacco sheet for a heat-not-burn flavor inhaler according to any one of claims 1 to 4, further comprising a first forming agent and a second forming agent.

6.  The tobacco sheet for a heat-not-burn flavor inhaler according to claim 5, wherein the first forming agent is at least one selected from the group consisting of polysaccharide, protein, and synthetic polymer.

7.  The tobacco sheet for a heat-not-burn flavor inhaler according to claim 5 or 6, wherein the second forming agent is at least one selected from the group consisting of polysaccharide, protein, and synthetic polymer, different from the first forming agent.

8.  The tobacco sheet for a heat-not-burn flavor inhaler according to any one of claims 5 to 7, wherein a percentage of the first forming agent contained in 100mass% of the tobacco sheet ranges from 0.1mass% to 15mass%.

9.  The tobacco sheet for a heat-not-burn flavor inhaler according to any one of claims 5 to 8, wherein a percentage of the second forming agent contained in 100mass% of the tobacco sheet ranges from 0.1mass% to 15mass%.

10. A heat-not-burn flavor inhaler comprising a tobacco-containing segment including the tobacco sheet for a heat-not-burn flavor inhaler according to any one of claims 1 to 9.

11. The heat-not-burn flavor inhaler according to claim 10, further comprising

    a mouthpiece segment, wherein
    the tobacco-containing segment includes a first segment including an aerosol generator and a second segment including the tobacco sheet for a heat-not-burn flavor inhaler, and
    the mouthpiece segment includes a cooling segment and a filter segment.

12. The heat-not-burn flavor inhaler according to claim 11, wherein the first segment includes a cylindrical wrapper and a nonwoven fabric made up of plant fibers and filling an inside of the wrapper, and the nonwoven fabric contains the aerosol generator.

13. The heat-not-burn flavor inhaler according to claim 10, wherein

the heat-not-burn flavor inhaler has a rod shape, and the heat-not-burn flavor inhaler further comprises a mouthpiece segment,
the mouthpiece segment includes a filter segment having a filter element, and
the filter element is made of fibers of which a circumferential cross section has a Y-shape and a single fiber denier is greater than or equal to eight and less than or equal to 12.

14. The heat-not-burn flavor inhaler according to claim 13, wherein a density of the filter element is greater than or equal to 0.09 g/cm$^3$ and less than or equal to 0.14 g/cm$^3$.

15. The heat-not-burn flavor inhaler according to claim 10, further comprising:

an adjacent member adjacent to the tobacco-containing segment; and
a roll wrapping material that rolls to wrap the tobacco-containing segment or a roll wrapping material that rolls to wrap the tobacco-containing segment and the adjacent member, wherein
the roll wrapping material has a high heat transfer portion having a higher heat conductivity than a wrapped member with which the roll wrapping material contacts, and
the high heat transfer portion rolls to wrap an area near a downstream end of the tobacco-containing segment.

16. The heat-not-burn flavor inhaler according to claim 15, wherein the high heat transfer portion rolls to wrap from an area near the downstream end of the tobacco-containing segment to an area near an upstream end of the adjacent member.

17. A heat-not-burn flavor inhaling system comprising:

the heat-not-burn flavor inhaler according to any one of claims 10 to 16; and
a heating device that heats the tobacco-containing segment.

18. A manufacturing method for the tobacco sheet for a heat-not-burn flavor inhaler according to any one of claims 1 to 9, the manufacturing method comprising:

a step of preparing a mixture including a tobacco raw material, an aerosol generator, a first forming agent, and a second forming agent;
a step of forming a rolled molding product by rolling the mixture; and
a step of cutting the rolled molding product into strips by pressing a rotary roll blade against the rolled molding product and imparting the rolled molding product with a corrugated shape.

# Fig. 1

# Fig. 2

# Fig. 3

# Fig. 4

(a)

(b)

(c)

# Fig. 5

(a)

121

(b)

131

# Fig. 6

125

124

123

122

# Fig. 7

(a)

105
104

(b)

104
105

# Fig. 8

(a)

131  128
132
130  129  127
133
101

(b)

# Fig. 9

(a)

(b)

(c)

# Fig. 10

# Fig. 11

# Fig. 12

## Fig. 13

## Fig. 14

## Fig. 15

## Fig. 16

# Fig. 17

# Fig. 18

## Fig. 19

## Fig. 20

# Fig. 21A

# Fig. 21B

# Fig. 21C

# Fig. 22

# Fig. 23

# Fig. 24

# Fig. 25

## INTERNATIONAL SEARCH REPORT

| International application No. |
|---|
| **PCT/JP2022/018858** |

**A. CLASSIFICATION OF SUBJECT MATTER**

*A24B 15/14*(2006.01)i; *A24B 15/16*(2020.01)i; *A24D 1/20*(2020.01)i; *A24F 40/20*(2020.01)i; *A24F 40/40*(2020.01)i; *A24B 3/14*(2006.01)i

FI: A24B15/14; A24F40/40; A24F40/20; A24B3/14; A24B15/16; A24D1/20

According to International Patent Classification (IPC) or to both national classification and IPC

**B. FIELDS SEARCHED**

Minimum documentation searched (classification system followed by classification symbols)

A24B1/00-15/42; A24D1/00-3/18; A24F40/00-47/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-114206 A (PHILIP MORRIS PRODUCTS SA) 30 July 2020 (2020-07-30) paragraphs [0042], [0043], [0047]-[0049], [0053], [0136] | 1-4, 10 |
| Y | paragraphs [0046], [0136]-[0141], fig. 1 | 5-18 |
| Y | WO 2014/016961 A1 (JAPAN TOBACCO INC.) 30 January 2014 (2014-01-30) paragraphs [0053]-[0064] | 5-18 |
| Y | WO 2021/070330 A1 (JAPAN TOBACCO INC.) 15 April 2021 (2021-04-15) paragraphs [0009], [0027] | 13-18 |
| Y | JP 2016-538842 A (PHILIP MORRIS PRODUCTS SA) 15 December 2016 (2016-12-15) paragraphs [0066], [0071] | 15-18 |
| Y | JP 2018-516075 A (PHILIP MORRIS PRODUCTS SA) 21 June 2018 (2018-06-21) paragraphs [0017]-[0024] | 18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/018858**

| Patent document cited in search report | | | Publication date (day/month/year) | Patent family member(s) | | Publication date (day/month/year) |
|---|---|---|---|---|---|---|
| JP | 2020-114206 | A | 30 July 2020 | US 2022/0030935 A1 paragraphs [0042]-[0053], [0138]-[0143], fig. 1 WO 2020/128048 A1 EP 3897233 A1 CN 113163851 A KR 10-2021-0102906 A | | |
| WO | 2014/016961 | A1 | 30 January 2014 | (Family: none) | | |
| WO | 2021/070330 | A1 | 15 April 2021 | TW 202114547 A | | |
| JP | 2016-538842 | A | 15 December 2016 | US 2016/0309781 A1 paragraphs [0070], [0075] WO 2015/082653 A1 EP 3076809 A1 CN 105744850 A KR 10-2016-0096585 A | | |
| JP | 2018-516075 | A | 21 June 2018 | US 2018/0116274 A1 paragraphs [0017]-[0024] WO 2016/193147 A1 EP 3302106 A1 CN 107635415 A KR 10-2018-0013865 A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60045914 B
- WO 2013067511 A
- JP 2017218699 A